(19) Europäisches Patentamt European Patent Office Office européen des brevets

(11) **EP 3 158 739 B1**

(12) **EUROPEAN PATENT SPECIFICATION**

(45) Date of publication and mention of the grant of the patent:
**23.12.2020 Bulletin 2020/52**

(51) Int Cl.:
**H04N 19/176** *(2014.01)*        **H04N 19/70** *(2014.01)*
**H04N 19/124** *(2014.01)*        **H04N 19/186** *(2014.01)*
**H04N 19/157** *(2014.01)*

(21) Application number: **15741388.1**

(22) Date of filing: **19.06.2015**

(86) International application number:
**PCT/US2015/036769**

(87) International publication number:
**WO 2015/196126 (23.12.2015 Gazette 2015/51)**

(54) **BLOCK ADAPTIVE COLOR-SPACE CONVERSION CODING**

BLOCKADAPTIVE FARBRAUMUMWANDLUNGSCODIERUNG

CODAGE DE BLOC ADAPTATIF AVEC CONVERSION D'ESPACE CHROMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2014   US 201462015347 P**
            **10.10.2014   US 201462062797 P**
            **18.06.2015   US 201514743776**

(43) Date of publication of application:
**26.04.2017   Bulletin 2017/17**

(73) Proprietor: **Qualcomm Incorporated**
**San Diego, CA 92121-1714 (US)**

(72) Inventors:
• **ZHANG, Li**
  **San Diego, California 92121-1714 (US)**
• **CHEN, Jianle**
  **San Diego, California 92121-1714 (US)**
• **SOLE ROJALS, Joel**
  **San Diego, California 92121-1714 (US)**
• **KARCZEWICZ, Marta**
  **San Diego, California 92121-1714 (US)**

(74) Representative: **Howe, Steven**
**Reddie & Grose LLP**
**The White Chapel Building**
**10 Whitechapel High Street**
**London E1 8QS (GB)**

(56) References cited:
**US-A1- 2005 259 730**

• **ZHANG L ET AL: "AhG8: In-loop color-space transform", 17. JCT-VC MEETING; 27-3-2014 - 4-4-2014; VALENCIA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Q0112-v2, 20 March 2014 (2014-03-20), XP030116031,**
• **HENRIQUE S. MALVAR ET AL: "Lifting-based reversible color transformations for image compression", PROCEEDINGS OF SPIE, vol. 7073, 28 August 2008 (2008-08-28), page 707307, XP055201760, ISSN: 0277-786X, DOI: 10.1117/12.797091**
• **LIST P ET AL: "Adaptive deblocking filter", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 614-619, XP011221094, ISSN: 1051-8215, DOI: 10.1109/TCSVT.2003.815175**
• **BUDAGAVI M ET AL: "Delta QP signaling at sub-LCU level", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-D038, 15 January 2011 (2011-01-15), XP030008079, ISSN: 0000-0015**

EP 3 158 739 B1

- ZHANG L ET AL: "SCCE5 Test 3.2.1: In-loop color-space transform", 18. JCT-VC MEETING; 30-6-2014 - 9-7-2014; SAPPORO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-R0147, 20 June 2014 (2014-06-20) , XP030116426,
- BROSS B ET AL: "High Efficiency Video Coding (HEVC) text specification draft 10 (for FDIS & Consent)", 12. JCT-VC MEETING; 103. MPEG MEETING; 14-1-2013 - 23-1-2013; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-L1003, 17 January 2013 (2013-01-17), XP030113948,
- FLYNN D ET AL: "HEVC Range Extensions Draft 6", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P1005, 19 February 2014 (2014-02-19), XP030115877,

## Description

This application claims the benefit of U.S. Provisional Application No. 62/015,347 filed 20 June 2014 U.S. Provisional Application No. 62/062,797 filed 10 October 2014.

## TECHNICAL FIELD

The disclosure relates to video encoding and decoding.

## BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video coding techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard and extensions of such standards presently under development. The video devices may transmit, receive, encode, decode, and/or store digital video information more efficiently by implementing such video coding techniques.

Video coding techniques include spatial (intra-picture) prediction and/or temporal (inter picture) prediction to reduce or remove redundancy inherent in video sequences. For block-based video coding, a video slice (e.g., a video frame or a portion of a video frame) may be partitioned into video blocks, which may also be referred to as treeblocks, coding units (CUs) and/or coding nodes. Video blocks in an intra-coded (I) slice of a picture are encoded using spatial prediction with respect to reference samples in neighboring blocks in the same picture. Video blocks in an inter coded (P or B) slice of a picture may use spatial prediction with respect to reference samples in neighboring blocks in the same picture or temporal prediction with respect to reference samples in other reference pictures. Pictures may be referred to as frames, and reference pictures may be referred to as reference frames.

Spatial or temporal prediction results in a predictive block for a block to be coded. Residual data represents pixel differences between the original block to be coded and the predictive block. An inter coded block is encoded according to a motion vector that points to a block of reference samples forming the predictive block, and the residual data indicating the difference between the coded block and the predictive block. An intra-coded block is encoded according to an intra-coding mode and the residual data. For further compression, the residual data may be transformed from the pixel domain to a transform domain, resulting in residual transform coefficients, which then may be quantized. The quantized transform coefficients, initially arranged in a two-dimensional array, may be scanned in order to produce a one-dimensional vector of transform coefficients, and entropy coding may be applied to achieve even more compression.

A relevant disclosure of such coding technique is: ZHANG L ET AL: "AhG8: In-loop color-space transform", 17. JCT-VC MEETING; 27-3-2014 - 4-4-2014; VALENCIA; (JOINT COLLABORATIVE TEAM ON VIDEO CODING OF ISO/IEC JTC1/SC29/WG11 AND ITU-T SG.16); URL: HTTP://WFTP3.ITU.INT/AV-ARCH/JCTVC-SITE/, no. JCTVC-Q0112-v2, 20 March 2014 (2014-03-20) which discloses an in-loop color-space transform for HEVC Range Extensions and indicates there is a need to compensate for the color-space transform by modifying the quantization parameter applied to coding units when they are coded with the color-space transform.

## SUMMARY

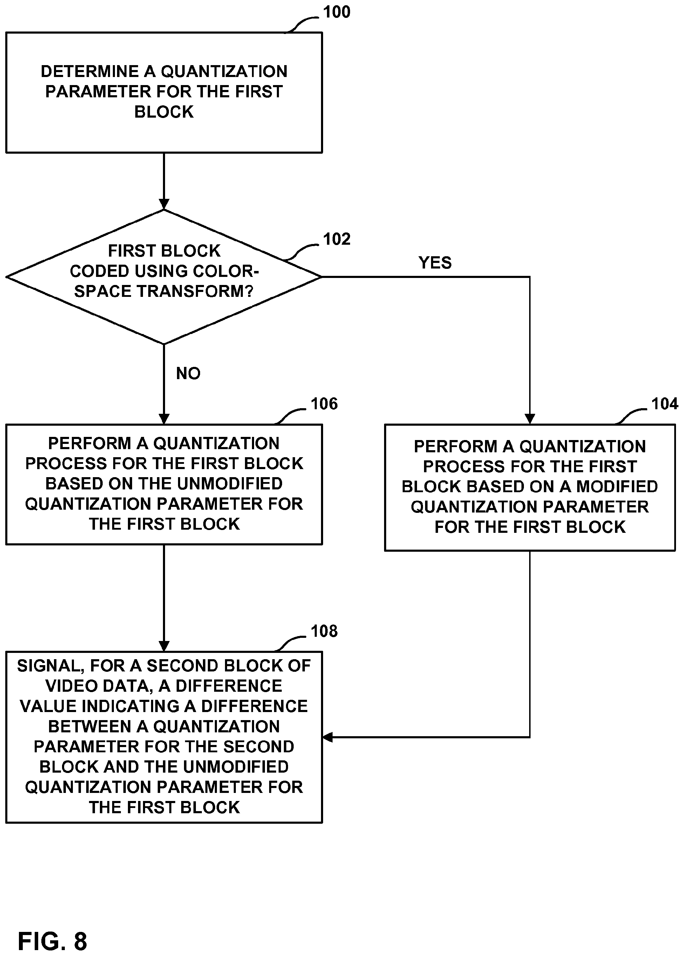

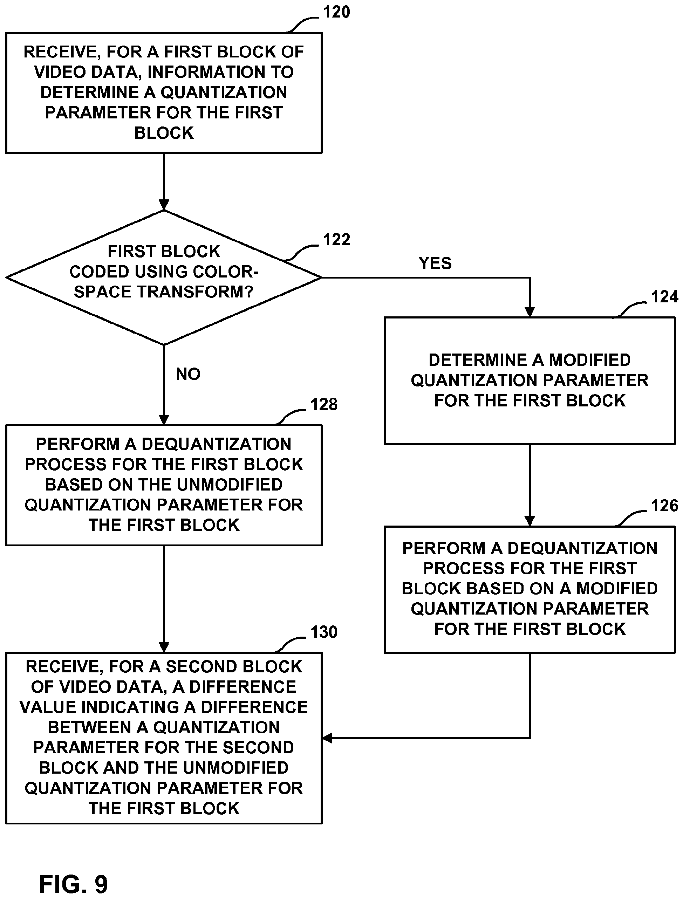

This disclosure describes techniques related to determining quantization parameters when color-space conversion coding is used and, furthermore, describes techniques for signaling, from an encoder to a decoder, quantization parameters when color-space conversion coding is used. The present invention is defined in the appended claims. Enabling disclosure for the invention is to be found in the present description in the embodiments of Figures 8 and 9. In the following, the examples are provided for illustrative purposes.

In one embodiment, a method of decoding video data according to claim 1 is provided.

In another embodiment, a method of encoding video data according to claim 6 is provided.

In another embodiment, a device for decoding video data according to claim 12 is provided.

In another embodiment, a device for encoding video data according to claim 13 is provided.

In another embodiment, a computer-readable storage medium storing instructions according to claim 15 is provided.

The details of one or more examples of the disclosure are set forth in the accompanying drawings and the description below. Other features, objects, and advantages of the disclosure will be apparent from the description, drawings, and claims.

## BRIEF DESCRIPTION OF DRAWINGS

FIG. 1 is a block diagram illustrating an example video encoding and decoding system that may utilize the techniques described in this disclosure.

FIG. 2 is a conceptual diagram illustrating High Efficiency Video Coding (HEVC) intra prediction modes.

FIG. 3A and FIG. 3B are conceptual diagrams illustrating spatial neighboring motion vector candidates for merge and advanced motion vector prediction (AMVP) modes according to one or more techniques of the current disclosure.

FIG. 4 is a conceptual diagram illustrating an intra block copy (BC) example according to one or more techniques of the current disclosure.

FIG. 5 is a conceptual diagram illustrating an example of a target block and reference sample for an intra 8x8 block, according to one or more techniques of the current disclosure.

FIG. 6 is block diagram illustrating an example video encoder that may implement the techniques described in this disclosure.

FIG. 7 is a block diagram illustrating an example video decoder that may implement the techniques described in this disclosure.

FIG. 8 is a flowchart illustrating an example video decoding method according to an embodiment of the invention.

FIG. 9 is a flowchart illustrating an example video decoding method according to an embodiment of the invention.

## DETAILED DESCRIPTION

This disclosure describes video coding techniques, including techniques related to emerging screen content coding (SCC) extensions and range extensions (RCEx) of the recently finalized high efficiency video coding (HEVC) standard. The SCC and range extensions are being designed to potentially support high bit depth (e.g. more than 8 bit) and/or high chroma sampling formats, and are therefore being designed to include new coding tools not included in the base HEVC standard.

One such coding tool is color-space conversion coding. In color-space conversion coding, a video encoder may convert residual data from a first color space (e.g. YCbCr) to a second color space (e.g. RGB) in order to achieve better coding quality (e.g. a better rate-distortion tradeoff). Regardless of the color space of the residual data, a video encoder typically transforms the residual data into transform coefficients and quantizes the transform coefficients. A video decoder performs the reciprocal processes of dequantizing the transform coefficients and inverse transforming the transform coefficients to reconstruct the residual data. The video encoder signals to the video decoder a quantization parameter indicating an amount of scaling used in quantizing the transform coefficients. The quantization parameter may also be used by other video coding processes, such as deblock filtering.

This disclosure describes techniques related to determining quantization parameters when color-space conversion coding is used and, furthermore, describes techniques for signaling, from an encoder to a decoder, quantization parameters when color-space conversion coding is used. For example, in color-space conversion coding, a video coder (e.g., video encoder or video decoder) may modify a quantization parameter for a first block. For the quantization parameter for a second block, the video coder may code (e.g., encode or decode) information for a difference value. In the techniques described in this disclosure, the difference value is the difference between the quantization parameter for the first block (i.e., the non-modified quantization parameter) and the quantization parameter for the second block.

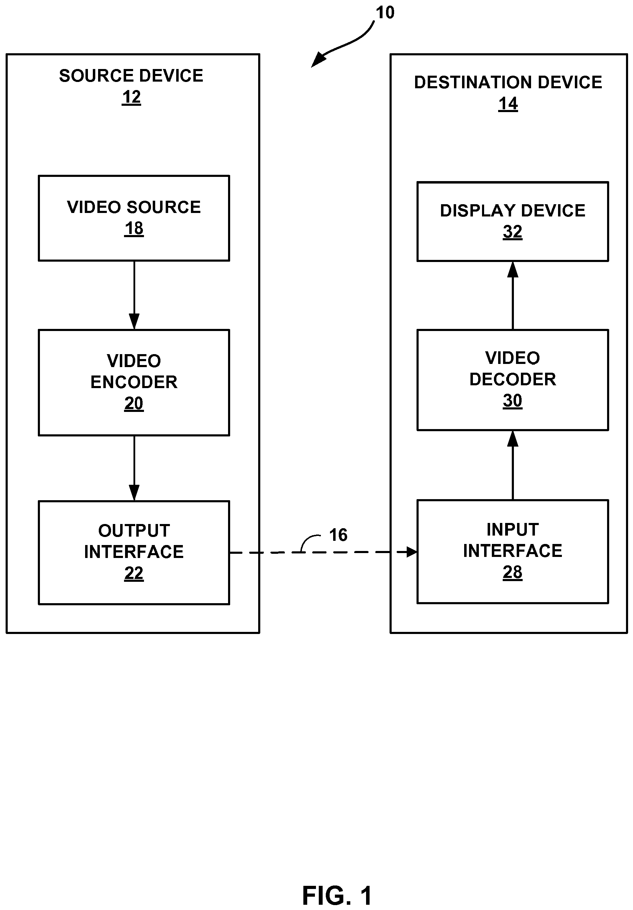

FIG. 1 is a block diagram illustrating an example video encoding and decoding system 10 that may utilize techniques for screen content coding. As shown in FIG. 1, system 10 includes a source device 12 that provides encoded video data to be decoded at a later time by a destination device 14. In particular, source device 12 provides the video data to destination device 14 via a computer-readable medium 16. Source device 12 and destination device 14 may comprise any of a wide range of devices, including desktop computers, notebook (i.e., laptop) computers, tablet computers, set-top boxes, telephone handsets such as so-called "smart" phones, so-called "smart" pads, televisions, cameras, display devices, digital media players, video gaming consoles, video streaming device, or the like. In some cases, source device 12 and destination device 14 may be equipped for wireless communication.

Destination device 14 may receive the encoded video data to be decoded via computer-readable medium 16. Computer-readable medium 16 may comprise any type of medium or device capable of moving the encoded video data from source device 12 to destination device 14. In one example, computer-readable medium 16 may comprise a communication medium to enable source device 12 to transmit encoded video data directly to destination device 14 in real-time. The encoded video data may be modulated according to a communication standard, such as a wireless communication protocol, and transmitted to destination device 14. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 12 to destination device 14.

In some examples, source device 12 may output encoded data may be output to a storage device. Similarly, an input interface may access encoded data from the storage device. The storage device may include any of a variety of distributed or locally accessed data storage media such as a hard drive, Blu-ray discs, DVDs, CD-ROMs, flash memory, volatile or non-volatile memory, or any other suitable digital storage media for storing encoded video data. In a further example, the storage device may correspond to a file server or another intermediate storage device that may store the encoded video generated by source device 12. Destination device 14 may access stored video data from the storage device via streaming or download. The file server may be any type of server capable of storing encoded video data and transmitting that encoded video data to the destination device 14. Example file servers include a web server (e.g., for a website), an FTP server, network attached storage (NAS) devices, or a local disk drive. Destination device 14 may access the encoded video data through any standard data connection, including an Internet connection. This may include a wireless channel (e.g., a Wi-Fi connection), a wired connection (e.g., DSL, cable modem, etc.), or a combination of both that is suitable for accessing encoded video data stored on a file server. The transmission of encoded video data from the storage device may be a streaming transmission, a download transmission, or a combination thereof.

The techniques of this disclosure are not necessarily limited to wireless applications or settings. The techniques may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications. In some examples, system 10 may be configured to support one-way or two-way video transmission to support applications such as video streaming, video playback, video broadcasting, and/or video telephony.

In the example of FIG. 1, source device 12 includes video source 18, video encoder 20, and output interface 22. Destination device 14 includes input interface 28, video decoder 30, and display device 32. In accordance with this disclosure, video encoder 20 of source device 12 may be configured to apply the techniques for encoding video blocks using a color-space conversion process. In other examples, a source device and a destination device may include other components or arrangements. For example, source device 12 may receive video data from an external video source 18, such as an external camera. Likewise, destination device 14 may interface with an external display device, rather than including an integrated display device.

The illustrated system 10 of FIG. 1 is merely one example. Techniques for coding video blocks using a color-space conversion process may be performed by any digital video encoding and/or decoding device. Although generally the techniques of this disclosure are performed by a video coding device, the techniques may also be performed by a video encoder/decoder, typically referred to as a "CODEC." Source device 12 and destination device 14 are merely examples of such coding devices in which source device 12 generates coded video data for transmission to destination device 14. In some examples, devices 12, 14 may operate in a substantially symmetrical manner such that each of devices 12, 14 include video encoding and decoding components. Hence, system 10 may support one-way or two-way video transmission between video devices 12, 14, e.g., for video streaming, video playback, video broadcasting, or video telephony.

Video source 18 of source device 12 may include a video capture device, such as a video camera, a video archive containing previously captured video, and/or a video feed interface to receive video from a video content provider. As a further alternative, video source 18 may generate computer graphics-based data as the source video, or a combination of live video, archived video, and computer-generated video. In some cases, if video source 18 is a video camera, source device 12 and destination device 14 may form so-called camera phones or video phones. As mentioned above, however, the techniques described in this disclosure may be applicable to video coding in general, and may be applied to wireless and/or wired applications. In each case, the captured, pre-captured, or computer-generated video may be encoded by video encoder 20. The encoded video information may then be output by output interface 22 onto a computer-readable medium 16.

Computer-readable medium 16 may include transient media, such as a wireless broadcast or wired network transmission, or storage media (that is, non-transitory storage media), such as a hard disk, flash drive, compact disc, digital video disc, Blu-ray disc, or other computer-readable media. In some examples, a network server (not shown) may receive encoded video data from source device 12 and provide the encoded video data to destination device 14, e.g., via network transmission. Similarly, a computing device of a medium production facility, such as a disc stamping facility, may receive encoded video data from source device 12 and produce a disc containing the encoded video data. Therefore, computer-readable medium 16 may be understood to include one or more computer-readable media of various forms, in various examples.

Input interface 28 of destination device 14 receives information from computer-readable medium 16. The information of computer-readable medium 16 may include syntax information defined by video encoder 20, which is also used by video decoder 30, that includes syntax elements that describe characteristics and/or processing of blocks and other coded units, e.g., GOPs. Display device 32 displays the decoded video data to a user, and may comprise any of a variety of display devices such as a cathode ray tube (CRT), a liquid crystal display (LCD), a plasma display, an organic light emitting diode (OLED) display, or another type of display device.

Video encoder 20 and video decoder 30 each may be implemented as any of a variety of suitable encoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 20 and video decoder 30 may be included in one or more encoders or decoders, either of which may be integrated as part of a combined encoder/decoder (CODEC) in a device. A device including video encoder 20 and/or video decoder 30 may comprise an integrated circuit, a microprocessor, and/or a wireless communication device, such as a cellular telephone.

Video coding standards include ITU-T H.261, ISO/IEC MPEG-1 Visual, ITU-T H.262 or ISO/IEC MPEG-2 Visual, ITU-T H.263, ISO/IEC MPEG-4 Visual and ITU-T H.264 (also known as ISO/IEC MPEG-4 AVC), including its Scalable Video Coding (SVC) and Multiview Video Coding (MVC) extensions. The design of a new video coding standard, namely High-Efficiency Video Coding (HEVC), has been finalized by the Joint Collaboration Team on Video Coding (JCT-VC) of ITU-T Video Coding Experts Group (VCEG) and ISO/IEC Motion Picture Experts Group (MPEG). Video encoder 20 and video decoder 30 may operate according to a video coding standard, such as the HEVC, and may conform to the HEVC Test Model (HM). Alternatively, video encoder 20 and video decoder 30 may operate according to other proprietary or industry standards, such as the ITU-T H.264 standard, alternatively referred to as MPEG-4, Part 10, Advanced Video Coding (AVC), or extensions of such standards. The techniques of this disclosure, however, are not limited to any particular coding standard. Other examples of video coding standards include MPEG-2 and ITU-T H.263.

The ITU-T H.264/MPEG-4 (AVC) standard was formulated by the ITU-T Video Coding Experts Group (VCEG) together with the ISO/IEC Moving Picture Experts Group (MPEG) as the product of a collective partnership known as the Joint Video Team (JVT). In some aspects, the techniques described in this disclosure may be applied to devices that generally conform to the H.264 standard. The H.264 standard is described in ITU-T Recommendation H.264, Advanced Video Coding for generic audiovisual services, by the ITU-T Study Group, and dated March, 2005, which may be referred to herein as the H.264 standard or H.264 specification, or the H.264/AVC standard or specification. The Joint Video Team (JVT) continues to work on extensions to H.264/MPEG-4 AVC.

The JCT-VC developing the HEVC standard. The HEVC standardization efforts are based on an evolving model of a video coder referred to as the HEVC Test Model (HM). The HM presumes several additional capabilities of video coders relative to existing devices according to, e.g., ITU-T H.264/AVC. For example, whereas H.264 provides nine intra prediction encoding modes, the HM may provide as many as thirty-three intra prediction encoding modes.

In general, the working model of the HM describes that a video frame or picture may be divided into a sequence of coding tree units (CTUs). CTUs may also be referred to as treeblocks or largest coding units (LCU). Each of the CTUs may comprise a coding tree block of luma samples, two corresponding coding tree blocks of chroma samples, and syntax structures used to code the samples of the coding tree blocks. In monochrome pictures or pictures having three separate color planes, a CTU may comprise a single coding tree block and syntax structures used to code the samples of the coding tree block. A coding tree block may be an NxN block of samples. Syntax data within a bitstream may define a size for the LCU, which is a largest coding unit in terms of the number of pixels.

In HEVC, the largest coding unit in a slice is called a coding tree block (CTB). A CTB contains a quad-tree, the nodes of which are called coding units (CUs). The size of a CTB can range from 16x16 to 64x64 in the HEVC main profile, although smaller sizes, such as 8x8 CTB sizes, and larger sizes can also be supported.

This disclosure may use the term "video unit" or "video block" or "block" to refer to one or more sample blocks and syntax structures used to code samples of the one or more blocks of samples. Example types of video units may include CTUs, CUs, PUs, transform units (TUs), macroblocks, macroblock partitions, and so on. In some contexts, discussion of PUs may be interchanged with discussion of macroblocks or macroblock partitions.

A slice includes a number of consecutive treeblocks in coding order. A video frame or picture may be partitioned into one or more slices. Each treeblock may be split into coding units (CUs) according to a quadtree. In general, a quadtree data structure includes one node per CU, with a root node corresponding to the treeblock. If a CU is split into four sub-CUs, the node corresponding to the CU includes four leaf nodes, each of which corresponds to one of the sub-CUs.

Each node of the quadtree data structure may provide syntax data for the corresponding CU. For example, a node in the quadtree may include a split flag, indicating whether the CU corresponding to the node is split into sub-CUs. Syntax elements for a CU may be defined recursively, and may depend on whether the CU is split into sub-CUs. If a CU is not split further, it is referred as a leaf-CU. In this disclosure, four sub-CUs of a leaf-CU will also be referred to as leaf-CUs even if there is no explicit splitting of the original leaf-CU. For example, if a CU at 16x16 size is not split further, the four 8x8 sub-CUs will also be referred to as leaf-CUs although the 16x16 CU was never split.

A CU can be the same size of a CTB and can be as small as 8x8. Each CU is coded with one prediction mode. When a CU is coded using an inter prediction mode (i.e., when the CU is inter coded), the CU may be further partitioned into two or more prediction units (PUs). In other examples, a CU may include just one PU when further partitions do not apply. In examples where a CU is partitioned into two PUs, each PU can be rectangles with a size equal to half of the CU, or two rectangles with 1/4 or 3/4 size of the CU. In HEVC, the smallest PU sizes are 8x4 and 4x8.

A CU has a similar purpose as a macroblock of the H.264 standard, except that a CU does not have a size distinction. For example, a treeblock may be split into four child nodes (also referred to as sub-CUs), and each child node may in turn be a parent node and be split into another four child nodes. A final, unsplit child node, referred to as a leaf node of the quadtree, comprises a coding node, also referred to as a leaf-CU. Syntax data associated with a coded bitstream may define a maximum number of times a treeblock may be split, referred to as a maximum CU depth, and may also define a minimum size of the coding nodes. Accordingly, a bitstream may also define a smallest coding unit (SCU). This disclosure uses the term "block" to refer to any of a CU, PU, or TU, in the context of HEVC, or similar data structures in the context of other standards (e.g., macroblocks and sub-blocks thereof in H.264/AVC).

A CU includes a coding node and prediction units (PUs) and transform units (TUs) associated with the coding node. A size of the CU corresponds to a size of the coding node and must be square in shape. The size of the CU may range from 8x8 pixels up to the size of the treeblock with a maximum of 64x64 pixels or greater. Each CU may contain one or more PUs and one or more TUs. Syntax data associated with a CU may describe, for example, partitioning of the CU into one or more PUs. Partitioning modes may differ between whether the CU is skip or direct mode encoded, intra prediction mode encoded, or inter prediction mode encoded. PUs may be partitioned to be non-square in shape. Syntax data associated with a CU may also describe, for example, partitioning of the CU into one or more TUs according to a quadtree. A TU can be square or non-square (e.g., rectangular) in shape.

The HEVC standard allows for transformations according to TUs, which may be different for different CUs. The TUs are typically sized based on the size of PUs within a given CU defined for a partitioned LCU, although this may not always be the case. The TUs are typically the same size or smaller than the PUs. In some examples, residual samples corresponding to a CU may be subdivided into smaller units using a quadtree structure known as "residual quad tree" (RQT). The leaf nodes of the RQT may be referred to as transform units (TUs). Pixel difference values associated with the TUs may be transformed to produce transform coefficients, which may be quantized.

A leaf-CU may include one or more prediction units (PUs). In general, a PU represents a spatial area corresponding to all or a portion of the corresponding CU, and may include data for retrieving a reference sample for the PU. Moreover, a PU includes data related to prediction. For example, when the PU is intra-mode encoded, data for the PU may be included in a residual quadtree (RQT), which may include data describing an intra prediction mode for a TU corresponding to the PU. As another example, when the PU is inter mode encoded, the PU may include data defining one or more motion vectors for the PU. The data defining the motion vector for a PU may describe, for example, a horizontal component of the motion vector, a vertical component of the motion vector, a resolution for the motion vector (e.g., one-quarter pixel precision or one-eighth pixel precision), a reference picture to which the motion vector points, and/or a reference picture list (e.g., List 0, List 1, or List C) for the motion vector.

As an example, the HM supports prediction in various PU sizes. Assuming that the size of a particular CU is 2Nx2N, the HM supports intra prediction in PU sizes of 2Nx2N or NxN, and inter prediction in symmetric PU sizes of 2Nx2N, 2NxN, Nx2N, or NxN. The HM also supports asymmetric partitioning for inter prediction in PU sizes of 2NxnU, 2NxnD, nLx2N, and nRx2N. In asymmetric partitioning, one direction of a CU is not partitioned, while the other direction is partitioned into 25% and 75%. The portion of the CU corresponding to the 25% partition is indicated by an "n" followed by an indication of "Up", "Down," "Left," or "Right." Thus, for example, "2NxnU" refers to a 2Nx2N CU that is partitioned horizontally with a 2Nx0.5N PU on top and a 2Nx1.5N PU on bottom.

In this disclosure, "NxN" and "N by N" may be used interchangeably to refer to the pixel dimensions of a video block in terms of vertical and horizontal dimensions, e.g., 16x16 pixels or 16 by 16 pixels. In general, a 16x16 block will have 16 pixels in a vertical direction (y = 16) and 16 pixels in a horizontal direction (x = 16). Likewise, an NxN block generally has N pixels in a vertical direction and N pixels in a horizontal direction, where N represents a nonnegative integer value. The pixels in a block may be arranged in rows and columns. Moreover, blocks need not necessarily have the same number of pixels in the horizontal direction as in the vertical direction. For example, blocks may comprise NxM pixels, where M is not necessarily equal to N.

A leaf-CU having one or more PUs may also include one or more transform units (TUs). The transform units may be specified using an RQT (also referred to as a TU quadtree structure), as discussed above. For example, a split flag may indicate whether a leaf-CU is split into four transform units. Then, each transform unit may be split further into further sub-TUs. When a TU is not split further, it may be referred to as a leaf-TU. Generally, for intra coding, all the leaf-TUs belonging to a leaf-CU share the same intra prediction mode. That is, the same intra prediction mode is generally applied to calculate predicted values for all TUs of a leaf-CU. For intra coding, a video encoder may calculate a residual value for each leaf-TU using the intra prediction mode, as a difference between the portion of the CU corresponding to the TU and the original block. A TU is not necessarily limited to the size of a PU. Thus, TUs may be larger or smaller than a PU. For intra coding, a PU may be collocated with a corresponding leaf-TU for the same CU. In some examples, the maximum size of a leaf-TU may correspond to the size of the corresponding leaf-CU.

HEVC specifies four transform units (TUs) sizes of 4x4, 8x8, 16x16, and 32x32 to code the prediction residual. A CU may be recursively partitioned into 4 or more TUs. TUs may use integer basis functions that are similar to the discrete cosine transform (DCT). Further, in some examples, 4x4 luma transform blocks that belong to an intra coded region may be transformed using an integer transform that is derived from discrete sine transform (DST). Chroma transform blocks may use the same TU sizes as luma transform blocks.

Moreover, TUs of leaf-CUs may also be associated with quadtree data structures, referred to as residual quadtrees (RQTs). That is, a leaf-CU may include a quadtree indicating how the leaf-CU is partitioned into TUs. The root node of a TU quadtree generally corresponds to a leaf-CU, while the root node of a CU quadtree generally corresponds to a treeblock (or LCU). TUs of the RQT that are not split are referred to as leaf-TUs. In general, this disclosure uses the terms CU and TU to refer to leaf-CU and leaf-TU, respectively, unless noted otherwise.

When the CU is inter coded, one set of motion information may be present for each PU. In some examples, such as when the PU is located in a B-slice, two sets of motion information may be present for each PU. Further, each PU may be coded with a unique inter prediction mode to derive the set of motion information for each PU.

A video sequence typically includes a series of video frames or pictures. A group of pictures (GOP) generally comprises a series of one or more of the video pictures. A GOP may include syntax data in a header of the GOP, a header of one or more of the pictures, or elsewhere, that describes a number of pictures included in the GOP. Each slice of a picture may include slice syntax data that describes an encoding mode for the slice. Video encoder 20 typically operates on video blocks within individual video slices in order to encode the video data. A video block may correspond to a coding node within a CU. The video blocks may have fixed or varying sizes, and may differ in size according to a specified coding standard.

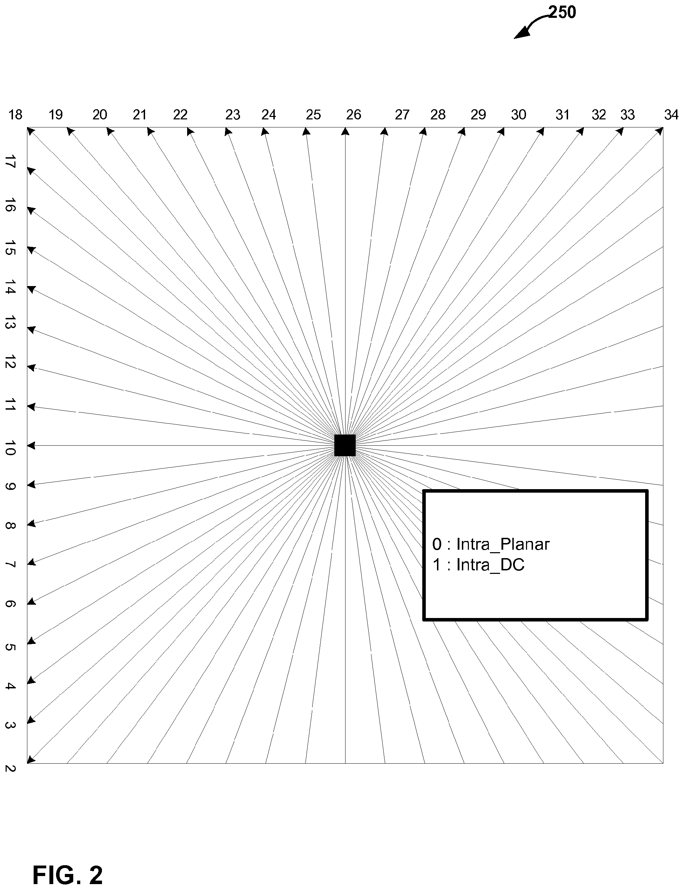

FIG. 2 is a conceptual diagram 250 illustrating the HEVC intra prediction modes. For the luma component of each PU, an intra prediction method is utilized with 33 angular intra prediction modes (indexed from 2 to 34), DC mode (indexed with 1) and Planar mode (indexed with 0), as described with respect to FIG. 2.

In addition to the above 35 intra prediction modes, one more intra prediction mode, named intra pulse code modulation (I-PCM), is also employed by HEVC. In I-PCM mode, prediction, transform, quantization, and entropy coding are bypassed while the prediction samples are coded by a predefined number of bits. The main purpose of the I-PCM mode is to handle the situation when the signal cannot be efficiently coded by other intra prediction modes.

Following intra predictive or inter predictive coding using the PUs of a CU, video encoder 20 may calculate residual data for the TUs of the CU. The PUs may comprise syntax data describing a method or mode of generating predictive pixel data in the spatial domain (also referred to as the pixel domain) and the TUs may comprise coefficients in the transform domain following application of a transform, e.g., a discrete cosine transform (DCT), an integer transform, a wavelet transform, or a conceptually similar transform to residual video data. The residual data may correspond to pixel differences between pixels of the unencoded picture and prediction values corresponding to the PUs. Video encoder 20 may form the TUs including the residual data for the CU, and then transform the TUs to produce transform coefficients for the CU.

Following any transforms to produce transform coefficients, video encoder 20 may perform quantization of the transform coefficients. Quantization generally refers to a process in which transform coefficients are quantized to possibly reduce the amount of data used to represent the coefficients, providing further compression. The quantization process may reduce the bit depth associated with some or all of the coefficients. For example, an $n$-bit value may be rounded down to an $m$-bit value during quantization, where $n$ is greater than $m$.

Following quantization, video encoder 20 may scan the transform coefficients, producing a one-dimensional vector from the two-dimensional matrix including the quantized transform coefficients. The scan may be designed to place higher energy (and therefore lower frequency) coefficients at the front of the array and to place lower energy (and therefore higher frequency) coefficients at the back of the array. In some examples, video encoder 20 may use a predefined scan order to scan the quantized transform coefficients to produce a serialized vector that can be entropy encoded. In other examples, video encoder 20 may perform an adaptive scan. After scanning the quantized transform coefficients to form a one-dimensional vector, video encoder 20 may entropy encode syntax elements representing transform coefficients in the one-dimensional vector, e.g., according to context-adaptive variable length coding (CAVLC), context-adaptive binary arithmetic coding (CABAC), syntax-based context-adaptive binary arithmetic coding (SBAC), Probability Interval Partitioning Entropy (PIPE) coding or another entropy encoding methodology. Video encoder 20 may also entropy encode syntax elements associated with the encoded video data for use by video decoder 30 in decoding the video data.

Video encoder 20 may output a bitstream that includes a sequence of bits that forms a representation of coded pictures and associated data. Thus, the bitstream comprises an encoded representation of video data. The bitstream may comprise a sequence of network abstraction layer (NAL) units. A NAL unit is a syntax structure containing an indication of the type of data in the NAL unit and bytes containing that data in the form of a raw byte sequence payload (RBSP) interspersed as necessary with emulation prevention bits. Each of the NAL units includes a NAL unit header and encapsulates a RBSP. The NAL unit header may include a syntax element that indicates a NAL unit type code. The NAL unit type code specified by the NAL unit header of a NAL unit indicates the type of the NAL unit. A RBSP may be a syntax structure containing an integer number of bytes that is encapsulated within a NAL unit. In some instances, an RBSP includes zero bits.

Different types of NAL units may encapsulate different types of RBSPs. For example, different types of NAL unit may encapsulate different RBSPs for video parameter sets (VPSs), sequence parameter sets (SPSs), picture parameter sets (PPSs), coded slices, supplemental enhancement information (SEI), and so on. NAL units that encapsulate RBSPs for video coding data (as opposed to RBSPs for parameter sets and SEI messages) may be referred to as video coding layer (VCL) NAL units. In HEVC (i.e., non-multi-layer HEVC), an access unit may be a set of NAL units that are consecutive in decoding order and contain exactly one coded picture. In addition to the coded slice NAL units of the coded picture, the access unit may also contain other NAL units not containing slices of the coded picture. In some examples, the decoding of an access unit always results in a decoded picture. Supplemental Enhancement Information (SEI) contains information that is not necessary to decode the samples of coded pictures from VCL NAL units. An SEI RBSP contains one or more SEI messages.

As briefly indicated above, NAL units may encapsulate RBSPs for VPSs, SPSs, and PPSs. A VPS is a syntax structure comprising syntax elements that apply to zero or more entire coded video sequences (CVSs). An SPS is also a syntax structure comprising syntax elements that apply to zero or more entire CVSs. An SPS may include a syntax element that identifies a VPS that is active when the SPS is active. Thus, the syntax elements of a VPS may be more generally applicable than the syntax elements of an SPS. A PPS is a syntax structure comprising syntax elements that apply to zero or more coded pictures. A PPS may include a syntax element that identifies an SPS that is active when the PPS is active. A slice header of a slice may include a syntax element that indicates a PPS that is active when the slice is being coded.

Video decoder 30 may receive a bitstream generated by video encoder 20. In addition, video decoder 30 may parse the bitstream to obtain syntax elements from the bitstream. Video decoder 30 may reconstruct the pictures of the video data based at least in part on the syntax elements obtained from the bitstream. The process to reconstruct the video data may be generally reciprocal to the process performed by video encoder 20. For instance, video decoder 30 may use motion vectors of PUs to determine predictive blocks for the PUs of a current CU. In addition, video decoder 30 may inverse quantize coefficient blocks of TUs of the current CU. Video decoder 30 may perform inverse transforms on the coefficient blocks to reconstruct transform blocks of the TUs of the current CU. Video decoder 30 may reconstruct the coding blocks of the current CU by adding the samples of the predictive blocks for PUs of the current CU to corresponding samples of the transform blocks of the TUs of the current CU. By reconstructing the coding blocks for each CU of a picture, video decoder 30 may reconstruct the picture.

In the HEVC standard, there are two inter prediction modes. These inter prediction modes are merge mode (note that skip mode is considered as a special case of merge mode) and advanced motion vector prediction (AMVP) mode, respectively, for a prediction unit (PU). In either AMVP or merge mode, a motion vector (MV) candidate list may be maintained for multiple motion vector predictors. The motion vector(s), as well as reference indices in the merge mode, of the current PU may be generated by taking one candidate from the MV candidate list.

In some instances, the MV candidate list may contain up to 5 candidates for the merge mode and only two candidates for the AMVP mode. A merge candidate may contain a set of motion information, e.g., motion vectors corresponding to both reference picture lists (such as list 0 and list 1) and the reference indices. If a merge candidate is identified by a merge index, the reference pictures are used for the prediction of the current blocks, as well as the associated motion vectors are determined. However, under AMVP mode for each potential prediction direction from either list 0 or list 1, a reference index needs to be explicitly signaled, together with an MVP index to the MV candidate list since the AMVP candidate may contain only a motion vector. In AMVP mode, the predicted motion vectors can be further refined.

A merge candidate may correspond to a full set of motion information while an AMVP candidate may contain just one motion vector for a specific prediction direction and reference index. The candidates for both modes may be similarly derived from the same spatial and temporal neighboring blocks.

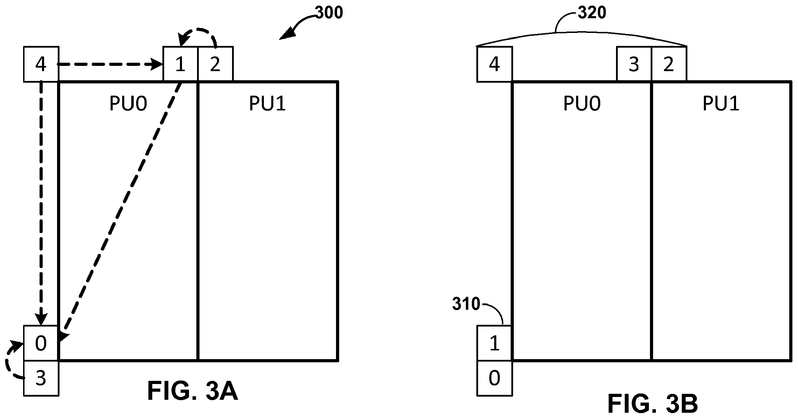

FIG. 3A and FIG. 3B are conceptual diagrams illustrating spatial neighboring motion vector candidates for merge and advanced motion vector prediction (AMVP) modes according to one or more techniques of the current disclosure. As described with respect to FIG. 3A and FIG. 3B, spatial MV candidates are derived from the neighboring blocks shown in FIG. 3A and FIG. 3B, for a specific PU (PU0), although the methods generating the candidates from the blocks differ for merge and AMVP modes.

In merge mode, up to four spatial MV candidates can be derived with the orders shown in FIG. 3A with numbers, and the order is the following: left (0), above (1), above right (2), below left (3), and above left (4), as shown in FIG. 3A.

In AMVP mode, the neighboring blocks are divided into two groups: left group 310 consisting of the block 0 and 1, and above group 320 consisting of the blocks 2, 3, and 4 as shown in FIG. 3B. For each of left group 310 and above group 320, the potential candidate in a neighboring block referring to the same reference picture as that indicated by the signaled reference index has the highest priority to be chosen to form a final candidate of the group. It is possible that all neighboring blocks do not contain a motion vector pointing to the same reference picture. Therefore, if such a candidate cannot be found, the first available candidate is scaled to form the final candidate, thus the temporal distance differences can be compensated.

Many applications, such as remote desktop, remote gaming, wireless displays, automotive infotainment, cloud computing, etc., are becoming routine in daily lives. Video contents in these applications are usually combinations of natural content, text, artificial graphics, etc. In text and artificial graphics region, repeated patterns (such as characters, icons, symbols, etc.) often exist. Intra Block Copying (Intra BC) is a technique which may enable a video coder to remove such redundancy and improve intra-picture coding efficiency. In some instances, Intra BC alternatively may be referred to as Intra motion compensation (MC).

According to some Intra BC techniques, video coders may use blocks of previously coded video data, within the same picture as the current block of video data, that are either directly above or directly in line horizontally with a current block (to be coded) of video data in the same picture for prediction of the current block. In other words, if a picture of video data is imposed on a 2-D grid, each block of video data would occupy a unique range of x-values and y-values. Accordingly, some video coders may predict a current block of video data based on blocks of previously coded video data that share only the same set of x-values (i.e., vertically in-line with the current block) or the same set of y-values (i.e., horizontally in-line with the current block).

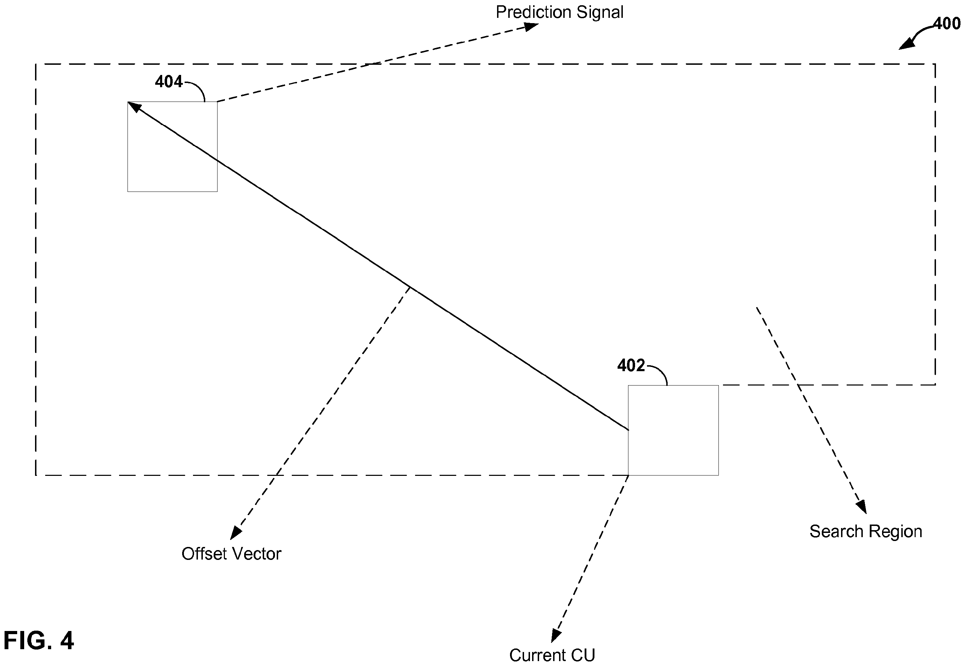

FIG. 4 is a conceptual diagram illustrating an intra block copy (BC) example according to one or more techniques of the current disclosure. As described with respect to FIG. 4, the Intra BC has been included in RExt. An example of Intra BC is shown as in FIG. 4, wherein a current CU 402 is predicted from an already decoded block 404 of the current picture/slice. The current Intra BC block size can be as large as a CU size, which ranges from 8x8 to 64x64, although some applications, further constrains may apply in addition.

In traditional video coding, images may be assumed to be continuous-tone and spatially smooth. Based on these assumptions, various tools have been developed such as block-based transform, filtering, etc., and they have shown good performance for videos with natural content. However, in certain applications, such remote desktop, collaborative work, and wireless display, computer generated screen content may be the dominant content to be compressed. This type of content tends to be discrete-tone and features sharp lines with high contrast object boundaries. However, the assumption of continuous-tone and smoothness may no longer apply. As such, traditional video coding techniques may not work efficiently.

To rectify this loss of efficiency, video coders may use palette mode coding. U.S. Provisional Application Serial No. 61/810,649, filed April 10, 2013, describe examples of the palette coding techniques. For each CU, a palette may be derived, which includes the most dominant pixel values in the current CU. The size and the elements of the palette are first transmitted. The pixels in the CUs are then encoded according to a particular scanning order. For each location, video encoder 20 may first transmit a syntax element, such as a flag, palette_flag, to indicate if the pixel value is in the palette ("run mode") or not ("pixel mode").

In "run mode", video encoder 20 may signal the palette index followed by the "run". The run is a syntax element that indicates the number of consecutive pixels in a scanning order that have the same palette index value as the pixel currently being coded. If multiple pixels in immediate succession in the scanning order have the same palette index value, then "run mode" may be indicated by the syntax element, such as palette_flag. A counter value may be determined, which equals the number of pixels succeeding the current pixel that have the same palette index value as the current pixel, and the run is set equal to the counter value. Video encoder 20 does not need to transmit either palette_flag or the palette index for the following positions that are covered by the "run," as each of the pixels following the current pixel has the same pixel value. On the decoder side, only the first palette index value for the current pixel would be decoded, and the result would be duplicated for each pixel in the "run" of pixels indicated in the "run" syntax element. In "pixel mode", video encoder 20 transmits the pixel sample value for this position. If the syntax element, such as palette_flag, indicates "pixel mode", then the palette index value is only determined for the current pixel being decoded.

In accordance with the techniques described in this disclosure, an in-loop color-space transform for residual signals (i.e., residual blocks) is proposed for sequences in 4:4:4 chroma format; however, the techniques are not limited to the 4:4:4 format. The in-loop color-space transform process transforms prediction error signals (i.e., residual signals) in RGB/YUV chroma format into those in a sub-optimal color-space. The in-loop color-space transform can further reduce the correlation among the color components. The transform matrix may be derived from pixel sample values for each CU by a singular-value-decomposition (SVD). The color-space transform may be applied to prediction error of both intra mode and inter mode.

When the color-space transform is applied to inter mode, the residual is firstly converted to a different domain with the derived transform matrix. After the color-space conversion, the coding steps, such as DCT/DST, quantization, and entropy coding are performed, in order.

When the color-space transform is applied to a CU coded using an intra mode, the prediction and current block are firstly converted to a different domain with the derived transform matrix, respectively. After the color-space conversion, the residual between current block and a predictor for the current block is further transformed with DCT/DST, quantized, and entropy coded.

A video encoding device, such as video encoder 20, performs a forward operation, where a color-space transform matrix comprising conversion values a, b, c, d, e, f, g, h, and i is applied to three planes G, B, and R to derive values for color components P, Q, and S as follows:

$$\begin{bmatrix} a & b & c \\ d & e & f \\ g & h & i \end{bmatrix} \begin{bmatrix} G \\ B \\ R \end{bmatrix} = \begin{bmatrix} P \\ Q \\ S \end{bmatrix}$$

Resulting values may be clipped within the range of the HEVC specification, since values may be enlarged up to $\sqrt{3}$ times in the worst case. A video decoding device, such as video decoder 30, performs an inverse operation, where a color-space transform matrix comprising conversion values $a^t$, $b^t$, $c^t$, $d^t$, $e^t$, $f^t$, $g^t$, $h^t$, and $i^t$ is applied to the three color components P', Q', and R' to derive the three planes G', B' and R' as follows,

$$\begin{bmatrix} a & b & c \\ d & e & f \\ g & h & i \end{bmatrix}^t \begin{bmatrix} P' \\ Q' \\ S' \end{bmatrix} = \begin{bmatrix} G' \\ B' \\ R' \end{bmatrix}$$

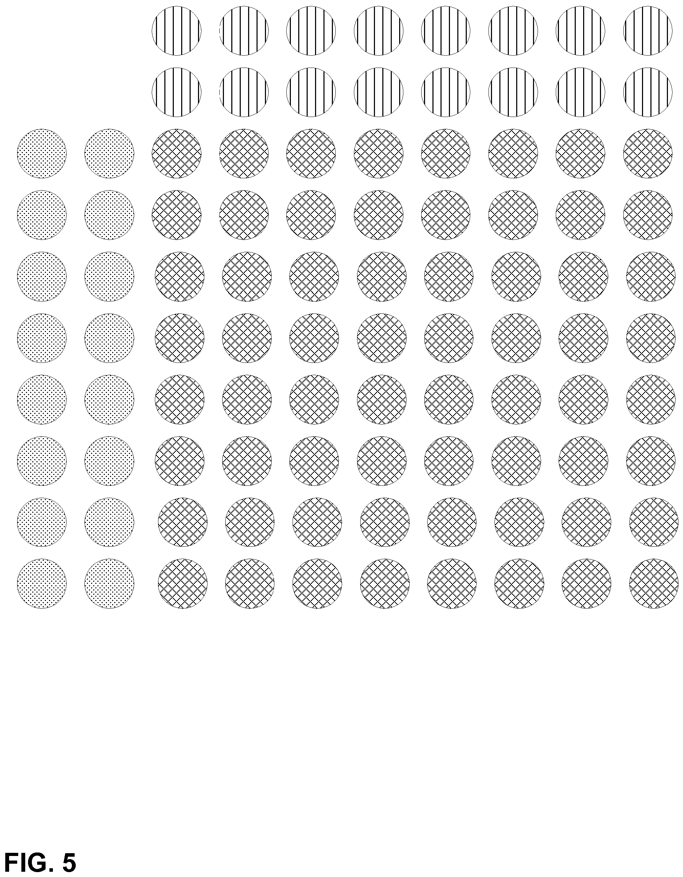

FIG. 5 is a conceptual diagram illustrating an example of a target block and reference sample for an intra 8x8 block, according to one or more techniques of the current disclosure. A transform matrix may be derived using singular-value-decomposition (SVD) from the reference sample values. A video coding device (e.g., video encoder 20 or video decoder 30) may use different reference samples for the intra case and inter case. For the case of an intra coded block, the target blocks and reference samples may be as shown in FIG. 5. In FIG. 5, the target block consists of 8x8 crosshatched samples, and reference samples are striped and dotted samples.

For the case of an inter coded block, reference samples for the matrix derivation may be the same as the reference samples for motion compensation. Reference samples in the advanced motion prediction (AMP) block may be sub-sampled such that the number of reference samples is reduced. For example, the number of reference samples in a 12x16 block is reduced by 2/3.

In some of the above examples, the color-space transform process may be always applied. Therefore, there may be no need to signal whether the color-space transform process is invoked or not. In addition, both video encoder 20 and video decoder 30 may use the same method to derive the transform matrix in order to avoid the overhead for signaling the transform matrix.

Video encoder 20 and video decoder 30 may use various color-space transform matrices. For example, video encoder 20 and video decoder 30 may apply different color-space transform matrices for different color spaces. For instance, video encoder 20 and video decoder 30 may use a pair of YCbCr transform matrixes to convert sample values from the RGB color space to the YCbCr color space and back. The following equations show one example set of YCbCr transform matrixes:

Forward:

$$\begin{bmatrix} Y \\ Cb \\ Cr \end{bmatrix} = \begin{bmatrix} 0.2126 & 0.7152 & 0.0722 \\ -0.1172 & -0.3942 & 0.5114 \\ 0.5114 & -0.4645 & -0.0469 \end{bmatrix} \begin{bmatrix} R \\ G \\ B \end{bmatrix}$$

Inverse :

$$\begin{bmatrix} R \\ G \\ B \end{bmatrix} = \begin{bmatrix} 1 & 0 & 1.5397 \\ 1 & -0.1831 & -0.4577 \\ 1 & 1.8142 & 0 \end{bmatrix} \begin{bmatrix} Y \\ Cb \\ Cr \end{bmatrix}$$

In another example, video encoder 20 and video decoder 30 may use a pair of YCoCg transform matrixes to convert sample values from the RGB color space to the YCoCg color space and back. The following equations show one example set of YCoCg transform matrixes:

Forward:

$$\begin{bmatrix} Y \\ Co \\ Cg \end{bmatrix} = \begin{bmatrix} 1/4 & 1/2 & 1/4 \\ 1/2 & 0 & -1/2 \\ -1/4 & 1/2 & -1/4 \end{bmatrix} \begin{bmatrix} R \\ G \\ B \end{bmatrix}$$

Inverse:

$$\begin{bmatrix} R \\ G \\ B \end{bmatrix} = \begin{bmatrix} 1 & 1 & -1 \\ 1 & 0 & 1 \\ 1 & -1 & -1 \end{bmatrix} \begin{bmatrix} Y \\ Co \\ Cg \end{bmatrix}$$

Another such matrix may be the YCoCg-R matrix, which is a revisable version of the YCoCg matrix which scales the Co and Cg components by a factor of two. By using a lifting technique, video encoder 20 and video decoder 30 may achieve the forward and inverse transform by the following equations:

Forward:

$$Co = R - B$$

$$t = B + \lfloor Co/2 \rfloor$$

$$Cg = G - t$$

$$Y = t + \lfloor Cg/2 \rfloor$$

$$t = Y - \lfloor Cg/2 \rfloor$$

$$G = Cg + t$$

Inverse :

$$B = t - \lfloor Co/2 \rfloor$$

$$R = B + Co$$

In the above equations and matrices, the forward transformations may be performed before the encoding process (e.g., by a video encoder). Conversely, the inverse transformations may be performed after the decoding process (e.g., by a video decoder).

A slice header for a slice contains information about the slice. For instance, a slice header for a slice may contain syntax elements from which video decoder 30 can derive quantification parameters for the slice. In HEVC, a slice segment header syntax structure corresponds to a slice header. The following table shows a portion of a slice segment header as defined in :

| slice_segment_header( ) { | Descriptor |
|---|---|
| ... | |
| **slice_qp_delta** | se(v) |
| if( pps_slice_chroma_qp_offsets_present_flag) { | |
| **slice_cb_qp_offset** | se(v) |
| **slice_cr_qp_offset** | se(v) |
| } | |
| if( chroma_qp_offset_list_enabled_flag) | |
| **cu_chroma_qp_offset_enabled_flag** | u(1) |
| ... | |
| } | |

In the example above, and other syntax tables of this disclosure, syntax elements having descriptors of the form u($n$), where $n$ is a non-negative integer, are unsigned values of length $n$. Further, the descriptor se(v) indicates a signed integer 0-th order Exp-Golomb-coded syntax element with the left bit first.

In the table above, the slice_qp_delta syntax element specifies an initial value of $Qp_Y$ to be used for the coding blocks in the slice until modified by the value of CuQpDeltaVal in the CU layer. A Qpy for a slice is a QP for luma components of blocks of the slice. The initial value of the Qpy quantization parameter for the slice, $SliceQp_Y$, may be derived as follows:

$$SliceQp_Y = 26 + init\_qp\_minus26 + slice\_qp\_delta$$

In the equation above, init_qp_minus26 is a syntax element signaled in a PPS. The init_qp_minus26 syntax element specifies the initial value minus 26 of $SliceQp_Y$ for each slice. The value of $SliceQp_Y$ may be in the range of -$QpBdOffset_Y$ to +51, inclusive. $QpBdOffset_Y$ is a variable equal to a bit_depth_luma_minus8 syntax element multiplied by 6. The bit_depth_luma_minus8 syntax element specifies the bit depth of the samples of a luma array and the value of the luma quantization parameter range offset $QpBdOffset_Y$. Video encoder 20 may signal the bit_depth_luma_minus8 syntax element in an SPS.

Another syntax element, slice_cb_qp_offset, specifies a difference to be added to the value of pps_cb_qpoffset_ (or the luma quantization parameter offset) when determining the value of the $Qp'_{Cb}$ quantization parameter. The value of slice_cb_qp_offset may be in the range of -12 to +12, inclusive. When slice_cb_qp_offset is not present, slice_cb_qp_offset is inferred to be equal to 0. The value of pps_cb_qp_offset + slice_cb_qp_offset may be in the range of -12 to +12, inclusive.

The syntax element slice_cr_qp_offset specifies a difference to be added to the value of pps_cr_qp_offset (or the luma quantization parameter offset) when determining the value of the $Qp'_{Cr}$ quantization parameter. The value of slice_cr_qp_offset may be in the range of -12 to +12, inclusive. When slice_cr_qp_**offset_**is not present, slice_cr_qp_offset may be inferred to be equal to 0. The value of pps_cr_qp_offset_+ slice_cr_qp_offset may be in the range of -12 to +12, inclusive.

When the syntax element cu_chroma_qp_offset_enabled_flag is equal to 1, the cu_chroma_qp_offset_flag may be present in the transform unit syntax. When cu_chroma_qp_offset_enabled_flag is equal to 0, the cu_chroma_qp_offset_flag may not be present in the transform unit syntax. When not present, the value of cu_chroma_qp_offset_enabled_flag is inferred to be equal to 0.

A transform unit may have syntax as follows:

| transform_ unit(x0, y0, xBase, yBase, log2TrafoSize, trafoDepth, blkIdx) { | Descriptor |
|---|---|
| log2TrafoSizeC = Max(2, log2TrafoSize - (ChromaArrayType = = 3 ? 0 : 1)) | |
| cbfDepthC = trafoDepth - (ChromaArrayType != 3 && log2TrafoSize = = 2 ? 1 : 0) [Ed. Check case with smaller max depth.] | |
| xC = (ChromaArrayType != 3 && log2TrafoSize = = 2) ? xBase : x0 | |
| yC = (ChromaArrayType != 3 && log2TrafoSize = = 2) ? yBase : y0 | |
| cbfLuma = cbf_luma[x0 ][ y0 ][trafoDepth] | |
| cbfChroma = <br>    cbf_cb[ xC ][ yC ][cbfDepthC] \|\| <br>    cbf_cr[ xC ][ yC ][cbfDepthC] \|\| <br>    (ChromaArrayType = = 2 && <br>        (cbf_cb[ xC ][ yC + (1 << log2TrafoSizeC ) ][cbfDepthC] \|\| <br>        cbf cr[ xC ][yC + (1 << log2TrafoSizeC )][cbfDepthC])) | |
| if( cbfLuma \|\| cbfChroma) { | |
|     if( cu_qp_delta_enabled_flag && !IsCuQpDeltaCoded) { | |
|         **cu_qp_delta_abs** | ae(v) |
|         if(cu_qp_delta_abs) | |
|             **cu_qp_delta_sign_flag** | ae(v) |
|     } | |
|     if(cu_chroma_qp_offset_enabled_flag && cbfChroma && !cu_transquant_bypass_flag && ! IsCuChromaQpOffsetCoded){ | |
|         **cu_chroma_qp_offset_flag** | ae(v) |
|         if(cu_chroma_qp_offset_flag && chroma qp offset list len minus 1 > 0) | |
|             **cu_chroma_qp_offset_idx** | ae(v) |
|     } | |
|     if( cbfLuma) | |
|         residual_coding( x0, y0, log2TrafoSize, 0) | |
| ... | |
|   } | |
| } | |

The syntax element cu_qp_delta_abs specifies the absolute value of the difference CuQpDeltaVal between the luma quantization parameter of the current coding unit and its prediction. In the above table, the descriptor ae(v) indicates a context-adaptive arithmetic entropy-coded syntax element.

The syntax element cu_qp_delta_sign_flag specifies the sign of CuQpDeltaVal. If cu_qp_delta_sign_flag is equal to 0, the corresponding CuQpDeltaVal has a positive value. Otherwise (cu_qp_delta_sign_flag is equal to 1), the corresponding CuQpDeltaVal has a negative value. When cu_qp_delta_sign_flag is not present, cu_qp_delta_sign_flag is inferred to be equal to 0.

When cu_qp_delta_abs is present, the variables IsCuQpDeltaCoded and CuQpDeltaVal may be derived as follows.

IsCuQpDeltaCoded = 1

$$\text{CuQpDeltaVal} = \text{cu\_qp\_delta\_abs} * ( 1 - 2 * \text{cu\_qp\_delta\_sign\_flag} )$$

The value of CuQpDeltaVal may be in the range of $-(26 + \text{QpBdOffsetY} / 2)$ to $+(25 + \text{QpBdOffsetY}/2)$, inclusive.

The syntax element cu_chroma_qp_offset_flag, when present and equal to 1, specifies that an entry in the cb_qp_offset_list[ ] is used to determine the value of CuQpOffsetCb and a corresponding entry in the cr_qp_offset_list[ ] is used to determine the value of CuQpOffsetCr. When the variable cu_chroma_qp_offset_flag is equal to 0, these lists are not used to determine the values of CuQpOffsetCb and CuQpOffsetCr.

The syntax element cu_chroma_qp_offset_idx, when present, specifies the index into the cb_qp_offset_list[ ] and cr_qp_offset_list[ ] that is used to determine the value of CuQpOffsetCb and CuQpOffsetCr. When present, the value of cu_chroma_qp_offset_idx shall be in the range of 0 to chroma_qp_offset_list_len_minus1, inclusive. When not present, the value of cu_chroma_qp_offset_idx is inferred to be equal to 0.

The case in which the cu_chroma_qp_offset_flag is not present because the cu_chroma_qp_offset_flag was already present in some other CU of the same group and the case where the flag is equal to 1 but the index is not present because the list contains only one entry may be checked. When cu chroma_qp_offset_flag is present, the variable IsCuChromaQpOffsetCoded is set equal to 1. The variables $CuQpOffset_{Cb}$ and $CuQpOffset_{Cr}$ are then derived. If cu_chroma_qp_offset_flag is equal to 1, then $CuQpOffset_{Cb}$ = cb_qp_offset_list[cu_chroma_qp_offset_idx], and $CuQpOffset_{Cr}$ = cr_qp_offset_list[cu_chroma_qp_offset_idx]. Otherwise (cu_chroma_qp_offset_flag is equal to 0), $CuQpOffset_{Cb}$ and $CuQpOffset_{Cr}$ are both set equal to 0.

In the decoding process, for the derivation process for quantization parameters, input to this process is a luma location (xCb, yCb) specifying the top-left sample of the current luma coding block relative to the top-left luma sample of the current picture. In this process, the variable $Qp_Y$, the luma quantization parameter $Qp'_Y$, and the chroma quantization parameters $Qp'_{Cb}$ and $Qp'_{Cr}$ are derived.

In accordance with techniques of this disclosure, a quantization group is a set of TUs of CU, where each of the TUs shares the same QP values. The luma location ( xQg, yQg), specifies the top-left luma sample of a current quantization group relative to the top left luma sample of the current picture. The horizontal and vertical positions xQg and yQg are set equal to xCb - (xCb & ((1 << Log2MinCuQpDeltaSize) - 1)) and yCb - (yCb & ((1 << Log2MinCuQpDeltaSize) - 1)), respectively. The luma size of a quantization group, Log2MinCuQpDeltaSize, determines the luma size of the smallest area inside a coding tree block that shares the same $qP_{Y\_PRED}$.

A video coder may derive the predicted luma quantization parameter $qP_{Y\_PRED}$ by the following ordered steps:

1) The variable $qP_{Y\_PREV}$ may be derived. If one or more of the following conditions are true, the video coder sets $qP_{Y\_PREV}$ equal to SliceQpY: The current quantization group is the first quantization group in a slice, the current quantization group is the first quantization group in a tile, or the current quantization group is the first quantization group in a coding tree block row and entropy_coding_sync_enabled_flag is equal to 1. Otherwise, $qP_{Y\_PREV}$ is set equal to the luma quantization parameter QpY of the last coding unit in the previous quantization group in decoding order.

2) The availability derivation process for a block in z-scan order is invoked with the location (xCurr, yCurr) set equal to (xCb, yCb) and the neighboring location ( xNbY, yNbY) set equal to (xQg - 1, yQg) as inputs, and the output is assigned to availableA. The variable qPY_A is derived as follows: If one or more of the following conditions are true, qPY A is set equal to $qP_{Y\_PREV}$: availableA is equal to FALSE or the coding tree block address ctbAddrA of the coding tree block containing the luma coding block covering the luma location (xQg - 1, yQg) is not equal to CtbAddrInTs, where ctbAddrA is derived as follows:

$$xTmp = ( xQg - 1 ) >> Log2MinTrafoSize$$

$$yTmp = yQg >> Log2MinTrafoSize$$

$$minTbAddrA = MinTbAddrZs[ xTmp ][ yTmp ]$$

$$ctbAddrA = ( minTbAddrA >> 2 ) * (CtbLog2SizeY - Log2MinTrafoSize)$$

Otherwise, $qP_{Y\_A}$ is set equal to the luma quantization parameter $Qp_Y$ of the coding unit containing the luma coding block covering (xQg - 1, yQg).

3) The availability derivation process for a block in z-scan order is invoked with the location (xCurr, yCurr) set equal to (xCb, yCb) and the neighboring location ( xNbY, yNbY) set equal to (xQg, yQg - 1) as inputs. The output is assigned to availableB. The variable $qP_{Y\_B}$ is derived. If one or more of the following conditions are true, $qP_{Y\_B}$ is set equal to $qP_{Y\_PREV}$: availableB is equal to FALSE or the coding tree block address ctbAddrB of the coding tree block containing the luma coding block covering the luma location (xQg, yQg - 1) is not equal to CtbAddrInTs, where ctbAddrB is derived as follows:

$$xTmp = xQg >> Log2MinTrafoSize$$

$$yTmp = ( yQg - 1 ) >> Log2MinTrafoSize$$

$$minTbAddrB = MinTbAddrZs[ xTmp ][ yTmp ]$$

$$ctbAddrB = ( minTbAddrB >> 2 ) * (CtbLog2SizeY - Log2MinTrafoSize)$$

Otherwise, $qP_{Y\_B}$ is set equal to the luma quantization parameter $Qp_Y$ of the CU containing the luma coding block covering (xQg, yQg - 1).
4) The predicted luma quantization parameter $qP_{Y\_PRED}$ may be derived as follows:

$$qP_{Y\_PRED} = ( qP_{Y\_A} + qP_{Y\_B} + 1 ) >> 1$$

The variable $Qp_Y$ may be derived as follows:

$$Qp_Y = ( ( qP_{Y\_PRED} + CuQpDeltaVal + 52 + 2 * QpBdOffset_Y )\%( 52 + QpBdOffset_Y ) ) - QpBdOffset_Y$$

The luma quantization parameter $Qp'_Y$ may be derived as follows:

$$Qp'_Y = Qp_Y + QpBdOffset_Y$$

When ChromaArrayType is not equal to 0, the variables $qPi_{Cb}$ and $qPi_{Cr}$ are derived as follows:

$$qPi_{Cb} = Clip3( -QpBdOffset_C, 57, Qp_Y + pps\_cb\_qp\_offset + slice\_cb\_qp\_offset + CuQpOffset_{Cb} )$$

$$qPi_{Cr} = Clip3( -QpBdOffset_C, 57, Qp_Y + pps\_cr\_qp\_offset + slice\_cr\_qp\_offset + CuQpOffset_{Cr} )$$

If ChromaArrayType is equal to 1, the variables $qP_{Cb}$ and $qP_{Cr}$ are set equal to the value of $Qp_C$ based on the index qPi equal to $qPi_{Cb}$ and $qPi_{Cr}$, respectively. Otherwise, the variables $qP_{Cb}$ and $qP_{Cr}$ are set equal to Min(qPi, 51), based on the index qPi equal to $qPi_{Cb}$ and $qPi_{Cr}$ respectively.
The chroma quantization parameters for the Cb and Cr components, $Qp'_{Cb}$ and $Qp'_{Cr}$, are derived as follows:

$$Qp'_{Cb} = qP_{Cb} + QpBdOffset_C$$

$$Qp'_{Cr} = qP_{Cr} + QpBdOffset_C$$

The specification of $Qp_c$ as a function of qPi for ChromaArrayType equal to 1 is as follows:

| qPi | < 30 | 30 | 31 | 32 | 33 | 34 | 35 | 36 | 37 | 38 | 39 | 40 | 41 | 42 | 43 | > 43 |
|---|---|---|---|---|---|---|---|---|---|---|---|---|---|---|---|---|
| $Qp_c$ | = qPi | 29 | 30 | 31 | 32 | 33 | 33 | 34 | 34 | 35 | 35 | 36 | 36 | 37 | 37 | = qPi - 6 |

In the dequantization process, the quantization parameter qP for each component index (cIdx) is derived. If cIdx is equal to 0, qP = $Qp'_Y$. Otherwise, if cIdx is equal to 1, qP = $Qp'_{Cb}$. Otherwise (cIdx is equal to 2), qP = $Qp'_C$. In the deblocking filter process, the luma/chroma edges are firstly determined which are dependent on the $Qp_Y$. Sub-clause 8.7.2.5.3 and 8.7.2.5.5 of HEVC provide details of the deblocking filter process.

U.S. Provisional Patent Application 61/981,645, filed April 18, 2014, defines in-loop color transform formulas, such as a normalized YCgCo transform and a YCgCo transform with bit-depth increment. In addition, U.S. Provisional Patent Application 61/981,645 described that the color transform can be applied to the residual domain for intra modes, that is, after prediction process before conventional transform/quantization process. Moreover, U.S. Provisional Patent Application 61/981,645 pointed out that different color components may use different delta QPs for blocks which are coded with color transform based on the norm of the transform.

The video coding techniques of U.S. Provisional Patent Application 61/981,645 may be improved in several ways. For instance, the fixed delta QP settings for the three color components may be not optimal for all cases, such as all intra/random access/low delay. Further, when using the non-normalized YCgCo transform with bit-depth increment, the transform results in the bit-width increase for the normal transform which increases the cost for hardware implementation. Conversely, if the normal transform is kept unchanged, it may result in overflow for some cases due to the increased precision of the input residual data.

The techniques of this disclosure provide solutions to improve the coding performance of in-loop color-space transform and reduce the decoder complexity compared to the previous designs. A video coder, such as video encoder 20 or video decoder 30, may perform any of the techniques as described with relation to FIGS. 1-11.

In some examples, the set of delta values of QPs for the three color components decoded are denoted by $(deltaQP_{C0}, deltaQP_{C1}, deltaQP_{C2})$, which indicate the offset of QPs for blocks with color transform enabled compared to qP determined with color transform not enabled. For blocks coded with color transform enabled, the final QP used in the dequantization process is set to $qP + deltaQP_{C0}$, $qP + deltaQP_{C1}$, $qP + deltaQP_{C2}$ for the three color components with component index cIdx equal to 0, 1, 2, respectively. qP is the output of the conventional QP derivation process. In some examples, $deltaQP_{C0}$ is equal to $deltaQP_{C1}$, while both $deltaQP_{C0}$ and $deltaQP_{C1}$ are smaller than $deltaQP_{C2}$.

For instance, video encoder 20 may encode a CU of the video data. In encoding the video data, video encoder 20 may determine to encode the CU using a color space conversion. For a color component, video encoder 20 may determine an initial QP for the color component and set a final QP for the color component based on the CU being encoded using the color space conversion such that the final QP for the color component is equal to a sum of the initial QP of the color component and a non-zero QP offset for the color component. Video encoder 20 may quantize, based on the final QP for the color component, a coefficient block for the CU, the coefficient block for the CU being based on sample values of the color component. Once each coefficient has been quantized, video encoder 20 may further output the encoded CU based on the quantized coefficient blocks for the CU in an encoded bitstream.

In another example, video decoder 30 may decode a CU of the video data. In decoding the video data, video decoder 30 may determine that the CU was encoded using a color space conversion. For a color component, video decoder 30 may determine an initial QP for the color component and determine a final QP for the color component based on the CU being encoded using the color space conversion, such that the final QP for the color component is equal to a sum of the initial QP of the color component and a non-zero QP offset for the color component. Video decoder 30 may inverse quantize, based on the final QP for the color component, a coefficient block for the CU, the coefficient block for the CU being based on sample values of the color component. Once each coefficient block has been inverse quantized, video decoder 30 may reconstruct the CU based on the inverse quantized coefficient blocks for the CU.

In some examples, for the color component of the one or more color components, the QP offset for the color component may be signaled in one of a PPS, a SPS, or a slice header. In some further examples, the plurality of color components may comprise three color components. In such examples, a first QP offset for a first quantization parameter for a first color component is equal to a second QP offset for a second QP for a second color component, the first QP offset (and the second quantization parameter offset) is less than a third QP offset for a third QP for a third color component.

Accordingly, in some examples, the CU is a first CU. In such examples, video encoder 20 may encode a second CU. In encoding the second CU, video encoder 20 may, for the color component, determine a QP for the color components, set a final QP value for the color component based on the second CU not being encoded using the color space conversion such that the final QP value for the color component is equal to the initial QP value of the color component, and quantize, based on the final QP for the color component, a coefficient block of the second CU, the coefficient block of the second CU based on sample values of the color component. Video encoder 20 may further output the video data bitstream comprising a second set of one or more entropy encoded syntax elements representative of each of the quantized second coefficient blocks.

In decoding this example, video decoder 30 may decode a second CU. In decoding the second CU, video decoder 30 may, for a color component of the plurality of color components, determine a QP for the color components, determine a final QP value for the color component based on the second CU not being encoded using the color space conversion such that the final QP value for the color component is equal to the initial QP value of the color component, and inverse quantize, based on the final QP for the color component, a coefficient block of the second CU, the coefficient block of the second CU based on sample values of the color component. Video decoder 30 may reconstruct the second CU based on each of the one or more inverse quantized coefficient blocks of the second CU.

Instead of using one fixed set of delta QPs for all modes, the settings of delta QPs for the three color component may be mode-dependent. In one example, intra and Intra BC modes may share the same set of (deltaQP$_{C0}$, deltaQP$_{C1}$, deltaQP$_{C2}$) while inter modes may share another set of (deltaQP$_{C0}$, deltaQP$_{C1}$, deltaQP$_{C2}$) which is not identical to the one used by intra and Intra BC modes. In another example, intra modes may share the same set of (deltaQP$_{C0}$, deltaQP$_{C1}$, deltaQP$_{C2}$) while Intra BC mode and inter modes may share another set of (deltaQP$_{C0}$, deltaQP$_{C1}$, deltaQP$_{C2}$) which is not identical to the one used by intra modes. In some examples, the set of delta QPs (deltaQP$_{C0}$, deltaQP$_{C1}$, deltaQP$_{C2}$) could be (-4 + 6*BitInc, -4+ 6*BitInc, -3+ 6*BitInc), (-4+ 6*BitInc, -4+ 6*BitInc, -2+ 6*BitInc), (-5+ 6*BitInc, -5+ 6*BitInc, -3+ 6*BitInc) or (-5+ 6*BitInc, -5+ 6*BitInc, -2+ 6*BitInc) wherein BitInc may be 0, 1, 2.

In other words, in some examples, the plurality of color components comprises three color components. In such examples, the quantization parameter offsets may be equal to (-5 + 6*BitInc, -5+ 6*BitInc, -3+ 6*BitInc). In other such examples, the quantization parameter offsets may be equal to other values, such as (-4 + 6*BitInc, -4+ 6*BitInc, -3+ 6*BitInc), (-4+ 6*BitInc, -4+ 6*BitInc, -2+ 6*BitInc), or (-5+ 6*BitInc, - 5+ 6*BitInc, -2+ 6*BitInc). In any case, BitInc may be equal to 0, 1, or 2.

An I-slice is a slice that may contain only intra coded blocks or Intra BC coded blocks. A P-slice is a slice that may contain only intra coded and uni-directionally inter predicted blocks. A B-slice is a slice that may contain intra predicted blocks, uni-directionally inter predicted blocks, and bi-directionally inter predicted blocks. In some examples, instead of using one fixed set of delta QPs for all modes, the settings of delta QPs for the three color component may be dependent on the slice types. In one example, the I-slices may share the same set while P/B-slices share the same set. In another example, different sets may be applied to I/P/B slices. Furthermore, in some examples, the set of delta QPs may be signaled in an SPS, a PPS, or a slice header.

In other words, in some examples, for the color components of the plurality of color components, the QP offset for the color component may be dependent on whether a slice type of the CU an I-slice type, a P-slice type, or a B-slice type. In such examples, for the color component, video encoder 20 may determine that the QP offset for the color component is equal to a first value when the slice type of the CU is the I-slice type and equal to a second value when the slice type of the CU is the P-slice type or the B-slice type, the first value being different from the second value. In other such examples, for the color component, video encoder 20 may determine that the QP offset for the color component is equal to a first value when the slice type of the CU is the I-slice type, equal to a second value when the slice type of the CU is the P-slice type, and equal to a third value when the slice type of the CU is the B-slice type, the first value being different from the second value, the second value being different from the third value, and the first value being different from the third value.

In other examples, for the color components of the plurality of color components, the QP offset for the color component may be dependent on whether a slice type of the CU an I-slice type, a P-slice type, or a B-slice type. In such examples, for the color component, video decoder 30 may determine that the QP offset for the color component is equal to a first value when the slice type of the CU is the I-slice type and equal to a second value when the slice type of the CU is the P-slice type or the B-slice type, the first value being different from the second value. In other such examples, for the color component, video decoder 30 may determine that the QP offset for the color component is equal to a first value when the slice type of the CU is the I-slice type, equal to a second value when the slice type of the CU is the P-slice type, and equal to a third value when the slice type of the CU is the B-slice type, the first value being different from the second value, the second value being different from the third value, and the first value being different from the third value.

In some examples, when the data dynamic range is increased due to the color transform, a video coder may clip the transformed residual into the same range as those residuals before color transform. For example, if the input data is in N-bit precision, the residual after intra/inter prediction may be in the range of $[-2^N, 2^N - 1]$ (or more precisely, in the range of $[-2^N - 1, 2^N - 1]$). After applying the color transform, the transformed residual may also be clipped to the same range. In some examples, when the coded block flag of three color components are all equal to 0, the inverse color transform may be skipped.

In some examples, when the color transform is applied, the conventionally derived $Qp_Y$ may be further modified to ($Qp_Y$ + deltaQP$_{C0}$). Therefore, in the deblocking filter process, the boundary strength of luma/chroma edges may be firstly determined which are dependent on the modified $Qp_Y$. Alternatively, the unmodified $Qp_Y$ may be used in the boundary strength of luma/chroma edges of deblocking filter process.

In other words, in some examples, the plurality of color components includes a luma component and one or more chroma components. In such examples, video encoder 20 may further determine, based at least in part on the final QP for the luma component, a boundary strength of a luma edge. Video encoder 20 may further determine, based at least in part on the final QP for the chroma component, a boundary strength of a chroma edge. In response to determining that the boundary strength of the luma edge does not meet a first threshold, video encoder 20 may perform a deblocking filtering process on the luma edge. Further, in response to determining that the boundary strength of the chroma edge does not meet a second threshold, video encoder 20 may perform the deblocking filtering process on the chroma edge.

In other examples, the plurality of color components includes a luma component and one or more chroma components. In such examples, video decoder 30 may further determine, based at least in part on the final QP for the luma component, a boundary strength of a luma edge. Video decoder 30 may further determine, based at least in part on the final QP for the chroma component, a boundary strength of a chroma edge. In response to determining that the boundary strength of the luma edge does not meet a first threshold, video decoder 30 may perform a deblocking filtering process on the luma edge. Further, in response to determining that the boundary strength of the chroma edge does not meet a second threshold, video decoder 30 may perform the deblocking filtering process on the chroma edge.

In some examples, a constraint may be added in the specification that when color transform is enabled for one CU and the CU is coded with intra mode, all the PUs within the CU shall use the direct mode (DM). When a PU is encoded using direct mode, video encoder 20 does not signal motion information syntax elements, but may signal syntax elements representing residual data. In other words, the chroma prediction mode may be the same as the luma prediction mode. Alternatively, furthermore, when color transform is enabled for one CU, pcm flag shall be equal to 0.

In other words, in some examples, input data of the color space conversion has N-bit precision. In such examples, residual data for the CU after intra/inter prediction may be in a range of $[-2^N, 2^N - 1]$. In some other examples, in response to determining that the CU is coded with an intra coding mode, video encoder 20 may further predict all chroma blocks of the CU using a same chroma prediction mode. In such examples, video encoder 20 may further predict all luma blocks of the CU using a same luma prediction mode. The same luma prediction mode may be the same as the same chroma prediction mode. In another example, one CU may contain four luma blocks. In such examples, each luma block may be coded with its own luma prediction mode, and the luma prediction mode of the top-left luma block within the CU may be the same as the same chroma prediction mode.

In other examples, input data of the color space conversion has N-bit precision. In such examples, residual data for the CU after intra/inter prediction may be in a range of $[-2^N, 2^N - 1]$. In some other examples, in response to determining that the CU is coded with an intra coding mode, video decoder 30 may further predict all chroma blocks of the CU using a same chroma prediction mode. In such examples, video decoder 30 may further predict all luma blocks of the CU using a same luma prediction mode. The same luma prediction mode may be the same as the same chroma prediction mode. In another example, one CU may contain four luma blocks. In such examples, each luma block may be coded with its own luma prediction mode, and the luma prediction mode of the top-left luma block within the CU may be the same as the same chroma prediction mode.

Video encoder 20 may further send syntax data, such as block-based syntax data, frame-based syntax data, and GOP-based syntax data, to video decoder 30, e.g., in a frame header, a block header, a slice header, or a GOP header. The GOP syntax data may describe a number of frames in the GOP, and the frame syntax data may indicate an encoding/prediction mode used to encode the corresponding frame.

This disclosure also includes techniques to address additional issues related to the signaling of quantization parameters and the use of quantization parameters in deblock filtering processses in conjunction with adaptive color-space conversion. For example, this disclosure includes techniques for configuring video encoder 20 and video decoder 30 to operate in the coding scenarios where the color transform flag is not present for a block, such as in the scenario where rqt_root_cbf is equal to 0 and there are no non-zero coefficients in a transform block. Additionally, this disclosure includes techniques for signaling delta QP values, from video encoder 20 to video decoder 30, in the coding scenario where color transform is enabled for one sequence, or picture, or slice. Accordingly, this disclosure provides some potential solutions to improve the coding performance associated with in-loop color-space transform.

For purposes of explanation, this disclosure will denote the set of delta values of quantization parameters (QPs) for the three color components (i.e. R, G, and B) as $deltaQP_{C0}$, $deltaQP_{C1}$, and $deltaQP_{C2}$, which indicate the offset of QPs for blocks with color transform enabled. For luma and chroma quantiazatio paramters, as determined in the manner described above, the abbreviation qP will be used.

According to the techniques of this disclosure, for blocks coded with color transform enabled, the final QP used in the dequantization process and/or deblocking filter process is modified to be $qP_0 + deltaQP_{C0}$, $qP_1 + deltaQP_{C1}$, $qP_2 + deltaQP_{C2}$ for the three color components. $qP_{cIdx}$ is the output of the conventional QP derivation process, as defined in sub-clause 8.6.1 of HEVC range extension working draft 7 (RExt WD7) with cIdx equal to 0, 1, 2 as inputs.

According to one technique of this disclosure, if the color transform flag is not present for a block, then video encoder 20 and/or video decoder 30 treat the block as if color transform is disabled during the deblocking filter process. The color transform flag may, for example, not be present when rqt_root_cbf is equal to 0 for an inter or intraBC mode or when the block is coded with conventional intra modes, but the chroma mode is unequal to DM mode. When a chroma block is coded using the dictionary mode, the chroma block has the same prediction modes as the luma prediction unit when the partition size is equal to 2Nx2N, or as the top-left luma prediction unit when the partition size is equal to NxN. It is noted that one intra-coded CU can have one luma prediction mode (partition size is equal to 2Nx2N) or four luma prediction modes (partition size is equal to NxN) while intra-coded CU can only have one chroma prediction mode regardless partition size. In HEVC screen content coding, the color transform flag is only signaled when the chroma mode is equal to dictionary mode.

According to another technique of this disclosure, when the color transform flag is not present for a block, video encoder 20 and video decoder 30 may be configured to treat the block as if color transform is enabled during the deblocking filter process. In such instances, video encoder 20 and video decoder 30 may be configured to use modified QPs (including the delta QPs) during the determination of boundary strength for a deblock filtering process. Video encoder 20 and/or video decoder 30 may first determine the boundary strength of luma/chroma edges, which may be dependent on modified QPs.

In one example, if video encoder 20 and/or video decoder 30 treat one block as having color transform enabled, then video encoder 20 and/or video decoder 30 may use ($qP + deltaQP_{C0}$, $qP + deltaQP_{C1}$, $qP + deltaQP_{C2}$) in the determination of boundary strength of luma/chroma edges which may be the same as what are used in the dequantization process.

Alternatively, for the blocks coded with color transform enabled, video encoder 20 and/or video decoder 30 may use different quantization parameters in dequantization and deblocking filter processes. For example, video encoder 20 and/or video decoder 30 may use ($qP_0 + deltaQP_{C0}$, $qP_1 + deltaQP_{C0}$, $qP_2 + deltaQP_{C0}$) in the determination of boundary strength of luma/chroma edges while using ($qP_0 + deltaQP_{C0}$, $qP_1 + deltaQP_{C1}$, $qP_2 + deltaQP_{C2}$) in the dequantization process. Alternatively, video encoder 20 and/or video decoder 30 may use the modified quantization parameter for only one component. For example, if one block is coded/treated as using color transform, then video encoder 20 and/or video decoder 30 may use ($qP_0 + deltaQP_{C0}$, $qP_1$, $qP_2$).

In another example, when a block is coded using an intra mode not a DM mode, video encoder 20 and/or video decoder 30 may treat the block is treated as using the color transform during the deblocking process. That is, the modified QPs (i.e., including the delta QPs) are used during the determination of boundary strength. In another example, whether to treat the block as using color transform or not in the deblocking filter process may be sequence type dependent. For example, for RGB coding, video encoder 20 and/or video decoder 30 may use code a block as using color transform as it is preferred for more blocks to select color transform, while for YCbCr coding, video encoder 20 and/or video decoder 30 treat the block as having color transform.

According to another example of the techniques of this disclosure, when a color transform flag is not present for one block, whether video encoder 20 and/or video decoder 30 treats the block as using color transform or not in the deblocking filter process may be mode dependent. In one example, for blocks coded with intraBC and inter modes, when rqt_root_cbf is equal to 0 for inter or intraBC modes, i.e., there are no non-zero coefficients, video encoder 20 and/or video decoder 30 treat the block as using color transform. While for intra modes, if the color transform flag is not present, video encoder 20 and/or video decoder 30 treat the block as having color transform disabled.

In another example, when color transform flag is not present for one block, video encoder 20 and/or video decoder 30 determine whether to treat the block as having color transform enabled or disabled, for the deblocking filter process, as dependent on the format of input sequences. In one example, for sequences in RGB format, video encoder 20 and/or video decoder 30 treats the block as having color transform enabled. In another example, for sequences in YUV/YCbCr format, video encoder 20 and/or video decoder 30 treats the block as having color transform disabled.

According to an embodiment of the invention, even when the modified QPs are used in dequantization and/or deblocking filter processes, video encoder 20 and/or video decoder 30 may still use the unmodified QPs as the predictor for the following coded CUs. For example, regardless of whether a first block is encoded using a color-space transform mode, and hence, regardless of whether transform coefficients of the first block are dequantized using a modified quantization parameter, video encoder 20 signals, to video decoder 30, the quantization parameter for the second block as a difference between the unmodified quantization parameter for the first block and the unmodifed quantization parameter for the second block.

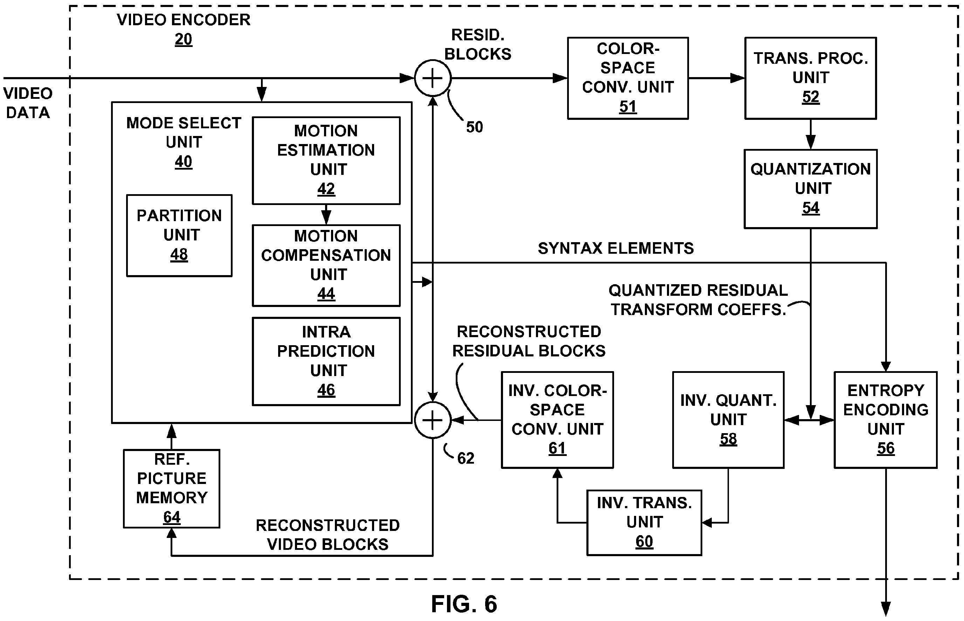

FIG. 6 is a block diagram illustrating an example of video encoder 20 that may implement techniques for encoding video blocks using a color-space conversion process. Video encoder 20 may perform intra- and inter coding of video blocks within video slices. Intra-coding relies on spatial prediction to reduce or remove spatial redundancy in video within a given video frame or picture. Inter coding relies on temporal prediction to reduce or remove temporal redundancy in video within adjacent frames or pictures of a video sequence. Intra-mode (I mode) may refer to any of several spatial based coding modes. Inter modes, such as uni-directional prediction (P mode) or bi-prediction (B mode), may refer to any of several temporal-based coding modes.

As shown in FIG. 6, video encoder 20 receives a current video block within a video frame to be encoded. In the example of FIG. 6, video encoder 20 includes mode select unit 40, reference picture memory 64, summer 50, transform processing unit 52, quantization unit 54, and entropy encoding unit 56. Mode select unit 40, in turn, includes motion compensation unit 44, motion estimation unit 42, intra prediction unit 46, and partition unit 48. Mode select unit 40 may also include other units based on the selected mode, such as an Intra BC mode module. For video block reconstruction, video encoder 20 also includes inverse quantization unit 58, inverse transform unit 60, and summer 62. A deblocking filter (not shown in FIG. 6) may also be included to filter block boundaries to remove blockiness artifacts from reconstructed video. In typical examples, summer 62 receives the output of the deblocking filter. Additional filters (in loop or post loop) may also be used in addition to the deblocking filter. Such filters are not shown for brevity, but if desired, may filter the output of summer 50 (as an in-loop filter).

During the encoding process, video encoder 20 receives a video frame or slice to be encoded. The frame or slice may be divided into multiple video blocks. Motion estimation unit 42 and motion compensation unit 44 perform inter predictive coding of a video block based on one or more blocks in one or more reference frames to provide temporal prediction. Video encoder 20 may perform multiple coding passes, e.g., to select an appropriate coding mode for each block of video data.

Motion estimation unit 42 and motion compensation unit 44 may be highly integrated, but are illustrated separately for conceptual purposes. Motion estimation, performed by motion estimation unit 42, is the process of generating motion vectors, which estimate motion for video blocks. A motion vector, for example, may indicate the displacement of a PU of a video block within a current video frame or picture relative to a predictive block within a reference frame (or other coded unit) relative to the current block being coded within the current frame (or other coded unit). A predictive block is a block that is found to closely match the block to be coded, in terms of pixel difference, which may be determined by sum of absolute difference (SAD), sum of square difference (SSD), or other difference metrics. In some examples, video encoder 20 may calculate values for sub-integer pixel positions of reference pictures stored in reference picture memory 64. For example, video encoder 20 may interpolate values of one-quarter pixel positions, one-eighth pixel positions, or other fractional pixel positions of the reference picture. Therefore, motion estimation unit 42 may perform a motion search relative to the full pixel positions and fractional pixel positions and output a motion vector with fractional pixel precision.

Motion estimation unit 42 calculates a motion vector for a PU of a video block in an inter coded slice by comparing the position of the PU to the position of a predictive block of a reference picture. The reference picture may be selected from a first reference picture list (List 0) or a second reference picture list (List 1), each of which identify one or more reference pictures stored in reference picture memory 64. Motion estimation unit 42 sends the calculated motion vector to entropy encoding unit 56 and motion compensation unit 44.

Motion compensation, performed by motion compensation unit 44, may involve fetching or generating the predictive block based on the motion vector determined by motion estimation unit 42. Again, motion estimation unit 42 and motion compensation unit 44 may be functionally integrated, in some examples. Upon receiving the motion vector for the PU of the current video block, motion compensation unit 44 may locate the predictive block to which the motion vector points in one of the reference picture lists. Summer 50 may form a residual video block by subtracting pixel values of the predictive block from the pixel values of the current video block being coded, forming pixel difference values, as discussed below. In general, motion estimation unit 42 performs motion estimation relative to luma components, and motion compensation unit 44 uses motion vectors calculated based on the luma components for both chroma components and luma components. Mode select unit 40 may also generate syntax elements associated with the video blocks and the video slice for use by video decoder 30 in decoding the video blocks of the video slice.

Intra prediction unit 46 may intra predict a current block, as an alternative to the inter prediction performed by motion estimation unit 42 and motion compensation unit 44, as described above. In particular, intra prediction unit 46 may determine an intra prediction mode to use to encode a current block. In some examples, intra prediction unit 46 may encode a current block using various intra prediction modes, e.g., during separate encoding passes, and intra prediction unit 46 (or mode select unit 40, in some examples) may select an appropriate intra prediction mode to use from the tested modes.

For example, intra prediction unit 46 may calculate rate-distortion values using a rate-distortion analysis for the various tested intra prediction modes, and select the intra prediction mode having the best rate-distortion characteristics among the tested modes. Rate-distortion analysis generally determines an amount of distortion (or error) between an encoded block and an original, unencoded block that was encoded to produce the encoded block, as well as a bitrate (that is, a number of bits) used to produce the encoded block. Intra prediction unit 46 may calculate ratios from the distortions and rates for the various encoded blocks to determine which intra prediction mode exhibits the best rate-distortion value for the block.

After selecting an intra prediction mode for a block, intra prediction unit 46 may provide information indicative of the selected intra prediction mode for the block to entropy encoding unit 56. Entropy encoding unit 56 may encode the information indicating the selected intra prediction mode. Video encoder 20 may include in the transmitted bitstream configuration data, which may include a plurality of intra prediction mode index tables and a plurality of modified intra prediction mode index tables (also referred to as codeword mapping tables), definitions of encoding contexts for various blocks, and indications of a most probable intra prediction mode, an intra prediction mode index table, and a modified intra prediction mode index table to use for each of the contexts.

Intra prediction unit 46 may perform intra predictive coding of the video block based on one or more neighboring blocks in the same frame or slice as the block to be coded to provide spatial prediction. Moreover, partition unit 48 may partition blocks of video data into sub-blocks, based on evaluation of previous partitioning schemes in previous coding passes. For example, partition unit 48 may initially partition a frame or slice into LCUs, and partition each of the LCUs into sub-CUs based on rate-distortion analysis (e.g., rate-distortion optimization). Mode select unit 40 may further produce a quadtree data structure indicative of partitioning of an LCU into sub-CUs. Leaf-node CUs of the quadtree may include one or more PUs and one or more TUs.

Mode select unit 40 may select one of the coding modes, intra or inter, e.g., based on error results, and may provide the resulting intra- or inter coded block to summer 50 to generate residual block data and to summer 62 to reconstruct the encoded block for use as a reference frame. Mode select unit 40 also provides syntax elements, such as intra-mode indicators, partition information, and other such syntax information, to entropy encoding unit 56.

Video encoder 20 may form a residual video block by subtracting the prediction data from mode select unit 40 from the original video block being coded. Summer 50 represents the component or components that perform this subtraction operation. Transform processing unit 52 applies a transform, such as a discrete cosine transform (DCT) or a conceptually similar transform, to the residual block, producing a video block comprising residual transform coefficient values. Transform processing unit 52 may perform other transforms which are conceptually similar to DCT. Wavelet transforms, integer transforms, sub-band transforms or other types of transforms could also be used. In any case, transform processing unit 52 applies the transform to the residual block, producing a block of residual transform coefficients. The transform may convert the residual information from a pixel value domain to a transform domain, such as a frequency domain. Transform processing unit 52 may send the resulting transform coefficients to quantization unit 54. Quantization unit 54 quantizes the transform coefficients to further reduce bit rate. The quantization process may reduce the bit depth associated with some or all of the coefficients. The degree of quantization may be modified by adjusting a quantization parameter. In some examples, quantization unit 54 may then perform a scan of the matrix including the quantized transform coefficients. Alternatively, entropy encoding unit 56 may perform the scan.

Following quantization, entropy encoding unit 56 entropy codes the quantized transform coefficients. For example, entropy encoding unit 56 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy coding technique. In the case of context-based entropy coding, context may be based on neighboring blocks. Following the entropy coding by entropy encoding unit 56, the encoded bitstream may be transmitted to another device (e.g., video decoder 30) or archived for later transmission or retrieval.

In accordance with techniques of this disclosure, entropy encoding unit 56 of video encoder 20 may perform one or more techniques of the current disclosure. For example, entropy encoding unit 56 of video encoder 20 may encode a CU of the video data. In encoding the video data, color-space conversion unit 51 may determine whether to encode the CU using a color space conversion. For a color component, quantization unit 54 may determine an initial QP for the color component and set a final QP for the color component based on the CU being encoded using the color space conversion such that the final QP for the color component is equal to a sum of the initial QP of the color component and a non-zero QP offset for the color component. Quantization unit 54 may quantize, based on the final QP for the color component, a coefficient block for the CU, the coefficient block for the CU being based on sample values of the color component. Once each coefficient has been quantized, entropy encoding unit 56 may further output a video data bitstream comprising one or more entropy encoded syntax elements representative of each of the quantized coefficient blocks.

Inverse quantization unit 58 and inverse transform unit 60 apply inverse quantization and inverse transformation, respectively, to reconstruct the residual block in the pixel domain, e.g., for later use as a reference block. Motion compensation unit 44 may calculate a reference block by adding the residual block to a predictive block of one of the frames of reference picture memory 64. Motion compensation unit 44 may also apply one or more interpolation filters to the reconstructed residual block to calculate sub-integer pixel values for use in motion estimation. Summer 62 adds the reconstructed residual block to the motion compensated prediction block produced by motion compensation unit 44 to produce a reconstructed video block for storage in reference picture memory 64. The reconstructed video block may be used by motion estimation unit 42 and motion compensation unit 44 as a reference block to inter code a block in a subsequent video frame.

Video encoder 20 represents an example of a video encoder configured to determine a quantization parameter for a first block of video data; in response to determining that the first block of video data is coded using a color-space transform mode for residual data of the first block, modify the quantization parameter for the first block; perform a quantization process for the first block based on the modified quantization parameter for the first block; determine a quantization parameter for a second block of video data; and signal a difference value between the quantization parameter for the first block and the quantization parameter for the second block.

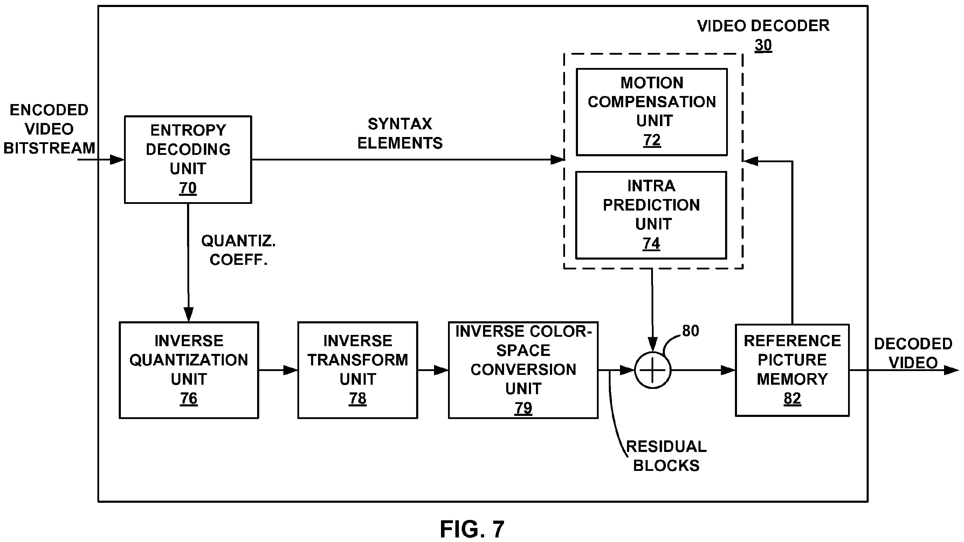

FIG. 7 is a block diagram illustrating an example of video decoder 30 that may implement techniques for decoding video blocks, some of which were encoded using a color-space conversion process. In the example of FIG. 7, video decoder 30 includes an entropy decoding unit 70, motion compensation unit 72, intra prediction unit 74, inverse quantization unit 76, inverse transformation unit 78, reference picture memory 82 and summer 80. Video decoder 30 may also include other units such as Intra BC unit. Video decoder 30 may, in some examples, perform a decoding pass generally reciprocal to the encoding pass described with respect to video encoder 20 (FIG. 6). Motion compensation unit 72 may generate prediction data based on motion vectors determined from syntax elements received from entropy decoding unit 70, while intra prediction unit 74 may generate prediction data based on intra prediction mode indicators received from entropy decoding unit 70. In some examples, intra prediction unit 74 may infer some intra prediction mode indicators.

During the decoding process, video decoder 30 receives an encoded video bitstream that represents video blocks of an encoded video slice and associated syntax elements. Entropy decoding unit 70 of video decoder 30 entropy decodes the bitstream to generate quantized coefficients, motion vectors or intra prediction mode indicators, and other syntax elements. Entropy decoding unit 70 forwards the syntax elements to motion compensation unit 72.

In accordance with techniques of this disclosure, video decoder 30 may perform one or more techniques of the current disclosure. For example, entropy decoding unit 70 of video decoder 30 may decode a coding unit (CU) of the video data. In decoding the video data, inverse color-space conversion unit 79 of video decoder 30 may determine that the CU was encoded using a color space conversion. For a color component, inverse quantization unit 76 of video decoder 30 may determine an initial quantization parameter (QP) for the color component and determine a final QP for the color component based on the CU being encoded using the color space conversion, such that the final QP for the color component is equal to a sum of the initial QP of the color component and a non-zero QP offset for the color component. Inverse quantization unit 76 of video decoder 30 may inverse quantize, based on the final QP for the color component, a coefficient block for the CU, the coefficient block for the CU being based on sample values of the color component. Once each coefficient block has been inverse quantized, summer 80 of video decoder 30 may reconstruct the coding unit based on the inverse quantized coefficient blocks for the CU.

Intra prediction unit 74 may use an intra prediction mode to generate a predictive block when the slice is an I slice, a P slice, or a B slice. In other words, you can have an intra predicted block in a slice that allows uni- or bi-directional inter prediction. When the video frame is coded as an inter coded (i.e., B, P or GPB) slice, motion compensation unit 72 produces predictive blocks for a video block of the current video slice based on the motion vectors and other syntax elements received from entropy decoding unit 70. The predictive blocks may be produced from one of the reference pictures within one of the reference picture lists. Video decoder 30 may construct the reference picture lists, List 0 and List 1, using default construction techniques based on reference pictures stored in reference picture memory 82. Motion compensation unit 72 determines prediction information for a video block of the current video slice by parsing the motion vectors and other syntax elements, and uses the prediction information to produce the predictive blocks for the current video block being decoded. For example, motion compensation unit 72 uses some of the received syntax elements to determine a prediction mode (e.g., intra or inter prediction) used to code the video blocks of the video slice, an inter prediction slice type (e.g., B slice, P slice, or GPB slice), construction information for one or more of the reference picture lists for the slice, motion vectors for each inter encoded video block of the slice, inter prediction status for each inter coded video block of the slice, and other information to decode the video blocks in the current video slice.

Inverse quantization unit 76 inverse quantizes, i.e., dequantizes, the quantized transform coefficients provided in the bitstream and decoded by entropy decoding unit 70. The inverse quantization process may include use of a quantization parameter QPy calculated by video decoder 30 for each video block in the video slice to determine a degree of quantization and, likewise, a degree of inverse quantization that should be applied.

Video decoder 30 represents an example of a video decoder that may be configured to receive a first block of the video data; receive information to determine a quantization parameter for the first block; in response to determining that the first block is coded using a color-space transform mode for residual data of the first block, modify the quantization parameter for the first block; perform a dequantization process for the first block based on the modified quantization parameter for the first block; receiving a second block of the video data; receive for the second block, a difference value indicating a difference between a quantization parameter for the second block and the quantization parameter for the first block; determine the quantization parameter for the second block based on the received difference value and the quantization parameter for the first block; and decode the second block based on the determined quantization parameter for the second block. Video decoder 30 may also determine a boundary strength parameter for a deblock filtering process based on the modified quantization parameter for the first block and perform the deblock filtering process on the first block.

In response to determining that the color-space transform mode is enabled for the second block of video data, video decoder 30 may modify the determined quantization parameter for the second block, and decode the second block based on the determined quantization parameter for the second block by performing a dequantization process for the second block based on the modified quantization parameter for the second block. Video decoder 30 may also decode the second block based on the determined quantization parameter for the second block by, in response to determining that the color-space transform mode is disabled for the second block, performing a dequantization process for the second block based on the determined quantization parameter for the second block.

Video decoder 30 may receive a flag for the first block to determine that the first block of video data is coded using the color-space transform mode for residual data of the first block. Video decoder 30 may receive information to determine the quantization parameter for the first block by receiving an initial value for the quantization parameter for the first block. Video decoder 30 may receive the initial value at a slice level. Video decoder 30 may receive, at a coded unit level, the difference value indicating the difference between the quantization parameter for the second block and the quantization parameter for the first block. To receive the difference value indicating the difference between the quantization parameter for the second block and the quantization parameter for the first block, video decoder 30 may receive a syntax element indicating the absolute value of the difference and receiving a syntax element indicating a sign of the difference.

In some example implementations of the above techniques, requisite syntax elements may be found in the sequence parameter set. In the following tables, italicized text represents additions relative to the current draft of HEVC standards. Bold text denotes syntax elements. In some examples, a sequence parameter set RBSP may have the following syntax:

| seq_parameter_set_rbsp( ) { | Descriptor |
|---|---|
| **sps_video_parameter_set_id** | u(4) |
| **sps_max_sub_layers_minus1** | u(3) |
| **sps_temporal_ id_nesting_flag** | u(1) |
| profile_tier_level( sps _max_sub_layers_minus1 ) | |
| ... | |
| **vui_parameters_present_flag** | u(1) |
| if( vui_parameters_present_flag) | |
| vui_parameters( ) | |
| **sps_extension_present_flag** | u(1) |
| if(sps_extension_present_flag) { | |
| for (i = 0; i < 1; i++ ) | |
| **sps_extension_flag**[i ] | u(1) |
| **sps_extension_7bits** | u(7) |
| if( sps_extension_flag[0]) { | |
| **transform_skip_rotation_enabled_flag** | u(1) |
| **transform_skip_context_enabled_ flag** | u(1) |
| **intra_block_copy_enabled_flag** | u(1) |
| **implicit_rdpcm_enabled_flag** | u(1) |
| **explicit_rdpcm_enabled_flag** | u(1) |
| **extended_precision_processing_flag** | u(1) |
| **intra_smoothing_disabled_flag** | u(1) |
| **high_precision_offsets_enabled_flag** | u(1) |
| **fast_rice_adaptation_enabled_flag** | u(1) |
| **cabac_ bypass_ alignment_enabled_ flag** | u(1) |
| *color_transform_enabled_flag* | *u(1)* |
| *lossless_ _enable_flag* | *u(1)* |

(continued)

| seq_parameter_set_rbsp( ) { | Descriptor |
|---|---|
| **}** | |
| if( sps_extension_7bits) | |
| while(more_rbsp_data( )) | |
| **sps_extension_data_flag** | u(1) |
| } | |
| rbsp_ trailing_bits( ) | |
| } | |

In this example, color_transform_enabled_flag equal to 1 indicates that color transform is enabled. When the syntax element color transform_enabled flag is equal to 0, color transform is not enabled. When the syntax element lossless_enable_flag is equal to 1, lossless coding is applied. In addition, when color_transform_enabled flag is equal to 1, the original YCoCg-R transform is used. When the syntax element lossless_enable_flag is equal to 0, lossy coding is applied. In addition, when color_transform_enabled_flag is equal to 1, the original YCoCg transform is used.

Alternatively, the newly introduced flags may be signaled only when chroma_format_idc is equal to 3.

| seq_parameter_set_rbsp( ) { | Descript or |
|---|---|
| **sps_video_parameter_set_id** | u(4) |
| **sps_max_sub_layers_minus1** | u(3) |
| **sps_temporal_ id_nesting_flag** | u(1) |
| profile_tier_level( sps _max_sub_layers_minus1 ) | |
| ... | |
| **vui_parameters_present_flag** | u(1) |
| if( vui_parameters_present_flag) | |
| vui_parameters( ) | |
| **sps_extension_present_flag** | u(1) |
| if(sps_extension_present_flag) { | |
| for (i = 0; i < 1; i++ ) | |
| **sps_extension_flag[**i ] | u(1) |
| **sps_extension_7bits** | u(7) |
| if( sps_extension_flag[0]) { | |
| **transform_skip_rotation_enabled_flag** | u(1) |
| **transform_skip_context_enabled_ flag** | u(1) |
| **intra_block_copy_enabled_flag** | u(1) |
| **implicit_rdpcm_enabled_flag** | u(1) |
| **explicit_rdpcm_enabled_flag** | u(1) |
| **extended_precision_processing_flag** | u(1) |
| **intra_smoothing_disabled_flag** | u(1) |
| **high_precision_offsets_enabled_flag** | u(1) |
| **fast_rice_adaptation_enabled_flag** | u(1) |
| **cabac _bypass_ alignment_enabled_ flag** | u(1) |

(continued)

| seq_parameter_set_rbsp( ) { | Descript or |
|---|---|
| *if( chroma _format_idc = = 3) {* | |
| **color_transform_enabled_flag** | *u(1)* |
| **lossless_ enable_flag** | *u(1)* |
| *}* | |
| } | |
| if(sps_extension_7bits) | |
| while(more_rbsp_data( )) | |
| **sps_extension_ data_flag** | u(1) |
| } | |
| rbsp _trailing_bits( ) | |
| } | |

Alternatively, the newly introduced flags may be signaled only when chroma_format_idc is equal to 3 and the three colour components of the 4:4:4 chroma format are not coded separately. Therefore, the above condition 'if(chroma_format_idc = = 3)' may be replaced by 'if(chroma_format_idc = = 3 && !separate_colour_plane_flag)'.

Further, a constraint may be applied that when color_transform_enabled_flag is equal to 1, chroma_format_idc may be equal to 3. Alternatively, furthermore, when color_transform_enabled_flag is equal to 1, separate_colour_plane_flag may be equal to 0.

In some examples, a coding unit may have the following syntax:

| coding _unit(x0, y0, log2CbSize ) { | Descript or |
|---|---|
| if( transquant_bypass_enabled_ flag ) | |
| **cu_transquant_bypass_flag** | ae(v) |
| if( slice_type != I) | |
| **cu_skip_flag[**x0][y0] | ae(v) |
| nCbS = (1 << log2CbSize ) | |
| if( cu_skip_flag[ x0][ y0]) | |
| prediction_unit(x0, y0, nCbS, nCbS ) | |
| else { | |
| if( slice_type != I) | |
| **pred_mode_flag** | ae(v) |
| if( CuPredMode[ x0][ y0] != MODE_INTRA \|\| log2CbSize = = MinCbLog2SizeY ) | |
| **part_mode** | ae(v) |
| if( CuPredMode[ x0][ y0] = = MODE_INTRA ) { | |
| if(PartMode = = PART_2Nx2N && pcm_enabled_flag && log2CbSize >= Log2MinIpcmCbSizeY && log2CbSize <= Log2MaxIpcmCbSizeY ) | |
| **pcm_flag[**x0 ][ y0 ] | ae(v) |
| if(pcm_flag[x0][y0]) { | |
| while( !byte_aligned( )) | |
| **pcm_alignment_zero_bit** | f(1) |

(continued)

| coding _unit(x0, y0, log2CbSize ) { | Descript or |
|---|---|
| pcm_sample( x0, y0, log2CbSize ) | |
| } else { | |
| *if(color_ transform_enabled_flag) {* | |
| **color_transform_flag[**x0 ][y0 ] | *ae(v)* |
| *}* | |
| pbOffset = ( PartMode = = PART_NxN ) ? (nCbS / 2) : nCbS | |
| for(j = 0; j < nCbS; j = j + pbOffset ) | |
| for(i = 0; i < nCbS; i = i + pbOffset ) | |
| **prev_intra_luma_pred_flag[**x0 + i][y0 + j] | ae(v) |
| for(j = 0; j < nCbS; j = j + pbOffset ) | |
| for(i = 0; i < nCbS; i = i + pbOffset ) | |
| if(prev_intra_luma_pred_ flag[x0 + i][y0 + j]) | |
| **mpm_idx[**x0+ i][y0 + j ] | ae(v) |
| else | |
| | |
| **rem_intra_luma_pred_mode**[x0 + i][ y0 + j ] | ae(v) |
| if( ChromaArrayType = = 3 && ! **color_transform_flag***[x0 ][y0 ])* | |
| for(j = 0; j < nCbS; j = j + pbOffset ) | |
| for(i = 0; i < nCbS; i = i + pbOffset ) | |
| **intra_chroma_pred_mode[**x0 + i][ y0 + j ] | ae(v) |
| else if( ChromaArrayType != 0) | |
| **intra_chroma_pred_mode[**x0 ][ y0 ] | ae(v) |
| } | |
| } else { | |
| ... | |
| } | |
| } | |
| if(!pcm flag[x0][y0]) { | |
| if(CuPredMode[x0][y0] != MODE_INTRA && !(PartMode = = PART 2Nx2N && merge_flag [x0][y0])) | |
| **rqt_root_ cbf** | ae(v) |
| if(rqt_root_ cbf) { | |
| *if(color_transform_enabled_flag && CuPredMode[x0][y0] ! = MODE_INTRA) {* | |
| **color_transform_flag***[x0 ][y0 ]* | *ae(v)* |
| *}* | |
| MaxTrafoDepth = (CuPredMode[ x0][ y0] = = MODE_INTRA ? ( max transform_ hierarchy_depth_intra + IntraSplitFlag ) : max_ transform_ hierarchy_depth_ inter) | |
| transform_tree( x0, y0, x0, y0, log2CbSize, 0, 0) | |

(continued)

| coding _unit(x0, y0, log2CbSize ) { | Descript or |
|---|---|
| } | |
| } | |
| } | |
| } | |

In the above example, for intra mode, the color transform flag is firstly signaled. When this flag is equal to 1, the signaling of intra_chroma_pred_mode may be skipped, wherein the chroma components share the same mode as luma.

Alternatively, in some examples, the coding unit may have the following syntax:

| coding _unit(x0, y0, log2CbSize ) { | Descriptor |
|---|---|
| if( transquant_bypass_enabled_ flag ) | |
| **cu_transquant_ bypass_flag** | ae(v) |
| if( slice_type != I) | |
| **cu_skip_flag**[x0 ][ y0 ] | ae(v) |
| nCbS = (1 << log2CbSize ) | |
| if( cu_skip_flag[ x0][ y0]) | |
| prediction_unit(x0, y0, nCbS, nCbS ) | |
| else { | |
| if( slice_type != I) | |
| **pred_mode_flag** | ae(v) |
| if( CuPredMode[ x0][ y0] != MODE_INTRA \|\| log2CbSize = = MinCbLog2SizeY ) | |
| **part_mode** | ae(v) |
| if( CuPredMode[ x0][ y0] = = MODE_INTRA) { | |
| if(PartMode = = PART_2Nx2N && pcm_enabled_flag && log2CbSize >= Log2MinIpcmCbSizeY && log2CbSize <= Log2MaxIpcmCbSizeY ) | |
| **pcm_flag**[x0 ][y0 ] | ae(v) |
| if(pcm_flag[x0][y0]) { | |
| while( !byte_aligned( )) | |
| **pcm_alignment_zero_bit** | f(1) |
| pcm_sample( x0, y0, log2CbSize ) | |
| } else { | |
| pbOffset = (PartMode = = PART_NxN) ? (nCbS / 2) : nCbS | |
| for( j = 0; j < nCbS; j = j + pbOffset ) | |
| for(i = 0; i < nCbS; i = i + pbOffset ) | |
| **prev_intra_luma_pred_flag**[x0 + i][ y0 + j ] | ae(v) |
| for( j = 0; j < nCbS; j = j + pbOffset ) | |
| for(i = 0; i < nCbS; i = i + pbOffset ) | |
| if(prev_intra_luma_pred_flag[x0 + i][y0 + j]) | |

(continued)

| coding _unit(x0, y0, log2CbSize ) { | Descriptor |
|---|---|
| **mpm_idx**[x0 + i ][ y0 + j ] | ae(v) |
| else | |
| **rem_intra_luma_pred_mode**[x0 + i][y0 +j] | ae(v) |
| if( ChromaArrayType = = 3) | |
| for( j = 0; j < nCbS; j = j + pbOffset ) | |
| for(i = 0; i < nCbS; i = i + pbOffset ) | |
| **intra_chroma_pred_mode**[x0 + i ][ y0 + j ] | ae(v) |
| else if( ChromaArrayType != 0) | |
| **intra_chroma_pred_mode**[x0 ][ y0 ] | ae(v) |
| } | |
| } else { | |
| ... | |
| } | |
| } | |
| if( !pcm_flag[ x0 ][ y0 ]) { | |
| if(CuPredMode[x0][y0] != MODE_INTRA && !(PartMode = = PART 2Nx2N && merge_flag [x0][y0])) | |
| **rqt_root_ cbf** | ae(v) |
| if(rqt_root_ cbf) { | |
| i      *f( color_transform_enabled_flag &&(CuPredMode[x0 ] [y0] == MODE_INTER || !intra_ chroma_ pred_mode[ x0][y0]) {* | |
| ***color_transform_flag[x0][y0]*** | *ae(v)* |
| *}* | |
| MaxTrafoDepth = (CuPredMode[ x0][ y0] = = MODE_INTRA ? ( max_transform_ hierarchy_depth_intra + IntraSplitFlag ) : max_ transform_ hierarchy_depth_ inter) | |
| transform tree( x0, y0, x0, y0, log2CbSize, 0, 0) | |
| } | |
| } | |
| } | |
| } | |

Alternatively, when intra BC mode is considered as an intra mode, that is, the corresponding CuPred-Mode[x0][y0] is equal to MODE_INTRA, the above highlighted condition 'if(color_transform_enabled_flag &&(CuPred-Mode[x0][y0] == MODE_INTER || !intra_chroma_pred_mode[x0][y0])' could be replaced by 'if( color_transform_enabled_flag &&(CuPredMode[x0][y0] == MODE_INTER || intra_bc_flag[x0][y0] || !intra_chroma_pred_mode[x0][y0])'. Alternatively, in all examples above, CuPredMode[x0][y0] == MODE_INTER may be replaced by CuPredMode[x0][y0] != MODE_INTRA.

Alternatively, the above conditions 'if(color_transform_enabled_flag &&(CuPredMode[x0][y0] == MODE_INTER || !intra_chroma_pred_mode[x0][y0 ])' could be simply replaced by 'if(color_transform_enabled_flag)'. In this case, the constraint that chroma and luma modes are the same when color_transform_enabled_flag is equal to 1 and current CU is intra coded may be satisfied.

The following changes may be invoked when the current CU/PU/TU is not lossless coded (i.e., when cu_transquant_bypass_flag is equal to 0). In one example, the QP used in the dequantization process may change when color transform is applied. However, the $Qp_Y$ used in the deblocking process may be unchanged, i.e., without the delta QP (deltaQP$_{C0}$) taken into consideration.

In the decoding process, for the derivation process for quantization parameters, input to this process is a luma location $(x_{Cb}, y_{Cb})$ specifying the top-left sample of the current luma coding block relative to the top-left luma sample of the current picture. In this process, the variable $Qp_Y$, the luma quantization parameter $Qp'_Y$, and the chroma quantization parameters $Qp'_{Cb}$ and $Qp'_{Cr}$ are derived.

The luma location $(x_{Qg}, y_{Qg})$, specifies the top-left luma sample of the current quantization group relative to the top left luma sample of the current picture. The horizontal and vertical positions $x_{Qg}$ and $y_{Qg}$ are set equal to $x_{Cb}$ - ($x_{cb}$ & ((1 << Log2MinCuQpDeltaSize) - 1)) and $y_{Cb}$ - ($y_{Cb}$ & ((1 << Log2MinCuQpDeltaSize) - 1)), respectively. The luma size of a quantization group, Log2MinCuQpDeltaSize, determines the luma size of the smallest area inside a coding tree block that shares the same $qP_{Y\_PRED}$.

The predicted luma quantization parameter $qP_{Y\_PRED}$ may be derived by the following ordered steps: 1) The variable $qP_{Y\_PREV}$ may be derived. If one or more of the following conditions are true, $qP_{Y\_PREV}$ is set equal to SliceQp$_Y$: The current quantization group is the first quantization group in a slice, the current quantization group is the first quantization group in a tile, or the current quantization group is the first quantization group in a coding tree block row and entropy_coding_sync_enabled_flag is equal to 1. Otherwise, $qP_{Y\_PREV}$ is set equal to the luma quantization parameter $Qp_Y$ of the last coding unit in the previous quantization group in decoding order.

2) The availability derivation process for a block in z-scan order is invoked with the location $(x_{Curr}, y_{Curr})$ set equal to $(x_{Cb}, y_{Cb})$ and the neighboring location $(x_{NbY}, y_{NbY})$ set equal to $(x_{Qg} - 1, y_{Qg})$ as inputs, and the output is assigned to availableA. The variable $qP_{Y\_A}$ is derived as follows: If one or more of the following conditions are true, $qP_{Y\_A}$ is set equal to $qP_{Y\_PREV}$: availableA is equal to FALSE or the coding tree block address ctbAddrA of the coding tree block containing the luma coding block covering the luma location $(x_{Qg} - 1, y_{Qg})$ is not equal to CtbAddrInTs, where ctbAddrA is derived as follows:

$$xTmp = ( x_{Qg} - 1 ) >> Log2MinTrafoSize$$

$$yTmp = y_{Qg} >> Log2MinTrafoSize$$

$$minTbAddrA = MinTbAddrZs[ xTmp ][ yTmp ]$$

$$ctbAddrA = ( minTbAddrA >> 2 ) * (CtbLog2SizeY - Log2MinTrafoSize)$$

Otherwise, $qP_{Y\_A}$ is set equal to the luma quantization parameter $Qp_Y$ of the coding unit containing the luma coding block covering $(x_{Qg} - 1, y_{Qg})$.

3) The availability derivation process for a block in z-scan order is invoked with the location $(x_{Curr}, y_{Curr})$ set equal to $(x_{Cb}, y_{Cb})$ and the neighboring location $(x_{NbY}, y_{NbY})$ set equal to $(x_{Qg}, y_{Qg} - 1)$ as inputs. The output is assigned to availableB. The variable $qP_{Y\_B}$ is derived. If one or more of the following conditions are true, $qP_{Y\_B}$ is set equal to $qP_{Y\_PREV}$: availableB is equal to FALSE or the coding tree block address ctbAddrB of the coding tree block containing the luma coding block covering the luma location $(x_{Qg}, y_{Qg} - 1)$ is not equal to CtbAddrInTs, where ctbAddrB is derived as follows:

$$xTmp = x_{Qg} >> Log2MinTrafoSize$$

$$yTmp = ( y_{Qg} - 1 ) >> Log2MinTrafoSize$$

$$minTbAddrB = MinTbAddrZs[ xTmp ][ yTmp ]$$

$$ctbAddrB = ( minTbAddrB >> 2 ) * (CtbLog2SizeY - Log2MinTrafoSize)$$

Otherwise, qPY_B is set equal to the luma quantization parameter QpY of the coding unit containing the luma coding block covering (xQg, yQg - 1).

The predicted luma quantization parameter $qP_{Y\_PRED}$ may be derived as follows:

$$qP_{Y\_PRED} = ( qP_{Y\_A} + qP_{Y\_B} + 1 ) >> 1$$

The variable $Qp_Y$ may be derived as follows:

$$Qp_Y = ( ( qP_{Y\_PRED} + CuQpDeltaVal + 52 + 2 * QpBdOffset_Y )\%( 52 + QpBdOffset_Y ) ) - QpBdOffset_Y$$

The luma quantization parameter $Qp'_Y$ may be derived as follows:

$$Qp'_Y = Qp_Y + QpBdOffset_Y$$

When ChromaArrayType is not equal to 0, the variables $qPi_{Cb}$ and $qPi_{Cr}$ are derived as follows:

$$qPi_{Cb} = Clip3( -QpBdOffset_C, 57, Qp_Y + pps\_cb\_qp\_offset + slice\_cb\_qp\_offset + CuQpOffset_{Cb} )$$

$$qPi_{Cr} = Clip3( -QpBdOffsetC, 57, Qp_Y + pps\_cr\_qp\_offset + slice\_cr\_qp\_offset + CuQpOffset_{Cr} )$$

If ChromaArrayType is equal to 1, the variables $qP_{Cb}$ and $qP_{Cr}$ are set equal to the value of $Qp_C$ based on the index qPi equal to $qPi_{Cb}$ and $qPi_{Cr}$, respectively. Otherwise, the variables $qP_{Cb}$ and $qP_{Cr}$ are set equal to Min(qPi, 51), based on the index qPi equal to $qPi_{Cb}$ and $qPi_{Cr}$, respectively.

The chroma quantization parameters for the Cb and Cr components, $Qp'_{Cb}$ and $Qp'_{Cr}$, are derived as follows:

$$Qp'_{Cb} = qP_{Cb} + QpBdOffset_C$$

$$Qp'_{Cr} = qP_{Cr} + QpBdOffset_C$$

The specification of $Qp_C$ as a function of qPi for ChromaArrayType equal to 1 is as follows:

| qPi | < 30 | 30 | 31 | 32 | 33 | 34 | 35 | 36 | 37 | 38 | 39 | 40 | 41 | 42 | 43 | > 43 |
|-----|------|----|----|----|----|----|----|----|----|----|----|----|----|----|----|------|
| $Qp_C$ | = qPi | 29 | 30 | 31 | 32 | 33 | 33 | 34 | 34 | 35 | 35 | 36 | 36 | 37 | 37 | = qPi - 6 |

In the dequantization process, the quantization parameter qP for each component index (cIdx) may be derived. Inputs to this process may be a luma location (xTbY, yTbY) specifying the top-left sample of the current luma transform block relative to the top left luma sample of the current picture, a variable trafoDepth specifying the hierarchy depth of the current block relative to the coding block, a variable cIdx specifying the colour component of the current block, and a variable nTbS specifying the size of the current transform block. The output of this process may be the (nTbS)x(nTbS) array of residual samples r with elements r[x][y].

The quantization parameter qP may be derived. If cIdx is equal to 0,

$$qP = Qp'_Y + (\text{color\_transform\_flag}[\ xTb_Y\ ][\ yTb_Y\ ]\ ?\ \text{deltaQP}_{C0}\ :\ 0)$$

Otherwise, if cIdx is equal to 1,

$$qP = Qp'_{Cb} + (\text{color\_transform\_flag}[\ xTb_Y\ ][\ yTb_Y\ ]\ ?\ \text{deltaQP}_{C1}\ :\ 0)$$

Otherwise (cIdx is equal to 2)

$$qP = Qp'_C + (\text{color\_transform\_flag}[\ xTb_Y\ ][\ yTb_Y\ ]\ ?\ \text{deltaQP}_{C2}\ :\ 0)$$

In one example, $\text{deltaQP}_{C0}$, $\text{deltaQP}_{C1}$ and $\text{deltaQP}_{C2}$ may be set to -5, -5 and -3, respectively. In another example, the $Qp_Y$ used in the deblocking process is unchanged, i.e., with the delta QP ($\text{deltaQP}_{C0}$) taken into consideration. In the decoding process, for the derivation process for quantization parameters, input to this process may be a luma location ($x_{Cb}$, $y_{Cb}$) specifying the top-left sample of the current luma coding block relative to the top-left luma sample of the current picture. In this process, the variable $Qp_Y$, the luma quantization parameter $Qp'_Y$, and the chroma quantization parameters $Qp'_{Cb}$ and $Qp'_{Cr}$ may be derived.

The luma location (xQg, yQg), specifies the top-left luma sample of the current quantization group relative to the top left luma sample of the current picture. The horizontal and vertical positions xQg and yQg are set equal to xCb - (xCb & ((1 << Log2MinCuQpDeltaSize) - 1)) and yCb - (yCb & ((1 << Log2MinCuQpDeltaSize) - 1)), respectively. The luma size of a quantization group, Log2MinCuQpDeltaSize, determines the luma size of the smallest area inside a coding tree block that shares the same $qP_{Y\_PRED}$.

The predicted luma quantization parameter $qP_{Y\_PRED}$ may be derived by the following ordered steps:

1) The variable $qP_{Y\_PREV}$ may be derived. If one or more of the following conditions are true, $qP_{Y\_PREV}$ is set equal to SliceQpy: The current quantization group is the first quantization group in a slice, the current quantization group is the first quantization group in a tile, or the current quantization group is the first quantization group in a coding tree block row and
entropy_coding_sync_enabled_flag is equal to 1. Otherwise, $qP_{Y\_PREV}$ is set equal to the luma quantization parameter $Qp_Y$ of the last coding unit in the previous quantization group in decoding order.
2) The availability derivation process for a block in z-scan order is invoked with the location (xCurr, yCurr) set equal to (xCb, yCb) and the neighboring location ( xNbY, yNbY) set equal to (xQg - 1, yQg) as inputs, and the output is assigned to availableA. The variable $qP_{Y\_A}$ is derived as follows: If one or more of the following conditions are true, $qP_{Y\_A}$ is set equal to $qP_{Y\_PREV}$: availableA is equal to FALSE or the coding tree block address ctbAddrA of the coding tree block containing the luma coding block covering the luma location (xQg - 1, yQg) is not equal to CtbAddrInTs, where ctbAddrA is derived as follows:

$$xTmp = (\ xQg - 1\ )\ >>\ \text{Log2MinTrafoSize}$$

$$yTmp = yQg\ >>\ \text{Log2MinTrafoSize}$$

$$\text{minTbAddrA} = \text{MinTbAddrZs}[\ xTmp\ ][\ yTmp\ ]$$

$$\text{ctbAddrA} = (\ \text{minTbAddrA}\ >>\ 2\ )\ *\ (\text{CtbLog2Size}_Y - \text{Log2MinTrafoSize})$$

Otherwise, $qP_{Y\_A}$ is set equal to the luma quantization parameter $Qp_Y$ of the coding unit containing the luma coding block covering (xQg - 1, yQg).
3) The availability derivation process for a block in z-scan order is invoked with the location (xCurr, yCurr) set equal to (xCb, yCb) and the neighboring location ( xNbY, yNbY) set equal to (xQg, yQg - 1) as inputs. The output is assigned to availableB. The variable $qP_{Y\_B}$ is derived. If one or more of the following conditions are true, qPY_B is set equal to $qP_{Y\_PREV}$: availableB is equal to FALSE or the coding tree block address ctbAddrB of the coding tree block containing the luma coding block covering the luma location (xQg, yQg - 1) is not equal to CtbAddrInTs, where ctbAddrB is derived as follows:

$$xTmp = xQg \gg Log2MinTrafoSize$$

$$yTmp = ( yQg - 1 ) \gg Log2MinTrafoSize$$

$$minTbAddrB = MinTbAddrZs[ xTmp ][ yTmp ]$$

$$ctbAddrB = ( minTbAddrB \gg 2 ) * (CtbLog2Size_Y - Log2MinTrafoSize)$$

Otherwise, $qP_{Y\_B}$ is set equal to the luma quantization parameter $Qp_Y$ of the coding unit containing the luma coding block covering (xQg, yQg - 1).

The predicted luma quantization parameter $qP_{Y\_PRED}$ may be derived as follows:

$$qP_{Y\_PRED} = ( qP_{Y\_A} + qP_{Y\_B} + 1 ) \gg 1$$

The variable $Qp_Y$ may be derived as follows:

$$Qp_Y = ( ( qP_{Y\_PRED} + CuQpDeltaVal + 52 + 2 * QpBdOffset_Y )\%( 52 + QpBdOffset_Y ) ) - QpBdOffset_Y$$

$$Qp_Y = Qp_Y + (color\_transform\_flag[ xCb ][ yCb ] ? deltaQP_{C0} : 0)$$

The luma quantization parameter $Qp'_Y$ may be derived as follows:

$$Qp'_Y = Qp_Y + QpBdOffset_Y$$

When ChromaArrayType is not equal to 0, the variables $qPi_{Cb}$ and $qPi_{Cr}$ may be derived as follows:

$$qPi_{Cb} = Clip3( -QpBdOffset_C, 57, Qp_Y + pps\_cb\_qp\_offset +$$
$$slice\_cb\_qp\_offset + CuQpOffset_{Cb} )$$

$$qPi_{Cr} = Clip3( -QpBdOffset_C, 57, QpY + pps\_cr\_qp\_offset +$$
$$slice\_cr\_qp\_offset + CuQpOffset_{Cr} )$$

If ChromaArrayType is equal to 1, the variables $qP_{Cb}$ and $qP_{Cr}$ may be set equal to the value of $Qp_C$ based on the index qPi equal to $qPi_{Cb}$ and $qPi_{Cr}$, respectively. Otherwise, the variables $qP_{Cb}$ and $qP_{Cr}$ may be set equal to Min(qPi, 51), based on the index qPi equal to $qPi_{Cb}$ and $qPi_{Cr}$, respectively. The chroma quantization parameters for the Cb and Cr components, $Qp'_{Cb}$ and $Qp'_{Cr}$, may be derived as follows:

$$Qp'_{Cb} = qP_{Cb} + QpBdOffset_C$$

$$Qp'_{Cr} = qP_{Cr} + QpBdOffset_C$$

The specification of $Qp_c$ as a function of qPi for ChromaArrayType equal to 1 may be as follows:

| qPi | <30 | 30 | 31 | 32 | 33 | 34 | 35 | 36 | 37 | 38 | 39 | 40 | 41 | 42 | 43 | >43 |
|---|---|---|---|---|---|---|---|---|---|---|---|---|---|---|---|---|
| $Qp_C$ | =qPi | 29 | 30 | 31 | 32 | 33 | 33 | 34 | 34 | 35 | 35 | 36 | 36 | 37 | 37 | =qPi-6 |

$$Qp'_{Cb} = Qp'_{Cb} + (color\_transform\_flag[\ x_{Cb}\ ][\ y_{Cb}\ ]\ ?\ deltaQP_{C1} : 0)$$

$$Qp'_{Cr} = Qp'_{Cr} + (color\_transform\_flag[\ x_{Cb}\ ][\ y_{Cb}\ ]\ ?\ deltaQP_{C2} : 0)$$

In the dequantization process, the quantization parameter qP for each component index (cIdx) may be derived as follows. If cIdx is equal to 0,

$$qP = Qp'_Y + (color\_transform\_flag[\ xTbY\ ][\ yTbY\ ]\ ?\ deltaQP_{C0} : 0)$$

Otherwise, if cIdx is equal to 1,

$$qP = Qp'_{Cb} + (color\_transform\_flag[\ xTbY\ ][\ yTbY\ ]\ ?\ deltaQP_{C1} : 0)$$

Otherwise (cIdx is equal to 2),

$$qP = Qp'_C + (color\_transform\_flag[\ xTbY\ ][\ yTbY\ ]\ ?\ deltaQP_{C2} : 0)$$

In one example, $deltaQP_{C0}$, $deltaQP_{C1}$ and $deltaQP_{C2}$ may be set to -5, -5 and -3, respectively.
Some example implementation details will now be described. The following describes the syntax element and semantics changes in comparison to corresponding syntax elements and semantics in JCTVC-Q1005_v4, David Flynn et al., "High Efficiency Video Coding (HEVC) Range Extensions text specification: Draft 7, JCTVC-Q1005_v4, Joint Collaborative Team on Video Coding (JCT-VC) of ITU-T SG 16 WP 3 and ISO/IEC JTC 1/SC 29/WG 11, 17th Meeting: Valencia, ES, 27 March - 4 April 2014, which is available from: http://phenix.int-evry.fr/jct/doc_end_user/documents/17_Valencia/wg11/JCTVC-Q1005-v4.zip
The newly added parts are highlighted in bold or italic, i.e., **bold** or *italic,* and the deleted parts are marked as bold in brackets, e.g. **[[deleted text]].** The italic parts are related to proposed techniques in this disclosure.

*Syntax elements and semantics*

**7.3.2.2 Sequence parameter set RBSP syntax**

| seq_parameter_set_ rbsp( ) { | Descripto r |
|---|---|
| sps_video_parameter_set_id | u(4) |
| sps_max_sub_layers_minus1 | u(3) |
| sps_temporal_id_nesting_flag | u(1) |
| profile_tier_level( sps _max_sub_layers_minus1 ) | |
| .. | |

(continued)

| seq_parameter_set_ rbsp( ) { | Descripto r |
|---|---|
| vui_parameters_present_flag | u(1) |
| if( vui_parameters_present_flag) | |
| vui_parameters( ) | |
| sps_extension_present_flag | u(1) |
| if(sps_extension_present_flag){ | |
| for(i = 0; i < 1; i++ ) | |
| sps_extension_ flag[i ] | u(1) |
| sps_extension_7bits | u(7) |
| if( sps_extension_flag[0]) { | |
| transform_skip _rotation_enabled_flag | u(1) |
| transform_skip_context_enabled_flag | u(1) |
| intra_block_copy_enabled_flag | u(1) |
| implicit_rdpcm_enabled_flag | u(1) |
| explicit_rdpcm_enabled_flag | u(1) |
| extended_precision_processing_flag | u(1) |
| intra_smoothing_disabled_flag | u(1) |
| high_precision_offsets_enabled_flag | u(1) |
| fast_rice_adaptation_enabled_flag | u(1) |
| cabac_bypass_alignment_enabled_flag | u(1) |
| **color_transform_enabled_ flag** | **u(1)** |
| **lossless_ enable_ flag** | **u(1)** |
| } | |
| if( sps_extension_7bits) | |
| while(more_rbsp_data( )) | |
| sps_extension_data_flag | u(1) |
| } | |
| rbsp _trailing_bits() | |
| } | |

color_transform_enabled_flag equal to 1 indicates that color transform is enabled. color_transform_enabled_flag equal to 0 indicates that color transform is not enabled.

lossless_enable_flag equal to 1 indicates that lossless coding is applied. In addition, when color_transform_enabled_flag is equal to 1, the original YCoCg-R transform is used.

lossless_enable_flag equal to 0 indicates that lossy coding is applied. In addition, when color_transform_enabled_flag is equal to 1, the original YCoCg transform is used.

**7.3.5.8 Coding unit syntax**

| | Descriptor |
|---|---|
| coding_ unit(x0, y0, log2CbSize ) { | |
| if( transquant_bypass_enabled_ flag ) | |
| cu_transquant_bypass_flag | ae(v) |
| if( slice_type != I) | |
| cu_skip_flag[ x0][ y0 ] | ae(v) |
| nCbS = (1 << log2CbSize ) | |
| if( cu_skip_flag[ x0][ y0]) | |
| prediction_unit(x0, y0, nCbS, nCbS ) | |
| else { | |
| if( slice_type != I) | |
| pred_mode_flag | ae(v) |
| if( CuPredMode[ x0][ y0] != MODE_INTRA ‖ log2CbSize = = MinCbLog2SizeY ) | |
| part_mode | ae(v) |
| if( CuPredMode[ x0][ y0] = = MODE_INTRA) { | |
| if(PartMode = = PART_2Nx2N && pcm_enabled_flag &&<br>log2CbSize >= Log2MinIpcmCbSizeY &&<br>log2CbSize <= Log2MaxIpcmCbSizeY ) | |
| pcm_ flag[ x0 ][ y0 ] | ae(v) |
| if(pcm_flag[x0][y0]){ | |
| while( !byte_aligned()) | |
| pcm_alignment_zero_bit | f(1) |
| pcm_sample( x0, y0, log2CbSize ) | |
| } else { | |
| pbOffset = (PartMode = = PART_NxN) ? (nCbS / 2) : nCbS | |
| for( j = 0; j < nCbS; j = j + pbOffset ) | |
| for(i = 0; i < nCbS; i = i + pbOffset ) | |
| prev_intra_luma_pred_flag[x0 + i][y0 + j] | ae(v) |
| for( j = 0; j < nCbS; j = j + pbOffset ) | |
| for(i = 0; i < nCbS; i = i + pbOffset ) | |
| if(prev_intra_luma_pred_flag[x0 + i][y0 + j]) | |
| mpm_idx[x0 + i][y0 + j ] | ae(v) |
| else | |
| rem_intra_luma_pred_mode[x0 + i][y0 + j] | ae(v) |
| if( ChromaArrayType = = 3) | |
| for( j = 0; j < nCbS; j = j + pbOffset ) | |
| for(i = 0; i < nCbS; i = i + pbOffset ) | |
| intra_chroma_pred_mode[x0 + i ][ y0 + j ] | ae(v) |
| else if( ChromaArrayType != 0) | |
| intra_chroma_pred_mode[x0][y0] | ae(v) |
| } | |

(continued)

| coding_ unit(x0, y0, log2CbSize ) { | Descriptor |
|---|---|
|     } else { | |
| ... | |
|        } | |
|    } | |
|   if( !pcm_flag[ x0 ][ y0 ]){ | |
|      if( CuPredMode[ x0][y0] != MODE_INTRA && !( PartMode = = PART 2Nx2N && merge_ flag[ x0 ][ y0 ])) | |
|        rqt root cbf | ae(v) |
|     if(rqt_root_ cbf){ | |
|       **if( color_transform_enabled_ flag &&(CuPredMode[ x0 ][ y0] == MODE_INTER ∥ !intra_ chroma_ pred_mode[x0 ][ y0 ]){** | |
|         **color_transform_ flag[x0 ][ y0 ]** | **ae(v)** |
|       } | |
|       *else {* | |
|       *color_transform_flag[x0][y0] = defaultVal* | |
|       *}* | |
|       MaxTrafoDepth = (CuPredMode[ x0][ y0] = = MODE_INTRA ? ( max_transform_ hierarchy_depth_intra + IntraSplitFlag ) : max transform hierarchy_depth inter) | |
|       transform_tree( x0, y0, x0, y0, log2CbSize, 0, 0) | |
|     } | |
|    } | |
|   } | |
| } | |

**Note, only the chroma mode of the top-left PU within one intra-coded CU is used (i.e., !intra_chroma_pred_mode[x0][y0]) to determine whether the color_transform_flag should be signaled or not.**

*In one example, the constant defaultVal is always set equal to 0.*

*In another example, the constant defaultVal is always set equal to the enabling of color transform flag in SPS/PPS/slice header, e.g., color_transform_enabled_flag.*

A first example, referred to below as example # 1 will now be described. As indicated above, newly added parts in this Example #1 are highlighted in bold or italic, i.e., **bold** or *italic,* and the deleted parts are marked as bold inside brackets, e.g., **[[deleted text]].** The italic parts are related to proposed techniques in this disclosure.

In this example, defaultVal is equal to 0.

8.4.1 General decoding process for coding units coded in intra prediction mode

Inputs to this process are:

Output of this process is a modified reconstructed picture before deblocking filtering. The derivation process for quantization parameters as specified in subclause 8.6.1 is invoked with the luma location (xCb, yCb) as input.

A variable nCbS is set equal to 1 << log2CbSize.

Depending on the values of pcm_flag[xCb][yCb] and IntraSplitFlag, the decoding process for luma samples is specified as follows:

- If pcm_flag[xCb][yCb] is equal to 1, the reconstructed picture is modified as follows:

- Otherwise (pcm_flag[xCb][yCb] is equal to 0), if IntraSplitFlag is equal to 0, the following ordered steps apply:

1. When intra_bc_flag[xCb][yCb] is equal to 0, the derivation process for the intra prediction mode as specified in subclause 8.4.2 is invoked with the luma location (xCb, yCb) as input.

2. When intra_bc_flag[xCb][yCb] is equal to 1, the derivation process for block vector components in intra block copying prediction mode as specified in subclause 8.4.4 is invoked with the luma location (xCb, yCb) and variable log2CbSize as inputs, and the output being bvIntra.

**3. If color_transform_flag[xCb][yCb] is equal to 1, the following applies:**

- **For the variable cIdx proceeding over the values 0..2, the following ordered steps apply:**

  - **Set variable comp equal to (!cIdx ? L : (cIdx = =1 ? Cb : Cr).**

  - **The general decoding process for intra blocks as specified in subclause 8.4.4.1 is invoked with the location (xCb, yCb), the variable log2TrafoSize set equal to log2CbSize, the variable trafoDepth set equal to 0, the variable predModeIntra set equal to IntraPredModeY[xCb][yCb], the variable predModeIntraBc set equal to intra_bc_flag[xCb][yCb], the variable bvIntra, the variable cIdx, and variable controlPara equal to 1 as inputs, and the output is the residual sample array resSamples$_{comp}$.**

  - **The residual modification process for residual blocks using color space conversion as specified in subclause 8.6.7 is invoked with the variable blkSize set equal to nCbS, the (nCbS)x(nCbS) array r$_Y$ set equal to resSamples$_L$, the (nCbS)x(nCbS) array r$_{Cb}$ set equal to resSamples$_{Cb}$, and the (nCbS)x(nCbS) array r$_{Cr}$ set equal to resSamples$_{cr}$ as inputs, and the output are modified versions of the (nCbS)x(nCbS) arrays resSamples$_L$, resSamples$_{Cb}$ and resSamples$_{Cr}$.**

4. The general decoding process for intra blocks as specified in subclause 8.4.4.1 is invoked with the luma location (xCb, yCb), the variable log2TrafoSize set equal to log2CbSize, the variable trafoDepth set equal to 0, the variable predModeIntra set equal to IntraPredModeY[xCb][yCb], the variable predModeIntraBc set equal to intra_bc_flag[xCb][yCb], the variable bvIntra, **[[and]]** the variable cIdx set equal to 0, **and variable controlPara equal to (color_transform_flag[xCb][yCb]?2:3)** as inputs, and the output is a modified reconstructed picture before deblocking filtering.

- Otherwise (pcm_flag[xCb][yCb] is equal to 0 and IntraSplitFlag is equal to 1), for the variable blkIdx proceeding over the values 0..3, the following ordered steps apply:

1. The variable xPb is set equal to xCb + (nCbS >> 1) * (blkIdx % 2).

2. The variable yPb is set equal to yCb + (nCbS >> 1) * (blkIdx / 2).

3. The derivation process for the intra prediction mode as specified in subclause 8.4.2 is invoked with the luma location (xPb, yPb) as input.

**4. If color_transform_flag[xCb][yCb] is equal to 1, the following applies:**

- **For the variable cIdx proceeding over the values 0..2, the following ordered steps apply:**

  - **Set variable comp equal to (!cIdx ? L : (cIdx = =1 ? Cb : Cr).**

  - **The general decoding process for intra blocks as specified in subclause 8.4.4.1 is invoked with the luma location (xPb, yPb), the variable log2TrafoSize set equal to log2CbSize - 1, the variable trafoDepth set equal to 1, the variable predModeIntra set equal to IntraPredModeY[xPb][yPb], the variable predModeIntraBc set equal to 0, the**

variable cldx, and variable controlPara set equal to 1 as inputs, and the output is the residual sample array resSamples<sub>comp</sub>.

- **Set the variable nSubCbS equal to (nCbS >> 1) and the residual modification process for residual blocks using color space conversion as specified in subclause 8.6.7 is invoked with the variable blkSize set equal to nSubCbS, the (nSubCbS)x(nSubCbS) array $r_Y$ set equal to resSamples$_L$, the (nSubCbS)x(nSubCbS) array $r_{Cb}$ set equal to resSamples$_{Cb}$, and the (nSubCbS)x(nSubCbS) array $r_{Cr}$ set equal to resSamples$_{Cr}$ as inputs, and the outputs are modified versions of the (nSubCbS)x(nSubCbS) arrays resSamples$_L$, resSamples$_{Cb}$ and resSamples$_{Cr}$.**

5. The general decoding process for intra blocks as specified in subclause 8.4.4.1 is invoked with the luma location (xPb, yPb), the variable log2TrafoSize set equal to log2CbSize - 1, the variable trafoDepth set equal to 1, the variable predModeIntra set equal to IntraPredModeY[xPb][yPb], the variable pred-ModeIntraBc set equal to 0, the variable cldx set equal to 0, **and variable controlPara set equal to (color_transform_flag[xCb][yCb] ? 2 : 3)** as inputs, and the output is a modified reconstructed picture before deblocking filtering.

When ChromaArrayType is not equal to 0, the following applies.

The variable log2CbSizeC is set equal to log2CbSize - (ChromaArrayType = = 3 ? 0 : 1).

Depending on the value of pcm_flag[xCb][yCb] and IntraSplitFlag, the decoding process for chroma samples is specified as follows:

- If pcm_flag[xCb][yCb] is equal to 1, the reconstructed picture is modified as follows:

    - Otherwise (pcm_flag[xCb][yCb] is equal to 0), if IntraSplitFlag is equal to 0 or ChromaArrayType is not equal to 3, the following ordered steps apply:

        1. When intra_bc_flag[xCb][yCb] is equal to 0, the derivation process for the chroma intra prediction mode as specified in 8.4.3 is invoked with the luma location (xCb, yCb) as input, and the output is the variable IntraPredModeC.

        2. The general decoding process for intra blocks as specified in subclause 8.4.4.1 is invoked with the chroma location (xCb / SubWidthC, yCb / SubHeightC), the variable log2TrafoSize set equal to log2CbSizeC, the variable trafoDepth set equal to 0, the variable predModeIntra set equal to IntraPredModeC, the variable predModeIntraBc set equal to intra_bc_flag[xCb][yCb], the variable bvIntra, [[and]] the variable cldx set equal to 1, **and variable controlPara set equal to (color_transform_flag[xCb][yCb] ? 2 : 3)** as inputs, and the output is a modified reconstructed picture before deblocking filtering.

        3. The general decoding process for intra blocks as specified in subclause 8.4.4.1 is invoked with the chroma location (xCb / SubWidthC, yCb / SubHeightC), the variable log2TrafoSize set equal to log2CbSizeC, the variable trafoDepth set equal to 0, the variable predModeIntra set equal to IntraPredModeC, the variable predModeIntraBc set equal to intra_bc_flag[xCb][yCb], the variable bvIntra, [[and]] the variable cldx set equal to 2, **and variable controlPara set equal to (color_transform_flag[xCb][yCb] ? 2 : 3)** as inputs, and the output is a modified reconstructed picture before deblocking filtering.

    - Otherwise (pcm_flag[xCb][yCb] is equal to 0, IntraSplitFlag is equal to 1 and ChromaArrayType is equal to 3), for the variable blkldx proceeding over the values 0..3, the following ordered steps apply:

        1. The variable xPb is set equal to xCb + (nCbS >> 1) * (blkldx % 2).

        2. The variable yPb is set equal to yCb + (nCbS >> 1) * (blkldx / 2).

        3. The derivation process for the chroma intra prediction mode as specified in 8.4.3 is invoked with the luma location (xPb, yPb) as input, and the output is the variable IntraPredModeC.

        4. The general decoding process for intra blocks as specified in subclause 8.4.4.1 is invoked with the chroma location (xPb, yPb), the variable log2TrafoSize set equal to log2CbSizeC - 1, the variable trafoDepth set equal to 1, the variable predModeIntra set equal to IntraPredModeC, the variable predModeIntraBc set equal to 0, [[and]] the variable cIdx set equal to 1, **and variable controlPara set equal to (color_transform_flag[xCb][yCb] ? 2 : 3)** as inputs, and the output is a modified reconstructed picture before deblocking filtering.

5. The general decoding process for intra blocks as specified in subclause 8.4.4.1 is invoked with the chroma location (xPb, yPb), the variable log2TrafoSize set equal to log2CbSizeC - 1, the variable trafoDepth set equal to 1, the variable predModeIntra set equal to IntraPredModeC, the variable predModeIntraBc set equal to 0, **[[and]]** the variable cIdx set equal to 2, **and variable controlPara set equal to (color_transform_flag[xCb][yCb] ? 2 : 3)** as inputs, and the output is a modified reconstructed picture before deblocking filtering.

### 8.4.4.1 General decoding process for intra blocks

Inputs to this process are:

- a variable cIdx specifying the colour component of the current block.
- **a variable controlPara specifying the applicable processes.**

Output of this process is a modified reconstructed picture before deblocking filtering **when controlPara is unequal to 1, or residual sample array when controlPara is equal to 1.**

The luma sample location (xTbY, yTbY) specifying the top-left sample of the current luma transform block relative to the top-left luma sample of the current picture is derived as follows:

$$( \text{xTbY, yTbY} ) = ( \text{cIdx} == 0 ) ? ( \text{xTb0, yTb0} ) : ( \text{xTb0} * \text{SubWidthC, yTb0} * \text{SubHeightC} ) \qquad (8\text{-}26)$$

The variable splitFlag is derived as follows:

- If cIdx is equal to 0, splitFlag is set equal to split_transform_flag[xTbY][yTbY][trafoDepth].
- Otherwise, if all of the following conditions are true, splitFlag is set equal to 1.

  - cIdx is greater than 0
  - split_transform_flag[xTbY][yTbY][trafoDepth] is equal to 1
  - log2TrafoSize is greater than 2

- Otherwise, splitFlag is set equal to 0.

Depending on the value of splitFlag, the following applies:

- If splitFlag is equal to 1, the following ordered steps apply:

- Otherwise (splitFlag is equal to 0), for the variable blkIdx proceeding over the values 0..(cIdx > 0 && ChromaArrayType == 2 ? 1 : 0), the following ordered steps apply:

  1. The variable nTbS is set equal to 1 << log2TrafoSize.
  2. The variable yTbOffset is set equal to blkIdx * nTbS.
  3. The variable yTbOffsetY is set equal to yTbOffset * SubHeightC.
  4. **When controlPara is unequal to 2**, the variable residualDpcm is derived as follows:

     - If all of the following conditions are true, residualDpcm is set equal to 1.

       - implicit_rdpcm_enabled_flag is equal to 1.
       - either
         transform_skip_flag[xTbY][yTbY + yTbOffsetY][cIdx] is equal to 1, or cu_transquant_bypass_flag is equal to 1.

- either predModeIntra is equal to 10, or predModeIntra is equal to 26.

- Otherwise, residualDpcm is set equal to explicit_rdpcm_flag[xTbY][yTbY + yTbOffsetY][cIdx].

5. **When controlPara is unequal to 1, [[D]]d**epending upon the value of predModeIntraBc, the following applies:

- When predModeIntraBc is equal to 0, the general intra sample prediction process as specified in subclause 8.4.4.2.1 is invoked with the transform block location (xTb0, yTbO + yTbOffset), the intra prediction mode predModeIntra, the transform block size nTbS, and the variable cIdx as inputs, and the output is an (nTbS)x(nTbS) array predSamples.
- Otherwise (predModeIntraBc is equal to 1), the intra block copying process as specified in subclause 8.4.4.2.7 is invoked with the transform block location (xTb0, yTb0 + yTbOffset), the transform block size nTbS, the variable trafoDepth, the variable bvIntra, and the variable cIdx as inputs, and the output is an (nTbS)x(nTbS) array predSamples.

6. **When controlPara is unequal to** 2, the scaling and transformation process as specified in subclause 8.6.2 is invoked with the luma location (xTbY, yTbY + yTbOffsetY), the variable trafoDepth, the variable cIdx, and the transform size trafoSize set equal to nTbS as inputs, and the output is an (nTbS)x(nTbS) array resSamples.

7. When **controlPara is unequal to 2 and** residualDpcm is equal to 1, depending upon the value of predModeIntraBc, the following applies:

- When predModeIntraBc is equal to 0, the directional residual modification process for blocks using a transform bypass as specified in subclause 8.6.5 is invoked with the variable mDir set equal to predModeIntra / 26, the variable nTbS, and the (nTbS)x(nTbS) array r set equal to the array resSamples as inputs, and the output is a modified (nTbS)x(nTbS) array resSamples.
- Otherwise, (predModeIntraBc is equal to 1), the directional residual modification process for blocks using a transform bypass as specified in subclause 8.6.5 is invoked with the variable mDir set equal to explicit_rdpcm_dir_flag[xTbY][yTbY + yTbOffsetY][cIdx], the variable nTbS, and the (nTbS)x(nTbS) array r set equal to the array resSamples as inputs, and the output is a modified (nTbS)x(nTbS) array resSamples.

8. When **controlPara is unequal to 2 and** cross_component_prediction_enabled_flag is equal to 1, ChromaArrayType is equal to 3, and cIdx is not equal to 0, the residual modification process for transform blocks using cross-component prediction as specified in subclause 8.6.6 is invoked with the current luma transform block location (xTbY, yTbY), the variable nTbS, the variable cIdx, the (nTbS)x(nTbS) array $r_Y$ set equal to the corresponding luma residual sample array resSamples of the current transform block, and the (nTbS)x(nTbS) array r set equal to the array resSamples as inputs, and the output is a modified (nTbS)x(nTbS) array resSamples.

9. **When controlPara is unequal to 1, [[T]]t**he picture reconstruction process prior to in-loop filtering for a colour component as specified in subclause 8.6.6 is invoked with the transform block location (xTb0, yTb0 + yTbOffset), the variables nCurrSw and nCurrSh both set equal to nTbS, the variable cIdx, the (nTbS)x(nTbS) array predSamples, and the (nTbS)x(nTbS) array resSamples as inputs.

### 8.5.4 Decoding process for the residual signal of coding units

### coded in inter prediction mode

#### 8.5.4.1 General

Inputs to this process are:

- ...

Outputs of this process are:

...

Depending on the value of rqt_root_cbf, the following applies:

- If rqt_root_cbf is equal to 0 or skip_flag[xCb][yCb] is equal to 1, all samples of the (nCbS_L)x(nCbS_L) array resSamples_L and when ChromaArrayType is not equal to 0, all samples of the two (nCbSw_C)x(nCbSh_C) arrays resSamples_Cb

and resSamples$_{Cr}$ are set equal to 0.

- Otherwise (rqt_root_cbf is equal to 1), the following ordered steps apply:

    1. ...

    2. ....

    3. When ChromaArrayType is not equal to 0, the decoding process for chroma residual blocks as specified in subclause 8.5.4.3 below is invoked with the luma location (xCb, yCb), the luma location (xB0, yB0) set equal to (0, 0), the variable log2TrafoSize set equal to log2CbSize, the variable trafoDepth set equal to 0, the variable cIdx set equal to 2, the variable nCbSw set equal to nCbSw$_C$, the variable nCbSh set equal to nCbSh$_C$, and the (nCbSw$_C$)x(nCbSh$_C$) array resSamples$_{Cr}$ as inputs, and the output is a modified version of the (nCbSw$_C$)x(nCbSh$_C$) array resSamples$_{Cr}$.

    **4. When color_transform_flag[xCb][yCb] is equal to 1, the residual modification process for residual blocks using color space conversion as specified in subclause 8.6.7 is invoked with the variable blkSize set equal to nCbS$_L$, the (nCbS$_L$)x(nCbS$_L$) array r$_Y$ set equal to resSamples$_L$, the (nCbS$_L$)x(nCbS$_L$) array r$_{Cb}$ set equal to resSamples$_{Cb}$, and the (nCbS$_L$)x(nCbS$_L$) array r$_{Cr}$ set equal to resSamples$_{Cr}$ as inputs, and the modified arrays resSamples$_L$, resSamples$_{Cb}$ and resSamples$_{Cr}$ as outputs.**

8.6.1 Derivation process for quantization parameters

Input to this process is a luma location (xCb, yCb) specifying the top-left sample of the current luma coding block relative to the top-left luma sample of the current picture.

In this process, the variable Qpy, the luma quantization parameter Qp'y, and the chroma quantization parameters Qp'$_{Cb}$ and Qp'$_{Cr}$ are derived.

The luma location (xQg, yQg), specifies the top-left luma sample of the current quantization group relative to the top-left luma sample of the current picture. The horizontal and vertical positions xQg and yQg are set equal to xCb - (xCb & ((1 << Log2MinCuQpDeltaSize) - 1)) and yCb - (yCb & ((1 << Log2MinCuQpDeltaSize) - 1)), respectively. The luma size of a quantization group, Log2MinCuQpDeltaSize, determines the luma size of the smallest area inside a coding tree block that shares the same qP$_{Y\_PRED}$.

The predicted luma quantization parameter qP$_{Y\_PRED}$ is derived by the following ordered steps:
The variable Qpy is derived as follows:

$$Qp_Y = ( ( qP_{Y\_PRED} + CuQpDeltaVal + 52 + 2 * QpBdOffset_Y )\%( 52 + QpBdOffset_Y ) ) - QpBdOffset_Y \quad (8\text{-}261)$$

$$Qp_Y = Qp_Y + (color\_transform\_flag[\,xCb\,][\,yCb\,]\ ?\ deltaQP_{C0} : 0)$$

The luma quantization parameter Qp'$_Y$ is derived as follows:

$$Qp'_Y = Qp_Y + QpBdOffset_Y \qquad\qquad (8\text{-}262)$$

When ChromaArrayType is not equal to 0, the following applies.

- The variables qPi$_{Cb}$ and qPi$_{Cr}$ are derived as follows:

$$qPi_{Cb} = Clip3(\,-QpBdOffset_C, 57, Qp_Y + pps\_cb\_qp\_offset + slice\_cb\_qp\_offset + CuQpOffset_{Cb}\,) \quad (8\text{-}263)$$

$$qPi_{Cr} = Clip3(\ -QpBdOffset_C,\ 57,\ Qp_Y + pps\_cr\_qp\_offset + slice\_cr\_qp\_offset + CuQpOffset_{Cr}\ ) \qquad (8\text{-}264)$$

- If ChromaArrayType is equal to 1, the variables $qP_{Cb}$ and $qP_{Cr}$ are set equal to the value of $Qp_C$ as specified in Table 8-10 based on the index qPi equal to $qPi_{Cb}$ and $qPi_{Cr}$, respectively.
- Otherwise, the variables $qP_{Cb}$ and $qP_{Cr}$ are set equal to Min(qPi, 51), based on the index qPi equal to $qPi_{Cb}$ and $qPi_{Cr}$, respectively.
- The chroma quantization parameters for the Cb and Cr components, $Qp'_{Cb}$ and $Qp'_{Cr}$, are derived as follows:

$$Qp'_{Cb} = qP_{Cb} + QpBdOffset_C \qquad (8\text{-}265)$$

$$Qp'_{Cr} = qP_{Cr} + QpBdOffset_C \qquad (8\text{-}266)$$

Table 8-10 - Specification of $Qp_C$ as a function of qPi for ChromaArrayType equal to 1

| qPi | < 30 | 30 | 31 | 32 | 33 | 34 | 35 | 36 | 37 | 38 | 39 | 40 | 41 | 42 | 43 | > 43 |
|---|---|---|---|---|---|---|---|---|---|---|---|---|---|---|---|---|
| $Qp_C$ | = qPi | 29 | 30 | 31 | 32 | 33 | 33 | 34 | 34 | 35 | 35 | 36 | 36 | 37 | 37 | = qPi - 6 |

$$\boldsymbol{Qp'_{Cb} = Qp'_{Cb} + (color\_transform\_flag[\ xCb\ ][\ yCb\ ]\ ?\ deltaQP_{C1} : 0)}$$

$$Qp'_{Cr} = Qp'_{Cr} + (color\_transform\_flag[\ xCb\ ][\ yCb\ ]\ ?\ deltaQP_{C2} : 0)$$

In one example, $deltaQP_{C0}$, $deltaQP_{C1}$ and $deltaQP_{C2}$ are set to -5, -5 and -3, respectively. In another example, $deltaQP_{C0}$, $deltaQP_{C1}$ and $deltaQP_{C2}$ are set to -5, -5 and -5, respectively.

In the dequantization process, the quantization parameter qP for each component index (cIdx) is derived as follows:

8.6.2 Scaling and transformation process

Inputs to this process are:

- a luma location (xTbY, yTbY) specifying the top-left sample of the current luma transform block relative to the top-left luma sample of the current picture,
- a variable trafoDepth specifying the hierarchy depth of the current block relative to the coding block,
- a variable cIdx specifying the colour component of the current block,
- a variable nTbS specifying the size of the current transform block.

Output of this process is the (nTbS)x(nTbS) array of residual samples r with elements r[x][y].

The quantization parameter qP is derived as follows:

- If cIdx is equal to 0,

$$\mathbf{qP = Qp'_Y\ [[+\ (color\_transform\_flag\ [\ xTbY\ ][\ yTbY\ ]\ ?\ \text{-}5 : 0)]]}\ (8\text{-}267)$$

- Otherwise, if cIdx is equal to 1,

$$\mathbf{qP = Qp'_{Cb}\ [[\ +\ (color\_transform\_flag\ [\ xTbY\ ][\ yTbY\ ]\ ?\ \text{-}5 : 0)]]}\ (8\text{-}268)$$

- Otherwise (cIdx is equal to 2),

$$qP = Qp'_{Cr} \, [[ + (\textbf{color\_transform\_flag} \; [ \; \textbf{xTbY} \; ][ \; \textbf{yTbY} \; ] \; \textbf{? -3 : 0)]]} \quad (8\text{-}269)$$

**8.6.7 Residual modification process for transform blocks using color space conversion**

This process is only invoked when ChromaArrayType is equal to 3.
Inputs to this process are:

- a variable blkSize specifying the block size,
- an (blkSize)x(blkSize) array of luma residual samples $r_Y$ with elements $r_Y[x][y]$,
- an (blkSize)x(blkSize) array of chroma residual samples $r_{Cb}$ with elements $r_{Cb}[x][y]$,
- an (blkSize)x(blkSize) array of chroma residual samples $r_{Cr}$ with elements $r_{Cr}[x][y]$.

Outputs of this process are:

- an modified (blkSize)x(blkSize) array $r_Y$ of luma residual samples,
- an modified (blkSize)x(blkSize) array $r_{Cb}$ of chroma residual samples,
- an modified (blkSize)x(blkSize) array $r_{Cr}$ of chroma residual samples.

The (blkSize)x(blkSize) arrays of residual samples $r_Y$, $r_{Cb}$ and $r_{Cr}$ are modified as follows:

- If cu_transquant_bypass_flag is equal to 1, the (blkSize)x(blkSize) arrays of residual samples $r_Y$, $r_{Cb}$ and $r_{Cr}$ with x = 0..blkSize - 1, y = 0..blkSize - 1 are modified as follows:

$$tmp = r_Y[ \, x \, ][ \, y \, ] - ( \, r_{Cb}[ \, x \, ][ \, y \, ] \; >> \; 1 \, )$$

$$r_Y[ \, x \, ][ \, y \, ] = tmp + r_{Cb}[ \, x \, ][ \, y \, ]$$

$$r_{Cb}[ \, x \, ][ \, y \, ] = tmp - ( \, r_{Cr}[ \, x \, ][ \, y \, ] \; >> \; 1 \, )$$

$$r_{Cr}[ \, x \, ][ \, y \, ] = r_{Cb}[ \, x \, ][ \, y \, ] + r_{Cr}[ \, x \, ][ \, y \, ]$$

- Otherwise (cu_transquant_bypass_flag is equal to 0), the (blkSize)x(blkSize) arrays of residual samples $r_Y$, $r_{Cb}$ and $r_{Cr}$ with x = 0..blkSize - 1, y = 0..blkSize - 1 are modified as follows:

$$tmp = rY[ \, x \, ][ \, y \, ] - rCb[ \, x \, ][ \, y \, ]$$

$$rY[ \, x \, ][ \, y \, ] = rY[ \, x \, ][ \, y \, ] + rCb[ \, x \, ][ \, y \, ]$$

$$rCb[ \, x \, ][ \, y \, ] = tmp - rCr[ \, x \, ][ \, y \, ]$$

$$rCr[ \, x \, ][ \, y \, ] = tmp + rCr[ \, x \, ][ \, y \, ]$$

Table 9-4 - Association of ctxIdx and syntax elements for each initializationType in the initialization process

| Syntax structure | Syntax element | ctxTable | initType | | |
|---|---|---|---|---|---|
| | | | 0 | 1 | 2 |
| coding_unit() | cu_transquant_bypass_flag | Table 98 | 0 | 1 | 2 |
| | cu_skip_flag | Table 9-9 | | 0..2 | 3..5 |
| | intra_bc_flag[ ][ ] | Table 9-33 | 0 | 1 | 2 |
| | pred_mode_flag | Table 9-10 | | 0 | 1 |
| | part_mode | Table 9-11 | 0 9..11 | 1..4 | 5..8 |
| | prev-intra-luma_pred_flag[ ][ ] | Table 9-12 | 0 | 1 | 2 |
| | intra_chroma_pred_mode[ ][ ] | Table 9-13 | 0 | 1 | 2 |
| | rqt_root_cbf | Table 9-14 | | 0 | 1 |
| | **color_transform_flag** | **Table 9-XX** | **0** | **1** | **2** |

**Table 9-XX - Values of initValue for ctxIdx of color_transform_flag**

| Initialization variable | ctxIdx of color_transform_flag | | |
|---|---|---|---|
| | 0 | 1 | 2 |
| **initValue** | **154** | **154** | **154** |

Table 9-34 - Syntax elements and associated binarizations

| Syntax structure | Syntax element | Binarization | |
|---|---|---|---|
| | | Process | Input parameters |
| coding_unit() | cu_tranquant_bypass _flag | FL | cMax = 1 |
| | cu_skip_flag | FL | cMax = 1 |
| | intra _bc_flag | FL | cMax = 1 |
| | pred_mode_flag | FL | cMax = 1 |
| | part_mode | 9.3.3.5 | (xCb, yCb ) = ( x0, y0), log2CbSize |
| | pcm_ flag[ ][ ] | FL | cMax = 1 |
| | prev_ intra_ luma_pred _ flag[ ][ ] | FL | cMax = 1 |
| | mpm_idx[ ][ ] | TR | cMax = 2, cRiceParam = 0 |
| | rem_intra_luma_pred _mode[ ][ ] | FL | cMax = 31 |
| | intra_chroma pred_ m ode[ ][ ] | 9.3.3.6 | - |
| | rqt_root_ cbf | FL | cMax = 1 |
| | **color_transform_flag** | **FL** | **cMax = 1** |

A second example, referred to below as example # 2 will now be described. As indicated above, newly added parts in this Example #2 are highlighted in bold or italic, i.e., **bold** or *italic,* and the deleted parts are marked as bolded double brackets, e.g. **[[deleted text]].** The italic parts are related to proposed techniques in this disclosure. Bold Underlined, i.e., **"bold underlined,"** parts highlight differences between Example #2 and Example #1.

This Example #2 gives an example for the case in which defaultVal is equal to 1. In one example, it could be treated in the same way as what is defined in the section above for Example #1.

Alternatively, the following may apply to avoid the wrong usage of color transform under the case that one block is intra-coded with the color_transform_flag not present, but the value of color_ transform flag is reset to 1:

8.4.1 General decoding process for coding units coded in intra prediction mode

Inputs to this process are:

- ...

Output of this process is a modified reconstructed picture before deblocking filtering.

The derivation process for quantization parameters as specified in subclause 8.6.1 is invoked with the luma location (xCb, yCb) as input.

A variable nCbS is set equal to 1 << log2CbSize.

Depending on the values of pcm_flag[xCb][yCb] and IntraSplitFlag, the decoding process for luma samples is specified as follows:

- If pcm_flag[xCb][yCb] is equal to 1, the reconstructed picture is modified as follows:

- Otherwise (pcm_flag[xCb][yCb] is equal to 0), if IntraSplitFlag is equal to 0, the following ordered steps apply:

  **1. Set a variable bModified equal to (intra chroma pred mode[x0][y0] = = 4 && color transform flag[xCb][yCb]).**

  2. When intra_bc_flag[xCb][yCb] is equal to 0, the derivation process for the intra prediction mode as specified in subclause 8.4.2 is invoked with the luma location (xCb, yCb) as input.

  3. When intra_bc_flag[xCb][yCb] is equal to 1, the derivation process for block vector components in intra block copying prediction mode as specified in subclause 8.4.4 is invoked with the luma location (xCb, yCb) and variable log2CbSize as inputs, and the output being bvIntra.

  4. If [[color_transform_flag[xCb][yCb]]] bModified is equal to 1, the following applies:

  - **For the variable cIdx proceeding over the values 0..2, the following ordered steps apply:**

  - **Set variable comp equal to (!cIdx ? L : (cIdx = =1 ? Cb : Cr).**

  - **The general decoding process for intra blocks as specified in subclause 8.4.4.1 is invoked with the location (xCb, yCb), the variable log2TrafoSize set equal to log2CbSize, the variable trafoDepth set equal to 0, the variable predModeIntra set equal to IntraPredModeY[xCb][yCb], the variable pred-ModeIntraBc set equal to intra_bc_flag[xCb][yCb], the variable bvIntra, the variable cIdx, and variable controlPara equal to 1 as inputs, and the output is the residual sample array $resSamples_{comp}$.**

  - **The residual modification process for residual blocks using color space conversion as specified in subclause 8.6.7 is invoked with the variable blkSize set equal to nCbS, the (nCbS)x(nCbS) array $r_Y$ set equal to $resSamples_L$, the (nCbS)x(nCbS) array $r_{Cb}$ set equal to $resSamples_{Cb}$, and the (nCbS)x(nCbS) array $r_{Cr}$ set equal to $resSamples_{Cr}$ as inputs, and the output are modified versions of the (nCbS)x(nCbS) arrays $resSamples_L$, $resSamples_{Cb}$ and $resSamples_{Cr}$.**

  5. The general decoding process for intra blocks as specified in subclause 8.4.4.1 is invoked with the luma location (xCb, yCb), the variable log2TrafoSize set equal to log2CbSize, the variable trafoDepth set equal to 0, the variable predModeIntra set equal to IntraPredModeY[xCb][yCb], the variable predModeIntraBc set equal to intra_bc_flag[xCb][yCb], the variable bvIntra, [[and]] the variable cIdx set equal to 0, **and variable controlPara equal to ([[color_transform_flag[xCb][yCb]]] bModified ? 2 : 3)** as inputs, and the output is a modified reconstructed picture before deblocking filtering.

  - Otherwise (pcm_flag[xCb][yCb] is equal to 0 and IntraSplitFlag is equal to 1), for the variable blkIdx proceeding over the values 0..3, the following ordered steps apply:

  6. The variable xPb is set equal to xCb + (nCbS >> 1) * (blkIdx % 2).

  7. The variable yPb is set equal to yCb + (nCbS >> 1) * (blkIdx / 2).

8. The derivation process for the intra prediction mode as specified in subclause 8.4.2 is invoked with the luma location (xPb, yPb) as input.

**9. If [[color_transform_flag[xCb][yCb]]] bModified is equal to 1, the following applies:**

- **For the variable cIdx proceeding over the values 0..2, the following ordered steps apply:**

    - **Set variable comp equal to (!cIdx ? L : (cIdx = =1 ? Cb : Cr).**

    - **The general decoding process for intra blocks as specified in subclause 8.4.4.1 is invoked with the luma location (xPb, yPb), the variable log2TrafoSize set equal to log2CbSize - 1, the variable trafoDepth set equal to 1, the variable predModeIntra set equal to IntraPredModeY[xPb][yPb], the variable predModeIntraBc set equal to 0, the variable cIdx, and variable controlPara set equal to 1 as inputs, and the output is the residual sample array resSamples$_{comp}$.**

    - **Set the variable nSubCbS equal to (nCbS >> 1) and the residual modification process for residual blocks using color space conversion as specified in subclause 8.6.7 is invoked with the variable blkSize set equal to nSubCbS, the (nSubCbS)x(nSubCbS) array r$_Y$ set equal to resSamples$_L$, the (nSubCbS)x(nSubCbS) array r$_{Cb}$ set equal to resSamples$_{Cb}$, and the (nSubCbS)x(nSubCbS) array r$_{Cr}$ set equal to resSamples$_{Cr}$ as inputs, and the outputs are modified versions of the (nSubCbS)x(nSubCbS) arrays resSamples$_L$, resSamples$_{Cb}$ and resSamples$_{Cr}$.**

10. The general decoding process for intra blocks as specified in subclause 8.4.4.1 is invoked with the luma location (xPb, yPb), the variable log2TrafoSize set equal to log2CbSize - 1, the variable trafoDepth set equal to 1, the variable predModeIntra set equal to IntraPredModeY[xPb][yPb], the variable predModeIntraBc set equal to 0, **[[and]]** the variable cIdx set equal to 0 , **and variable controlPara set equal to ([[color_transform_flag[xCb][yCb]]] bModified ? 2 : 3)** as inputs, and the output is a modified reconstructed picture before deblocking filtering.

When ChromaArrayType is not equal to 0, the following applies.
The variable log2CbSizeC is set equal to
log2CbSize - (ChromaArrayType = = 3 ? 0 : 1).
Depending on the value of pcm_flag[xCb][yCb] and IntraSplitFlag, the decoding process for chroma samples is specified as follows:

- If pcm_flag[xCb][yCb] is equal to 1, the reconstructed picture is modified as follows:

- Otherwise (pcm_flag[xCb][yCb] is equal to 0), if IntraSplitFlag is equal to 0 or ChromaArrayType is not equal to 3, the following ordered steps apply:

    4. When intra_bc_flag[xCb][yCb] is equal to 0, the derivation process for the chroma intra prediction mode as specified in 8.4.3 is invoked with the luma location (xCb, yCb) as input, and the output is the variable IntraPredModeC.

    5. The general decoding process for intra blocks as specified in subclause 8.4.4.1 is invoked with the chroma location (xCb / SubWidthC, yCb / SubHeightC), the variable log2TrafoSize set equal to log2CbSizeC, the variable trafoDepth set equal to 0, the variable predModeIntra set equal to IntraPredModeC, the variable predModeIntraBc set equal to intra_bc_flag[xCb][yCb], the variable bvIntra, the variable cIdx set equal to 1, **and variable controlPara set equal to ([[color_transform_flag[xCb][yCb]]] bModified? 2 : 3)** as inputs, and the output is a modified reconstructed picture before deblocking filtering.

    6. The general decoding process for intra blocks as specified in subclause 8.4.4.1 is invoked with the chroma location (xCb / SubWidthC, yCb / SubHeightC), the variable log2TrafoSize set equal to log2CbSizeC, the variable trafoDepth set equal to 0, the variable predModeIntra set equal to IntraPredModeC, the variable predModeIntraBc set equal to intra_bc_flag[xCb][yCb], the variable bvIntra, the variable cIdx set equal to 2 , **and variable controlPara set equal to ([[color_transform_flag[xCb][yCb]]] bModified ? 2 : 3)** as inputs, and the output is a modified reconstructed picture before deblocking filtering.

- Otherwise (pcm_flag[xCb][yCb] is equal to 0, IntraSplitFlag is equal to 1 and ChromaArrayType is equal to 3), for the variable blkIdx proceeding over the values 0..3, the following ordered steps apply:

6. The variable xPb is set equal to xCb + (nCbS >> 1) * (blkIdx % 2).

7. The variable yPb is set equal to yCb + (nCbS >> 1) * (blkIdx / 2).

8. The derivation process for the chroma intra prediction mode as specified in 8.4.3 is invoked with the luma location (xPb, yPb) as input, and the output is the variable IntraPredModeC.

9. The general decoding process for intra blocks as specified in subclause 8.4.4.1 is invoked with the chroma location (xPb, yPb), the variable log2TrafoSize set equal to log2CbSizeC - 1, the variable trafoDepth set equal to 1, the variable predModeIntra set equal to IntraPredModeC, the variable predModeIntraBc set equal to 0, **[[and]]** the variable cIdx set equal to 1, **and variable controlPara set equal to ([[color_transform_flag[xCb][yCb]]] bModified? 2 : 3)** as inputs, and the output is a modified reconstructed picture before deblocking filtering.

10. The general decoding process for intra blocks as specified in subclause 8.4.4.1 is invoked with the chroma location (xPb, yPb), the variable log2TrafoSize set equal to log2CbSizeC - 1, the variable trafoDepth set equal to 1, the variable predModeIntra set equal to IntraPredModeC, the variable predModeIntraBc set equal to 0, **[[and]]** the variable cIdx set equal to 2, **and variable controlPara set equal to ([[color_transform_flag[xCb][yCb]]] bModified ? 2 : 3)** as inputs, and the output is a modified reconstructed picture before deblocking filtering.

8.6.1 Derivation process for quantization parameters

Input to this process is a luma location (xCb, yCb) specifying the top-left sample of the current luma coding block relative to the top-left luma sample of the current picture.

In this process, the variable Qpy, the luma quantization parameter $Qp'_y$, and the chroma quantization parameters $Qp'_{Cb}$ and $Qp'_{Cr}$ are derived.

The luma location (xQg, yQg), specifies the top-left luma sample of the current quantization group relative to the top-left luma sample of the current picture. The horizontal and vertical positions xQg and yQg are set equal to
xCb - (xCb & ((1 << Log2MinCuQpDeltaSize) - 1)) and
yCb - (yCb & ((1 << Log2MinCuQpDeltaSize) - 1)), respectively. The luma size of a quantization group, Log2MinCuQpDeltaSize, determines the luma size of the smallest area inside a coding tree block that shares the same $qP_{Y\_PRED}$.

The predicted luma quantization parameter $qP_{Y\_PRED}$ is derived by the following ordered steps:
**The variable bModified is defined as (color transform flag[xCb][yCb]&& (CuPredMode[xCb][yCb] = = MODE INTER ‖ intra chroma pred mode[xCb][yCb] = = 4)).**

The variable Qpy is derived as follows:

$$Qp_Y = (( qP_{Y\_PRED} + CuQpDeltaVal + 52 + 2 * QpBdOffset_Y )\%( 52 + QpBdOffset_Y )) - QpBdOffset_Y \quad (8\text{-}261)$$

$$Qp_Y = Qp_Y + ([[color\_transform\_flag[ xCb ][ yCb ]]]\ bModified\ ?\ deltaQP_{C0} : 0)$$

The luma quantization parameter $Qp'_Y$ is derived as follows:

$$Qp'_Y = Qp_Y + QpBdOffset_Y \quad\quad (8\text{-}262)$$

When ChromaArrayType is not equal to 0, the following applies.

- ...
- The chroma quantization parameters for the Cb and Cr components, $Qp'_{Cb}$ and $Qp'_{Cr}$, are derived as follows:

$$Qp'_{Cb} = qP_{Cb} + QpBdOffset_C \qquad (8\text{-}265)$$

$$Qp'_{Cr} = qP_{Cr} + QpBdOffset_C \qquad (8\text{-}266)$$

$Qp'_{Cb} = Qp'_{Cb} + ([[color\_transform\_flag[\ xCb\ ][\ yCb\ ]]]\ \underline{\textbf{bModified}}\ ?\ deltaQP_{C1} : 0)$

$Qp'_{Cr} = Qp'_{Cr} + ([[color\_transform\_flag[\ xCb\ ][\ yCb\ ]]]\ \underline{\textbf{bModified}}\ ?\ deltaQP_{C2} : 0)$

Alternatively, the following may apply:
**The variable bModified is defined as (color transform flag[xCb][yCb&& (CuPredMode[xCb][vCb] ! = MODE INTRA ‖ intra chroma pred mode[xCb][yCb] = = 4)).**
Alternatively, the following may apply:
**The variable bModified is defined as (color transform flag[xCb][vCb]&&(CuPredMode[xCb][vCb] ! = MODE INTRA ‖ intra bc flag[xCb][vCb] ‖ intra chroma pred mode[xCb][vCb] = = 4)).**
A third example, referred to below as example # 3 will now be described. The differences between this Example #3 and Example #2 as described above are highlighted in bold, i.e., **"bold."** In this Example 3, the Qp'y, $Qp'_{Cb}$ and $Qp'_{Cr}$ are kept unchanged. However, the dequantization and deblocking filter process will check the usage of color transform and modify the QP.

8.6.1 Derivation process for quantization parameters

Input to this process is a luma location (xCb, yCb) specifying the top-left sample of the current luma coding block relative to the top-left luma sample of the current picture.
In this process, the variable $Qp_Y$, the luma quantization parameter $Qp'_Y$, and the chroma quantization parameters $Qp'_{Cb}$ and $Qp'_{Cr}$ are derived.
The luma location (xQg, yQg), specifies the top-left luma sample of the current quantization group relative to the top-left luma sample of the current picture. The horizontal and vertical positions xQg and yQg are set equal to
xCb - (xCb & ((1 « Log2MinCuQpDeltaSize) - 1)) and
yCb - (yCb & ((1 « Log2MinCuQpDeltaSize) - 1)), respectively. The luma size of a quantization group, Log2MinCuQpDeltaSize, determines the luma size of the smallest area inside a coding tree block that shares the same $qP_{Y\_PRED}$.
The predicted luma quantization parameter $qP_{Y\_PRED}$ is derived by the following ordered steps:
The variable $Qp_Y$ is derived as follows:

$$Qp_Y = \\ (\ (\ qP_{Y\_PRED} + CuQpDeltaVal + 52 + 2 * QpBdOffset_Y\ )\%(\ 52 + QpBdOffset_Y\ )\ ) - QpBdOffset_Y \quad (8\text{-}261)$$

$$[[Qp_Y = Qp_Y + (color\_transform\_flag[\ xCb\ ][\ yCb\ ]\ bModified\ ?\ deltaQP_{C0} : 0)]]$$

The luma quantization parameter $Qp'_Y$ is derived as follows:

$$Qp'_Y = Qp_Y + QpBdOffset_Y \qquad (8\text{-}262)$$

When ChromaArrayType is not equal to 0, the following applies.

- ...
- The chroma quantization parameters for the Cb and Cr components, $Qp'_{Cb}$ and $Qp'_{Cr}$, are derived as follows:

$$Qp'_{Cb} = qP_{Cb} + QpBdOffset_C \qquad (8\text{-}265)$$

$$Qp'_{Cr} = qP_{Cr} + QpBdOffset_C \qquad (8\text{-}266)$$

$$[[Qp'_{Cb} = Qp'_{Cb} + (color\_transform\_flag[\ xCb\ ][\ yCb\ ]\ bModified\ ?\ deltaQPC1 : 0)]]$$

$$[[Qp'_{Cr} = Qp'_{Cr} + (color\_transform\_flag[\ xCb\ ][\ yCb\ ]\ bModified\ ?\ deltaQPC2 : 0)]]$$

Alternatively, the following may apply:
**[[The variable bModified is defined as (color_transform_flag[xCb][yCb]&& (CuPredMode[xCb][yCb] ! = MODE_INTRA ‖ intra_chroma_pred_mode[xCb][yCb] = = 4)).]]**
Alternatively, the following may apply:
**[[The variable bModified is defined as (color_transform_flag[xCb][yCb]&&(CuPredMode[xCb][yCb] ! = MODE_INTRA ‖intra_bc_flag[xCb][yCb] ‖ intra_chroma_pred_mode[xCb][yCb] = = 4)).]]**

8.6.2 Scaling and transformation process

Inputs to this process are:

- a luma location $(xTbY, yTbY)$ specifying the top-left sample of the current luma transform block relative to the top-left luma sample of the current picture,
- a variable trafoDepth specifying the hierarchy depth of the current block relative to the coding block,
- a variable cIdx specifying the colour component of the current block,
- a variable nTbS specifying the size of the current transform block.

Output of this process is the $(nTbS)x(nTbS)$ array of residual samples r with elements $r[x][y]$.
**Set the variable xCb and yCb to be the top-left position of the coding unit covering the current luma transform block.**
The quantization parameter qP is derived as follows:

- If cIdx is equal to 0,

$$qP = Qp'_Y + \textbf{(color\_transform\_flag[\ xCb\ ][\ yCb\ ] ? deltaQP}_{C0} \textbf{: 0)}\ (8\text{-}267)$$

- Otherwise, if cIdx is equal to 1,

$$qP = Qp'_{Cb} + \textbf{(color\_transform\_flag[\ xCb\ ][\ yCb\ ] ? deltaQP}_{C1} \textbf{: 0)}\ (8\text{-}268)$$

- Otherwise (cIdx is equal to 2),

$$qP = Qp'_C + \textbf{(color\_transform\_flag[\ xCb\ ][\ yCb\ ] ? deltaQP}_{C2} \textbf{: 0)}\ (8\text{-}269)$$

8.7.2.5.3 Decision process for luma block edges

Inputs to this process are:

- a luma picture sample array $recPicture_L$,
- a luma location $(xCb, yCb)$ specifying the top-left sample of the current luma coding block relative to the top-left luma sample of the current picture,
- a luma location $(xBl, yBl)$ specifying the top-left sample of the current luma block relative to the top-left sample of the current luma coding block,
- a variable edgeType specifying whether a vertical (EDGE_VER) or a horizontal (EDGE HOR) edge is filtered,
- a variable bS specifying the boundary filtering strength.

Outputs of this process are:

- the variables dE, dEp, and dEq containing decisions,
- the variables $\beta$ and $t_C$.

If edgeType is equal to EDGE_VER, the sample values $p_{i,k}$ and $q_{i,k}$ with i = 0..3 and k = 0 and 3 are derived as follows:

$$q_{i,k} = recPicture_L[\ xCb + xBl + i\ ][\ yCb + yBl + k\ ]\ (8\text{-}300)$$

$$p_{i,k} = recPicture_L[\ xCb + xBl - i - 1\ ][\ yCb + yBl + k\ ]\ (8\text{-}301)$$

Otherwise (edgeType is equal to EDGE_HOR), the sample values $p_{i,k}$ and $q_{i,k}$ with i = 0..3 and k = 0 and 3 are derived as follows:

$$q_{i,k} = recPicture_L[\ xCb + xBl + k\ ][\ yCb + yBl + i\ ]\ (8\text{-}302)$$

$$p_{i,k} = recPicture_L[\ xCb + xBl + k\ ][\ yCb + yBl - i - 1\ ]\ (8\text{-}303)$$

The variables $Qp_Q$ and $Qp_P$ are set equal to the Qpy values of the coding units which include the coding blocks containing the sample $q_{0,0}$ and $p_{0,0}$, respectively.

when color_transform_flag[xCb][yCb] of the coding unit containing the sample $q_{0,0}$ is equal to 1, $Qp_Q$ is reset equal to ($Qp_Q$ + deltaQP$_{C0}$).

when color_transform_flag[xCb][yCb] of the coding unit containing the sample $p_{0,0}$ is equal to 1, $Qp_P$ is reset equal to ($Qp_P$ + deltaQP$_{C0}$).

A variable $qP_L$ is derived as follows:

$$qP_L = (\ (\ Qp_Q + Qp_P + 1\ )\ >> \ 1\ )\ (8\text{-}304)$$

8.7.2.5.5 Filtering process for chroma block edges

This process is only invoked when ChromaArrayType is not equal to 0.

Inputs to this process are:

- a chroma picture sample array s',
- a chroma location (xCb, yCb) specifying the top-left sample of the current chroma coding block relative to the top-left chroma sample of the current picture,
- a chroma location (xBl, yBl) specifying the top-left sample of the current chroma block relative to the top-left sample of the current chroma coding block,
- a variable edgeType specifying whether a vertical (EDGE VER) or a horizontal (EDGE_HOR) edge is filtered,
- a variable cQpPicOffset specifying the picture-level chroma quantization parameter offset.

Output of this process is the modified chroma picture sample array s'.

If edgeType is equal to EDGE_VER, the values $p_i$ and $q_i$ with i = 0..1 and k = 0..3 are derived as follows:

$$q_{i,k} = s'[\ xCb + xBl + i\ ][\ yCb + yBl + k\ ]\ (8\text{-}335)$$

$$p_{i,k} = s'[\ xCb + xBl - i - 1\ ][\ yCb + yBl + k\ ]\ (8\text{-}336)$$

Otherwise (edgeType is equal to EDGE _HOR), the sample values $p_i$ and $q_i$ with i = 0..1 and k = 0..3 are derived as follows:

$$q_{i,k} = s'[\ xCb + xBl + k\ ][\ yCb + yBl + i\ ]\ (8\text{-}337)$$

$$p_{i,k} = s'[\ xCb + xBl + k\ ][\ yCb + yBl - i - 1\ ]\ (8\text{-}338)$$

The variables $Qp_Q$ and $Qpp$ are set equal to the Qpy values of the coding units which include the coding blocks containing the sample $q_{0,0}$ and $p_{0,0}$, respectively.

**when color_transform_flag[xCb][yCb] of the coding unit containing the sample $q_{0,0}$ is equal to 1, $Qp_Q$ is reset equal to ($Qp_Q$ + deltaQP$_{C1}$).**

**when color_transform_flag[xCb][yCb] of the coding unit containing the sample $p_{0,0}$ is equal to 1, $Qp_P$ is reset equal to ($Qp_P$ + deltaQP$_{C1}$).**

If ChromaArrayType is equal to 1, the variable $Qp_C$ is determined as specified in Table 8-10 based on the index qPi derived as follows:

$$qPi = (\ (\ Qp_Q + Qp_P + 1\ )\ >>\ 1\ ) + cQpPicOffset\ (8\text{-}339)$$

In one example, deltaQP$_{C0}$, deltaQP$_{C1}$ and deltaQP$_{C2}$ are set to -5, -5 and -3, respectively.

In another example, deltaQP$_{C0}$, deltaQP$_{C1}$ and deltaQP$_{C2}$ are set to -5, -5 and -5, respectively.

Alternatively, color_transform_flag[xCb][yCb] could be replaced by bModified as used in sub-clause 8.6.1 of Example #2 above.

A fourth example, referred to below as example # 4 will now be described. In Example #1, $QP_Y$, $Qp'_{Cb}$, $Qp'_{Cr}$ are modified in section 8.6.1. In this case, the QPs used in deblocking filter process and dequantization process are kept to be the same. However, the QP predictor derivation process is not changed (i.e., $qP_{Y\_PRED}$ in sub-clause 8.6.1). In this example, the derivation process of QP predictor is modified when color transform is enabled for current slice. In addition to current conditions for deriving QP predictor, the color transform flag of associated neighboring blocks/last coded blocks are further included. This is corresponding to bullet 5 of section 4. Furthermore, the derived QP values are restricted to be no smaller than 0. The changes compared to example #1 are highlighted in **bold.**

8.6.1 Derivation process for quantization parameters

Input to this process is a luma location (xCb, yCb) specifying the top-left sample of the current luma coding block relative to the top-left luma sample of the current picture.

In this process, the variable Qpy, the luma quantization parameter Qp'y, and the chroma quantization parameters $Qp'_{Cb}$ and $Qp'_{Cr}$ are derived.

The luma location (xQg, yQg), specifies the top-left luma sample of the current quantization group relative to the top-left luma sample of the current picture. The horizontal and vertical positions xQg and yQg are set equal to xCb - (xCb & ((1 << Log2MinCuQpDeltaSize) - 1)) and
yCb - (yCb & ((1 << Log2MinCuQpDeltaSize) - 1)), respectively. The luma size of a quantization group, Log2MinCuQpDeltaSize, determines the luma size of the smallest area inside a coding tree block that shares the same $qP_{Y\_PRED}$.

The predicted luma quantization parameter $qP_{Y\_PRED}$ is derived by the following ordered steps:

1. **Set variable b$_{Y\_PREV}$ equal to false, and** the variable $qP_{Y\_PREV}$ is derived as follows:

   - If one or more of the following conditions are true, $qP_{Y\_PREV}$ is set equal to SliceQp$_Y$:

     - The current quantization group is the first quantization group in a slice.
     - The current quantization group is the first quantization group in a tile.
     - The current quantization group is the first quantization group in a coding tree block row and entropy_coding_sync_enabled_flag is equal to 1.

   - Otherwise, $qP_{Y\_PREV}$ **and b$_{Y\_PREV}$ are** set equal to the luma quantization parameter Qpy **and color_transform_flag** of the last coding unit in the previous quantization group in decoding order, **repectively.**

2. The availability derivation process for a block in z-scan order as specified in subclause 6.4.1 is invoked with the location (xCurr, yCurr) set equal to (xCb, yCb) and the neighbouring location (xNbY, yNbY) set equal to (xQg - 1, yQg) as inputs, and the output is assigned to availableA. The variable $qP_{Y\_A}$ **and** $b_{Y\_A}$ **are** derived as follows:

- If one or more of the following conditions are true, $qP_{Y\_A}$ is set equal to $qP_{Y\_PREV}$ **and** $b_{Y\_A}$ **is set equal to** $b_{Y\_PREV}$:

  - availableA is equal to FALSE.

  - the coding tree block address ctbAddrA of the coding tree block containing the luma coding block covering the luma location (xQg - 1, yQg) is not equal to CtbAddrInTs, where ctbAddrA is derived as follows:

$$xTmp = ( xQg - 1 ) >> MinTbLog2SizeY$$

$$yTmp = yQg >> MinTbLog2SizeY$$

$$minTbAddrA = MinTbAddrZs[ xTmp ][ yTmp ]$$

$$ctbAddrA = minTbAddrA >> ( 2 * ( CtbLog2SizeY - MinTbLog2SizeY ) ) \quad (8\text{-}252)$$

- Otherwise, $qP_{Y\_A}$ **and** $b_{Y\_A}$ **are** is set equal to the luma quantization parameter Qpy **and color_transform_flag** of the coding unit containing the luma coding block covering (xQg - 1, yQg), repectively.

3. The availability derivation process for a block in z-scan order as specified in subclause 6.4.1 is invoked with the location (xCurr, yCurr) set equal to (xCb, yCb) and the neighbouring location (xNbY, yNbY) set equal to (xQg, yQg - 1) as inputs, and the output is assigned to availableB. The variable $qP_{Y\_B}$ **and** $b_{Y\_B}$ **are** derived as follows:

- If one or more of the following conditions are true, $qP_{Y\_B}$ is set equal to $qP_{Y\_PREV}$ **and** $b_{Y\_B}$ **is set equal to** $b_{Y\_PREV}$:

  - availableB is equal to FALSE.
  - the coding tree block address ctbAddrB of the coding tree block containing the luma coding block covering the luma location (xQg, yQg - 1) is not equal to CtbAddrInTs, where ctbAddrB is derived as follows:

$$xTmp = xQg >> MinTbLog2SizeY$$

$$yTmp = ( yQg - 1 ) >> MinTbLog2SizeY$$

$$minTbAddrB = MinTbAddrZs[ xTmp ][ yTmp ]$$

$$ctbAddrB = minTbAddrB >> ( 2 * ( CtbLog2SizeY - MinTbLog2SizeY ) )$$
$$(8\text{-}253)$$

- Otherwise, $qP_{Y\_B}$ and $b_{Y\_B}$ **are** is set equal to the luma quantization parameter Qpy **and color_transform_flag** of the coding unit containing the luma coding block covering (xQg, yQg - 1), **respectively.**

4. The predicted luma quantization parameter $qP_{Y\_PRED}$ is derived as follows:

   **If** $b_{Y\_A}$ **and** $b_{Y\_B}$ **are equal,**

$$qP_{Y\_PRED} = (( qP_{Y\_A} + qP_{Y\_B} + 1 ) >> 1) +$$
$$(\text{color\_transform\_flag}[ xCb ][ yCb ] == b_{Y\_A} ? 0: (b_{Y\_A} ? -deltaQP_{c0} : deltaQP_{c0}) \qquad (8\text{-}254)$$

If $b_{Y\_A}$ and $b_{Y\_B}$ are different,

$$qP_{Y\_PRED} = (( qP_{Y\_A} + qP_{Y\_B} - deltaQP_{c0} + 1 ) >> 1) +$$
$$(\text{color\_transform\_flag}[ xCb ][ yCb ] ? deltaQP_{c0} :0) \qquad (8\text{-}254)$$

Alternatively, when $b_{Y\_A}$ and $b_{Y\_B}$ are equal, the formula (8-254) could be replaced by the following:

$$qP_{Y\_PRED} = (( qP_{Y\_A} + qP_{Y\_B} + 1 ) >> 1) +$$
$$(\text{color\_transform\_flag}[ xCb ][ yCb ] == b_{Y\_A} ? 0:$$
$$(\text{color\_transform\_flag}[ xCb ][ yCb ] ? deltaQP_{c0} : -deltaQP_{c0}) \qquad (8\text{-}254)$$

The variable Qpy is derived as follows:

$$Qp_Y =$$
$$( ( qP_{Y\_PRED} + CuQpDeltaVal + 52 + 2 * QpBdOffset_Y )\%( 52 + QpBdOffset_Y ) )$$
$$- QpBdOffset_Y \qquad (8\text{-}261)$$

$$Qp_Y = max(-QpBdOffset_Y,$$

$$Qp_Y + (\text{color\_transform\_flag}[ xCb ][ yCb ] ? deltaQP_{C0} : 0))$$

Alternatively, the above two equations could be replaced by one equation:

$$Qp_Y = ( ( qP_{Y\_PRED} + CuQpDeltaVal + 52 +$$
$$(\text{color\_transform\_flag}[ xCb ][ yCb ] ? deltaQP_{C0} : 0)$$
$$+ 2 * QpBdOffset_Y )\%( 52 + QpBdOffset_Y ) ) - QpBdOffset_Y \qquad (8\text{-}261)$$

The luma quantization parameter $Qp'_Y$ is derived as follows:

$$Qp'_Y = Qp_Y + QpBdOffset_Y \qquad (8\text{-}262)$$

When ChromaArrayType is not equal to 0, the following applies.

- The variables $qPi_{Cb}$ and $qPi_{Cr}$ are derived as follows:

$$qPi_{Cb} = Clip3( -QpBdOffset_C, 57, Qp_Y + pps\_cb\_qp\_offset + slice\_cb\_qp\_offset + CuQpOffset_{Cb} ) \qquad (8\text{-}263)$$

$$qPi_{Cr} = Clip3( -QpBdOffset_C, 57, Qp_Y + pps\_cr\_qp\_offset + slice\_cr\_qp\_offset + CuQpOffset_{Cr} ) \qquad (8\text{-}264)$$

- If ChromaArrayType is equal to 1, the variables $qP_{Cb}$ and $qP_{Cr}$ are set equal to the value of $Qp_C$ as specified in Table 8-10 based on the index qPi equal to $qPi_{Cb}$ and $qPi_{Cr}$, respectively.
- Otherwise, the variables $qP_{Cb}$ and $qP_{Cr}$ are set equal to Min(qPi, 51), based on the index qPi equal to $qPi_{Cb}$ and $qPi_{Cr}$, respectively.

- The chroma quantization parameters for the Cb and Cr components, Qp'$_{Cb}$ and Qp'$_{Cr}$, are derived as follows:

$$Qp'_{Cb} = qP_{Cb} + QpBdOffset_C \qquad (8\text{-}265)$$

$$Qp'_{Cr} = qP_{Cr} + QpBdOffset_C \qquad (8\text{-}266)$$

Table 8-10 - Specification of Qp$_C$ as a function of qPi for ChromaArrayType equal to 1

| Pi | 30 | 0 | 1 | 2 | 3 | 4 | 5 | 6 | 7 | 8 | 9 | 0 | 1 | 2 | 3 | > 43 |
|---|---|---|---|---|---|---|---|---|---|---|---|---|---|---|---|---|
| p$_C$ | qPi | 9 | 0 | 1 | 2 | 3 | 3 | 4 | 4 | 5 | 5 | 6 | 6 | 7 | 7 | qPi - 6 |

$$Qp'_{Cb} = \mathbf{max(0,}\ Qp'_{Cb} + (\text{color\_transform\_flag}[\ xCb\ ][\ yCb\ ]\ ?\ deltaQP_{C1} : 0\mathbf{))}$$

$$Qp'_{Cr} = \mathbf{max(0,}\ Qp'_{Cr} + (\text{color\_transform\_flag}[\ xCb\ ][\ yCb\ ]\ ?\ deltaQP_{C2} : 0\mathbf{)\ )}$$

Alternatively, the following apply to avoid the max function for chroma QP derivation:
When ChromaArrayType is not equal to 0, the following applies.

- The variables qPi$_{Cb}$ and qPi$_{Cr}$ are derived as follows:

$$\mathbf{[[qPi_{Cb} = Clip3(\ {-}QpBdOffset_C,\ 57,\ Qp_Y + pps\_cb\_qp\_offset + slice\_cb\_qp\_offset +}$$
$$\mathbf{CuQpOffset_{Cb}\ )} \qquad \mathbf{(8\text{-}263)}$$

$$\mathbf{qPi_{Cr} = Clip3(\ {-}QpBdOffset_C,\ 57,\ Qp_Y + pps\_cr\_qp\_offset + slice\_cr\_qp\_offset + C}$$
$$\mathbf{uQpOffset_{Cr}\ )} \qquad \mathbf{(8\text{-}264)]]}$$

$$\mathbf{qPi_{Cb} = Clip3(\ {-}QpBdOffset_C,\ 57,\ Qp_Y + pps\_cb\_qp\_offset + slice\_cb\_qp\_offs}$$
$$\mathbf{et + (color\_transform\_flag[\ xCb\ ][\ yCb\ ]\ ?\ (deltaQP_{C1} \text{-} deltaQP_{C0}): 0)}$$
$$\mathbf{+ CuQpOffset_{Cb}\ )} \qquad \mathbf{(8\text{-}263)}$$

$$\mathbf{qPi_{Cr} = Clip3(\ {-}QpBdOffset_C,\ 57,\ Qp_Y + pps\_cr\_qp\_offset + slice\_cr\_qp\_offse}$$
$$\mathbf{t + (color\_transform\_flag[\ xCb\ ][\ yCb\ ]\ ?\ deltaQP_{C2} \text{-} deltaQP_{C0}: 0)}$$
$$\mathbf{+ CuQpOffset_{Cr}\ )} \qquad \mathbf{(8\text{-}264)}$$

- If ChromaArrayType is equal to 1, the variables qP$_{Cb}$ and qP$_{Cr}$ are set equal to the value of Qp$_C$ as specified in Table 8-10 based on the index qPi equal to qPi$_{Cb}$ and qPi$_{Cr}$, respectively.
- Otherwise, the variables qP$_{Cb}$ and qP$_{Cr}$ are set equal to Min(qPi, 51), based on the index qPi equal to qPi$_{Cb}$ and qPi$_{Cr}$, respectively.
- The chroma quantization parameters for the Cb and Cr components, Qp'$_{Cb}$ and Qp'$_{Cr}$, are derived as follows:

$$Qp'_{Cb} = qP_{Cb} + QpBdOffset_C \qquad (8\text{-}265)$$

$$Qp'_{Cr} = qP_{Cr} + QpBdOffset_C \qquad (8\text{-}266)$$

Table 8-10 - Specification of $Qp_C$ as a function of qPi for ChromaArrayType equal to 1

| Pi | 30 | 0 | 1 | 2 | 3 | 4 | 5 | 6 | 7 | 8 | 9 | 0 | 1 | 2 | 3 | > 43 |
|----|-----|---|---|---|---|---|---|---|---|---|---|---|---|---|---|--------|
| $p_C$ | qPi | 9 | 0 | 1 | 2 | 3 | 3 | 4 | 4 | 5 | 5 | 6 | 6 | 7 | 7 | qPi - 6 |

$$[[Qp'_{Cb} = max(0, Qp'_{Cb} + (color\_transform\_flag[ xCb ][ yCb ] ? deltaQP_{C1} : 0))$$

$$Qp'_{Cr} = max(0, Qp'_{Cr} + (color\_transform\_flag[ xCb ][ yCb ] ? deltaQP_{C2} : 0) )]]$$

In one example, $deltaQP_{C0}$, $deltaQP_{C1}$ and $deltaQP_{C2}$ are set to -5, -5 and -3, respectively. In another example, $deltaQP_{C0}$, $deltaQP_{C1}$ and $deltaQP_{C2}$ are set to -5, -5 and -5, respectively.

A constraint may be added in the specification that $qP_{Y\_PRED}$ shall be no less than 0.

In the dequantization process, the quantization parameter qP for each component index (cIdx) is derived as follows:

8.6.2 Scaling and transformation process

Inputs to this process are:

- a luma location (xTbY, yTbY) specifying the top-left sample of the current luma transform block relative to the top-left luma sample of the current picture,
- a variable trafoDepth specifying the hierarchy depth of the current block relative to the coding block,
- a variable cIdx specifying the colour component of the current block,
- a variable nTbS specifying the size of the current transform block.

Output of this process is the (nTbS)x(nTbS) array of residual samples r with elements r[x][y].

The quantization parameter qP is derived as follows:

- If cIdx is equal to 0,

$$qP = Qp'_Y [[+ (color\_transform\_flag [ xTbY ][ yTbY ] ? -5 : 0)]] \qquad (8\text{-}267)$$

- Otherwise, if cIdx is equal to 1,

$$qP = Qp'_{Cb}[[ + (color\_transform\_flag [ xTbY ][ yTbY ] ? -5 : 0)]] \qquad (8\text{-}268)$$

- Otherwise (cIdx is equal to 2),

$$qP = Qp'_{Cr}[[ + (color\_transform\_flag [ xTbY ][ yTbY ] ? -3 : 0)]] \qquad (8\text{-}269)$$

FIG. 8 is a flowchart illustrating an example video decoding method according to embodiment of the invention. The techniques of FIG. 8 will be described with respect to video encoder 20, but it should be understood that the techniques of FIG. 8 are not limited to any particular types of video encoder. Video encoder 20 determines a quantization parameter for the first block (100). In response to determining the first block of video data is coded using a color-space transform mode for residual data of the first block (102, YES), video encoder 20 performs a quantization process for the first block based on a modified quantization parameter for the first block (104). In response to determining the first block of video data is not coded using a color-space transform mode for residual data of the first block (102, NO), video encoder 20 performs a quantization process for the first block based on the unmodified quantization parameter for the first block (106). Video encoder 20 signals for the second block of video data, a difference value indicating a difference between a quantization parameter for the second block and the unmodified quantization parameter for the first block (108).

FIG. 9 is a flowchart illustrating an example video decoding method according to an embodiment of the invention. The techniques of FIG. 9 will be described with respect to video decoder 30, but it should be understood that the techniques of FIG. 9 are not limited to any particular types of video decoder. Video decoder 30 receives for a first block of video data information to determine a quantization parameter for the first block (120). In response to determining the first block of video data is coded using a color-space transform mode for residual data of the first block (122, YES), video decoder 30 determines a modified quantiazatino parameter (124) and performs a dequantization process for the first block based on a modified quantization parameter for the first block (126). In response to determining the first block of video data is not coded using a color-space transform mode for residual data of the first block (122, NO), video decoder 30 performs a dequantization process for the first block based on the unmodified quantization parameter for the first block (128). Video decoder 30 receives for the second block of video data, a difference value indicating a difference between a quantization parameter for the second block and the unmodified quantization parameter for the first block (130).

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware

**Claims**

1. A method of decoding video data, the method comprising:

    receiving a first block of the video data;
    receiving information to determine (120) a quantization parameter for the first block;
    in response to determining that the first block is coded using a color-space transform mode for residual data of the first block (122), modifying the quantization parameter for the first block (124);
    performing a dequantization process for the first block based on the modified quantization parameter for the first block (126);
    receiving a second block of the video data, wherein the second block follows the first block;

receiving for the second block, a difference value indicating a difference between a quantization parameter for the second block and the unmodified quantization parameter for the first block (130);
determining the quantization parameter for the second block based on the received difference value and the unmodified quantization parameter for the first block;
in response to determining that the color-space transform mode is enabled for the second block of video data, modifying the determined quantization parameter for the second block, and
decoding the second block based on the determined quantization parameter for the second block, wherein decoding the second block based on the determined quantization parameter for the second block comprises:
performing a dequantization process for the second block based on the modified quantization parameter for the second block.

2. The method of claim 1, wherein decoding the second block based on the determined quantization parameter for the second block comprises:
in response to determining that the color-space transform mode is disabled for the second block, performing a dequantization process for the second block based on the determined quantization parameter for the second block.

3. The method of claim 1, further comprising:
receiving a flag for the first block to determine that the first block of video data is coded using the color-space transform mode for residual data of the first block.

4. The method of claim 1, wherein receiving information to determine the quantization parameter for the first block comprises receiving an initial value for the quantization parameter for the first block, wherein receiving the initial value preferably comprises receiving, at a slice level, the initial value for the quantization parameter.

5. The method of claim 1, further comprising:

   receiving, at a coded unit level, the difference value indicating the difference between the quantization parameter for the second block and the quantization parameter for the first block; and/or
   wherein receiving the difference value indicating the difference between the quantization parameter for the second block and the quantization parameter for the first block comprises receiving a syntax element indicating the absolute value of the difference and receiving a syntax element indicating a sign of the difference.

6. A method of encoding video data, the method comprising:

   determining a quantization parameter for a first block of video data (100);
   in response to determining that the first block of video data is coded using a color-space transform mode for residual data of the first block (102), modifying the quantization parameter for the first block;
   performing a quantization process for the first block based on the modified quantization parameter for the first block (104);
   determining a quantization parameter for a second block of video data, wherein the second block follows the first block;
   signaling a difference value between the unmodified quantization parameter for the first block and the quantization parameter for the second block (108);
   in response to determining a color-space transform mode is enabled for the second block of video data, modifying the quantization parameter for the second block; and
   performing a quantization process for the second block based on the modified quantization parameter for the second block.

7. The method of claim 6, further comprising:
in response to determining a color-space transform mode is disabled for the second block of video data, performing a quantization process for the second block based on the quantization parameter for the second block.

8. The method of claim 6, further comprising:
generating a flag for the first block to indicate if the first block of video data is coded using the color-space transform mode for residual data of the first block.

9. The method of claim 6, wherein determining the quantization parameter for the first block of video data comprises determining an initial value for the quantization parameter for the first block, the method further comprising:

signaling the initial value in a slice header for a slice comprising the first block.

10. The method of claim 6, further comprising:

signaling, at a coded unit level, the difference value indicating the difference between the quantization parameter for the second block and the quantization parameter for the first block; and/or

signaling the difference value indicating the difference between the quantization parameter for the second block and the quantization parameter for the first block comprises generating a syntax element indicating the absolute value of the difference and generating a syntax element indicating a sign of the difference.

11. The method of claim 1 or claim 6, further comprising:

determining a boundary strength parameter for a deblock filtering process based on the modified quantization parameter for the first block; and

performing the deblock filtering process on the first block.

12. A device for decoding video data, the device comprising:

a memory configured to store video data;
one or more processors configured to:

receive a first block of the video data;
receive information to determine a quantization parameter for the first block;
in response to determining that the first block is coded using a color-space transform mode for residual data of the first block, modify the quantization parameter for the first block;
perform a dequantization process for the first block based on the modified quantization parameter for the first block;
receive a second block of the video data, wherein the second block follows the first block;
receive for the second block, a difference value indicating a difference between a quantization parameter for the second block and the unmodified quantization parameter for the first block;
determine the quantization parameter for the second block based on the received difference value and the unmodified quantization parameter for the first block;
in response to determining that the color-space transform mode is enabled for the second block of video data, modify the determined quantization parameter for the second block; and
decode the second block based on the determined quantization parameter for the second block, wherein to decode the second block based on the determined quantization parameter for the second block, the one or more processors perform a dequantization process for the second block based on the modified quantization parameter for the second block.

13. A device for encoding video data, the device comprising:

a memory configured to store video data;
one or more processors configured to:

determine a quantization parameter for a first block of video data,
in response to determining that the first block of video data is coded using a color-space transform mode for residual data of the first block, modify the quantization parameter for the first block;
perform a quantization process for the first block based on the modified quantization parameter for the first block;
determine a quantization parameter for a second block of video data, wherein the second block follows the first block; and

signal a difference value between the unmodified quantization parameter for the first block and the quantization parameter for the second block;
in response to determining a color-space transform mode is enabled for the second block of video data, modify the quantization parameter for the second block; and
perform a quantization process for the second block based on the modified quantization parameter for the second block.

**14.** The device of claim 12 or claim 13, wherein the device comprises at least one of:

a microprocessor;
an integrated circuit (IC); or
a wireless communication device comprising the video encoder.

**15.** A computer-readable storage medium storing instructions that when executed by one or more processors cause the one or more processors to perform the method of any of claims 1-11.

**Patentansprüche**

**1.** Verfahren zum Decodieren von Videodaten, wobei das Verfahren Folgendes beinhaltet:

Empfangen eines ersten Blocks der Videodaten;
Empfangen von Informationen zur Bestimmung (120) eines Quantisierungsparameters für den ersten Block;
Modifizieren, als Reaktion auf die Feststellung, dass der erste Block mit einem Farbraumtransformationsmodus für Restdaten des ersten Blocks codiert ist (122), des Quantisierungsparameters für den ersten Block (124);
Durchführen eines Dequantisierungsprozesses für den ersten Block auf der Basis des modifizierten Quantisierungsparameters für den ersten Block (126);
Empfangen eines zweiten Blocks der Videodaten, wobei der zweite Block auf den ersten Block folgt;
Empfangen, für den zweiten Block, eines Differenzwertes, der eine Differenz zwischen einem Quantisierungsparameter für den zweiten Block und dem unmodifizierten Quantisierungsparameter für den ersten Block anzeigt (130);
Bestimmen des Quantisierungsparameters für den zweiten Block auf der Basis des empfangenen Differenzwertes und des unmodifizierten Quantisierungsparameters für den ersten Block;
Modifizieren, als Reaktion auf die Feststellung, dass der Farbraumtransformationsmodus für den zweiten Block von Videodaten aktiviert ist, des bestimmten Quantisierungsparameters für den zweiten Block, und
Decodieren des zweiten Blocks auf der Basis des bestimmten Quantisierungsparameters für den zweiten Block, wobei das Decodieren des zweiten Blocks auf der Basis des bestimmten Quantisierungsparameters für den zweiten Block Folgendes beinhaltet:
Durchführen eines Dequantisierungsprozesses für den zweiten Block auf der Basis des modifizierten Quantisierungsparameters für den zweiten Block.

**2.** Verfahren nach Anspruch 1, wobei das Decodieren des zweiten Blocks auf der Basis des bestimmten Quantisierungsparameters für den zweiten Block Folgendes beinhaltet:
Durchführen, als Reaktion auf die Feststellung, dass der Farbraumtransformationsmodus für den zweiten Block deaktiviert ist, eines Dequantisierungsprozesses für den zweiten Block auf der Basis des bestimmten Quantisierungsparameters für den zweiten Block.

**3.** Verfahren nach Anspruch 1, das ferner Folgendes beinhaltet:
Empfangen eines Flag für den ersten Block, um festzustellen, dass der erste Block von Videodaten mit dem Farbraumtransformationsmodus für Restdaten des ersten Blocks codiert ist.

**4.** Verfahren nach Anspruch 1, wobei das Empfangen von Informationen zum Bestimmen des Quantisierungsparameters für den ersten Block das Empfangen eines Anfangswertes für den Quantisierungsparameter für den ersten Block beinhaltet, wobei das Empfangen des Anfangswertes vorzugsweise das Empfangen, auf einer Slice-Ebene, des Anfangswertes für den Quantisierungsparameter beinhaltet.

**5.** Verfahren nach Anspruch 1, das ferner Folgendes beinhaltet:

Empfangen, auf einer Codierte-Einheit-Ebene, des Differenzwertes, der die Differenz zwischen dem Quantisierungsparameter für den zweiten Block und dem Quantisierungsparameter für den ersten Block anzeigt; und/oder
wobei das Empfangen des Differenzwertes, der die Differenz zwischen dem Quantisierungsparameter für den zweiten Block und dem Quantisierungsparameter für den ersten Block anzeigt, das Empfangen eines den Absolutwert der Differenz anzeigenden Syntaxelements und das Empfangen eines ein Vorzeichen der Differenz anzeigenden Syntaxelements beinhaltet.

**6.** Verfahren zum Encodieren von Videodaten, wobei das Verfahren Folgendes beinhaltet:

Bestimmen eines Quantisierungsparameters für einen ersten Block von Videodaten (100);
Modifizieren, als Reaktion auf die Feststellung, dass der erste Block von Videodaten mit einem Farbraumtransformationsmodus für Restdaten des ersten Blocks (102) codiert ist, des Quantisierungsparameters für den ersten Block;
Durchführen eines Quantisierungsprozesses für den ersten Block auf der Basis des modifizierten Quantisierungsparameters für den ersten Block (104);
Bestimmen eines Quantisierungsparameters für einen zweiten Block von Videodaten, wobei der zweite Block auf den ersten Block folgt;
Signalisieren eines Differenzwertes zwischen dem unmodifizierten Quantisierungsparameter für den ersten Block (104) und dem Quantisierungsparameter für den zweiten Block (104);
Modifizieren, als Reaktion auf die Feststellung, dass ein Farbraumtransformationsmodus für den zweiten Block von Videodaten aktiviert ist, des Quantisierungsparameters für den zweiten Block; und
Durchführen eines Quantisierungsprozesses für den zweiten Block auf der Basis des modifizierten Quantisierungsparameters für den zweiten Block.

**7.** Verfahren nach Anspruch 6, das ferner Folgendes beinhaltet:
Durchführen, als Reaktion auf die Feststellung, dass ein Farbraumtransformationsmodus für den zweiten Block von Videodaten deaktiviert ist, eines Quantisierungsprozesses für den zweiten Block auf der Basis des Quantisierungsparameters für den zweiten Block.

**8.** Verfahren nach Anspruch 6, das ferner Folgendes beinhaltet:
Erzeugen eines Flag für den ersten Block, um anzuzeigen, ob der erste Block von Videodaten mit dem Farbraumtransformationsmodus für Restdaten des ersten Blocks codiert ist.

**9.** Verfahren nach Anspruch 6, wobei das Bestimmen des Quantisierungsparameters für den ersten Block von Videodaten das Bestimmen eines Anfangswertes für den Quantisierungsparameter für den ersten Block beinhaltet, wobei das Verfahren ferner Folgendes beinhaltet:
Signalisieren des Anfangswertes in einem Slice-Header für einen Slice, der den ersten Block umfasst.

**10.** Verfahren nach Anspruch 6, das ferner Folgendes beinhaltet:

Signalisieren, auf einer Codierte-Einheit-Ebene, des Differenzwertes, der die Differenz zwischen dem Quantisierungsparameter für den zweiten Block und dem Quantisierungsparameter für den ersten Block anzeigt; und/oder
das Signalisieren des Differenzwertes, der die Differenz zwischen dem Quantisierungsparameter für den zweiten Block und dem Quantisierungsparameter für den ersten Block anzeigt, beinhaltet das Erzeugen eines den Absolutwert der Differenz anzeigenden Syntaxelements und das Erzeugen eines ein Vorzeichen der Differenz anzeigenden Syntaxelements.

**11.** Verfahren nach Anspruch 1 oder Anspruch 6, das ferner Folgendes beinhaltet:

Bestimmen eines Grenzstärkeparameters für einen Deblockierfilterungsprozess auf der Basis des modifizierten Quantisierungsparameters für den ersten Block; und
Durchführen des Deblockierfilterungsprozesses an dem ersten Block.

**12.** Gerät zum Decodieren von Videodaten, wobei das Gerät Folgendes umfasst:

einen Speicher, der zum Speichern von Videodaten konfiguriert ist;
einen oder mehrere Prozessoren, konfiguriert zum:

Empfangen eines ersten Blocks der Videodaten;
Empfangen von Informationen zum Bestimmen eines Quantisierungsparameters für den ersten Block;
Modifizieren, als Reaktion auf die Feststellung, dass der erste Block mit einem Farbraumtransformationsmodus für Restdaten des ersten Blocks codiert ist, des Quantisierungsparameters für den ersten Block;
Durchführen eines Dequantisierungsprozesses für den ersten Block auf der Basis des modifizierten Quantisierungsparameters für den ersten Block;

Empfangen eines zweiten Blocks der Videodaten, wobei der zweite Block auf den ersten Block folgt;
Empfangen, für den zweiten Block, eines Differenzwertes, der eine Differenz zwischen einem Quantisierungsparameter für den zweiten Block und dem unmodifizierten Quantisierungsparameter für den ersten Block anzeigt;
Bestimmen des Quantisierungsparameters für den zweiten Block auf der Basis des empfangenen Differenzwertes und des unmodifizierten Quantisierungsparameters für den ersten Block;
Modifizieren, als Reaktion auf die Feststellung, dass der Farbraumtransformationsmodus für den zweiten Block von Videodaten aktiviert ist, des bestimmten Quantisierungsparameters für den zweiten Block; und
Decodieren des zweiten Blocks auf der Basis des bestimmten Quantisierungsparameters für den zweiten Block, wobei zum Decodieren des zweiten Blocks auf der Basis des bestimmten Quantisierungsparameters für den zweiten Block die ein oder mehreren Prozessoren einen Dequantisierungsprozess für den zweiten Block auf der Basis des modifizierten Quantisierungsparameters für den zweiten Block durchführen.

13. Gerät zum Encodieren von Videodaten, wobei das Gerät Folgendes umfasst:

einen Speicher, der zum Speichern von Videodaten konfiguriert ist;
einen oder mehrere Prozessoren, konfiguriert zum:

Bestimmen eines Quantisierungsparameters für einen ersten Block von Videodaten,
Modifizieren, als Reaktion auf die Feststellung, dass der erste Block von Videodaten mit einem Farbraumtransformationsmodus für Restdaten des ersten Blocks codiert ist, des Quantisierungsparameters für den ersten Block;
Durchführen eines Quantisierungsprozesses für den ersten Block auf der Basis des modifizierten Quantisierungsparameters für den ersten Block;
Bestimmen eines Quantisierungsparameters für einen zweiten Block von Videodaten, wobei der zweite Block auf den ersten Block folgt; und
Signalisieren eines Differenzwertes zwischen dem unmodifizierten Quantisierungsparameter für den ersten Block und dem Quantisierungsparameter für den zweiten Block;
Modifizieren, als Reaktion auf die Feststellung, dass ein Farbraumtransformationsmodus für den zweiten Block von Videodaten aktiviert ist, des Quantisierungsparameters für den zweiten Block; und
Durchführen eines Quantisierungsprozesses für den zweiten Block auf der Basis des modifizierten Quantisierungsparameters für den zweiten Block.

14. Gerät nach Anspruch 12 oder 13, wobei das Gerät mindestens eines umfasst aus:

einem Mikroprozessor;
einer integrierte Schaltung (IC); oder
einem drahtlosen Kommunikationsgerät, das den Video-Encoder umfasst.

15. Computerlesbares Speichermedium, das Befehle speichert, die bei Ausführung durch einen oder mehreren Prozessoren bewirken, dass die ein oder mehreren Prozessoren das Verfahren nach einem der Ansprüche 1-11 durchführen.

**Revendications**

1. Procédé de décodage de données vidéo, le procédé comprenant :

la réception d'un premier bloc des données vidéo ;
la réception d'informations pour déterminer (120) un paramètre de quantification pour le premier bloc ;
en réponse à la détermination que le premier bloc est codé à l'aide d'un mode de transformation dans l'espace chromatique pour des données résiduelles du premier bloc (122), la modification du paramètre de quantification pour le premier bloc (124) ;
la réalisation d'un processus de déquantification pour le premier bloc en fonction du paramètre de quantification modifié pour le premier bloc (126) ;
la réception d'un second bloc des données vidéo, le second bloc suivant le premier bloc ;
la réception pour le second bloc, d'une valeur de différence indiquant une différence entre un paramètre de quantification pour le second bloc et le paramètre de quantification non modifié pour le premier bloc (130) ;

la détermination du paramètre de quantification pour le second bloc en fonction de la valeur de différence reçue et du paramètre de quantification non modifié pour le premier bloc ;

en réponse à la détermination que le mode de transformation dans l'espace chromatique est activé pour le second bloc de données vidéo, la modification du paramètre de quantification déterminé pour le second bloc, et le décodage du second bloc en fonction du paramètre de quantification déterminé pour le second bloc, le décodage du second bloc en fonction du paramètre de quantification déterminé pour le second bloc comprenant : la réalisation d'un processus de déquantification pour le second bloc en fonction du paramètre de quantification modifié pour le second bloc.

2. Procédé selon la revendication 1, dans lequel le décodage du second bloc en fonction du paramètre de quantification déterminé pour le second bloc comprend :

en réponse à la détermination que le mode de transformation dans l'espace chromatique est désactivé pour le second bloc, la réalisation d'un processus de déquantification pour le second bloc en fonction du paramètre de quantification déterminé pour le second bloc.

3. Procédé selon la revendication 1, comprenant en outre :

la réception d'un fanion pour le premier bloc afin de déterminer que le premier bloc de données vidéo est codé à l'aide du mode de transformation dans l'espace chromatique pour des données résiduelles du premier bloc.

4. Procédé selon la revendication 1, dans lequel la réception d'informations pour déterminer le paramètre de quantification pour le premier bloc comprend la réception d'une valeur initiale du paramètre de quantification pour le premier bloc, la réception de la valeur initiale comprenant de préférence la référence, à un niveau de tranche, de la valeur initiale du paramètre de quantification.

5. Procédé selon la revendication 1, comprenant en outre :

la réception, à un niveau d'unité codée, de la valeur de différence indiquant la différence entre le paramètre de quantification pour le second bloc et le paramètre de quantification pour le premier bloc ; et/ou dans lequel la réception de la valeur de différence indiquant la différence entre le paramètre de quantification pour le second bloc et le paramètre de quantification pour le premier bloc comprend la réception d'un élément de syntaxe indiquant la valeur absolue de la différence et la réception d'un élément de syntaxe indiquant un signe de la différence.

6. Procédé de codage de données vidéo, le procédé comprenant :

la détermination d'un paramètre de quantification pour un premier bloc de données vidéo (100) ; en réponse à la détermination que le premier bloc de données vidéo est codé à l'aide d'un mode de transformation dans l'espace chromatique pour des données résiduelles du premier bloc (102), la modification du paramètre de quantification pour le premier bloc ; la réalisation d'un processus de quantification pour le premier bloc en fonction du paramètre de quantification modifié pour le premier bloc (104) ; la détermination d'un paramètre de quantification pour un second bloc de données vidéo, le second bloc suivant le premier bloc ; la signalisation d'une valeur de différence entre le paramètre de quantification non modifié pour le premier bloc et le paramètre de quantification pour le second bloc (108) ; en réponse à la détermination qu'un mode de transformation dans l'espace chromatique est activé pour le second bloc de données vidéo, la modification du paramètre de quantification pour le second bloc ; et la réalisation d'un processus de quantification pour le second bloc en fonction du paramètre de quantification modifié pour le second bloc.

7. Procédé selon la revendication 6, comprenant en outre :

en réponse à la détermination qu'un mode de transformation dans l'espace chromatique est désactivé pour le second bloc de données vidéo, la réalisation d'un processus de quantification pour le second bloc en fonction du paramètre de quantification pour le second bloc.

8. Procédé selon la revendication 6, comprenant en outre :

la génération d'un fanion pour le premier bloc pour indiquer que le premier bloc de données vidéo est codé ou non à l'aide du mode de transformation dans l'espace chromatique pour de données résiduelles du premier bloc.

**9.** Procédé selon la revendication 6, dans lequel la détermination du paramètre de quantification pour le premier bloc de données vidéo comprend la détermination d'une valeur initiale du paramètre de quantification pour le premier bloc, le procédé comprenant en outre :

la signalisation de la valeur initiale dans un en-tête de tranche pour une tranche comprenant le premier bloc.

**10.** Procédé selon la revendication 6, comprenant en outre :

la signalisation, à un niveau d'unité codée, de la valeur de différence indiquant la différence entre le paramètre de quantification pour le second bloc et le paramètre de quantification pour le premier bloc ; et/ou

la signalisation de la valeur de différence indiquant la différence entre le paramètre de quantification pour le second bloc et le paramètre de quantification pour le premier bloc comprenant la génération d'un élément de syntaxe indiquant la valeur absolue de la différence et la génération d'un élément de syntaxe indiquant un signe de la différence.

**11.** Procédé selon la revendication 1 ou la revendication 6, comprenant en outre :

la détermination d'un paramètre de force de frontière pour un processus de filtrage anti-blocs en fonction du paramètre de quantification pour le premier bloc ; et

la réalisation du processus de filtrage anti-blocs sur le premier bloc.

**12.** Dispositif de décodage de données vidéo, le dispositif comprenant :

une mémoire configurée pour mémoriser des données vidéo ;
un ou plusieurs processeurs configurés pour :

recevoir un premier bloc des données vidéo ;
recevoir des informations pour déterminer un paramètre de quantification pour le premier bloc ;
en réponse à la détermination que le premier bloc est codé à l'aide d'un mode de transformation dans l'espace chromatique pour des données résiduelles du premier bloc, modifier le paramètre de quantification pour le premier bloc ;
réaliser un processus de déquantification pour le premier bloc en fonction du paramètre de quantification modifié pour le premier bloc ;
recevoir un second bloc des données vidéo, le second bloc suivant le premier bloc ;
recevoir pour le second bloc, une valeur de différence indiquant une différence entre un paramètre de quantification pour le second bloc et le paramètre de quantification non modifié pour le premier bloc ;
déterminer le paramètre de quantification pour le second bloc en fonction de la valeur de différence reçue et du paramètre de quantification non modifié pour le premier bloc ;
en réponse à la détermination que le mode de transformation dans l'espace chromatique est activée pour le second bloc de données vidéo, modifier le paramètre de quantification déterminé pour le second bloc ; et
décoder le second bloc en fonction du paramètre de quantification déterminé pour le second bloc, dans lequel pour décoder le second bloc en fonction du paramètre de quantification déterminé pour le second bloc, les un ou plusieurs processeurs réalisent un processus de déquantification pour le second bloc en fonction du paramètre de quantification modifié pour le second bloc.

**13.** Dispositif de codage de données vidéo, le dispositif comprenant :

une mémoire configurée pour mémoriser des données vidéo ;
un ou plusieurs processeurs configurés pour :

déterminer un paramètre de quantification pour un premier bloc de données vidéo,
en réponse à la détermination que le premier bloc de données vidéo est codé à l'aide d'un mode de transformation dans l'espace chromatique pour des données résiduelles du premier bloc, modifier le paramètre de quantification pour le premier bloc ;
réaliser un processus de quantification pour le premier bloc en fonction du paramètre de quantification modifié pour le premier bloc ;
déterminer un paramètre de quantification pour un second bloc de données vidéo, le second bloc suivant le premier bloc ; et
signaler une valeur de différence entre le paramètre de quantification non modifié pour le premier bloc et le paramètre de quantification pour le second bloc ;

en réponse à la détermination qu'un mode de transformation dans l'espace chromatique est activé pour le second bloc de données vidéo, modifier le paramètre de quantification pour le second bloc ; et

réaliser un processus de quantification pour le second bloc en fonction du paramètre de quantification modifié pour le second bloc.

14. Dispositif selon la revendication 12 ou la revendication 13, le dispositif comprenant au moins :

un microprocesseur ;

un circuit intégré (IC) ; ou

un dispositif de communication sans fil comprenant le codeur vidéo.

15. Support de mémorisation lisible par ordinateur mémorisant des instructions qui, à leur exécution par un ou plusieurs processeurs, amènent les un ou plusieurs processeurs à réaliser le procédé selon l'une quelconque des revendications 1 à 11.

10

SOURCE DEVICE
12

VIDEO SOURCE
18

VIDEO
ENCODER
20

OUTPUT
INTERFACE
22

16

DESTINATION DEVICE
14

DISPLAY DEVICE
32

VIDEO
DECODER
30

INPUT
INTERFACE
28

FIG. 1

FIG. 2

**FIG. 3B**

PU1

PU0

320

310

**FIG. 3A**

300

PU1

PU0

FIG. 4

EP 3 158 739 B1

**FIG. 5**

**FIG. 6**

EP 3 158 739 B1

**FIG. 7**

```
                                            ┌── 100
         ┌─────────────────────────────┐
         │   DETERMINE A QUANTIZATION   │
         │   PARAMETER FOR THE FIRST    │
         │            BLOCK             │
         └─────────────────────────────┘
                        │
                        ▼
                   ╱─────────╲           ┌── 102
                 ╱  FIRST BLOCK ╲         YES
               ╱  CODED USING COLOR-╲───────────────────┐
                ╲ SPACE TRANSFORM? ╱                    │
                 ╲                ╱                      │
                   ╲────────────╱                       │
                        │                               │
                        NO                              │
                        │                               │
            ┌── 106     │                   ┌── 104     │
            ▼                                ▼
  ┌──────────────────────────┐   ┌──────────────────────────┐
  │  PERFORM A QUANTIZATION   │   │  PERFORM A QUANTIZATION   │
  │ PROCESS FOR THE FIRST     │   │  PROCESS FOR THE FIRST    │
  │ BLOCK BASED ON THE        │   │  BLOCK BASED ON A         │
  │ UNMODIFIED QUANTIZATION   │   │  MODIFIED QUANTIZATION    │
  │ PARAMETER FOR THE FIRST   │   │  PARAMETER FOR THE FIRST  │
  │ BLOCK                     │   │  BLOCK                    │
  └──────────────────────────┘   └──────────────────────────┘
                │                               │
                │               ┌── 108         │
                ▼                               │
  ┌────────────────────────────────┐           │
  │ SIGNAL, FOR A SECOND BLOCK OF   │           │
  │ VIDEO DATA, A DIFFERENCE        │           │
  │ VALUE INDICATING A DIFFERENCE   │◄──────────┘
  │ BETWEEN A QUANTIZATION          │
  │ PARAMETER FOR THE SECOND        │
  │ BLOCK AND THE UNMODIFIED        │
  │ QUANTIZATION PARAMETER FOR      │
  │ THE FIRST BLOCK                 │
  └────────────────────────────────┘
```

# FIG. 8

```
                                          ┌─ 120
┌──────────────────────────────┐
│   RECEIVE, FOR A FIRST BLOCK OF │
│   VIDEO DATA, INFORMATION TO    │
│   DETERMINE A QUANTIZATION      │
│   PARAMETER FOR THE FIRST       │
│   BLOCK                         │
└──────────────────────────────┘
```

FIRST BLOCK CODED USING COLOR-SPACE TRANSFORM? — 122

YES

NO

124 — DETERMINE A MODIFIED QUANTIZATION PARAMETER FOR THE FIRST BLOCK

128 — PERFORM A DEQUANTIZATION PROCESS FOR THE FIRST BLOCK BASED ON THE UNMODIFIED QUANTIZATION PARAMETER FOR THE FIRST BLOCK

126 — PERFORM A DEQUANTIZATION PROCESS FOR THE FIRST BLOCK BASED ON A MODIFIED QUANTIZATION PARAMETER FOR THE FIRST BLOCK

130 — RECEIVE, FOR A SECOND BLOCK OF VIDEO DATA, A DIFFERENCE VALUE INDICATING A DIFFERENCE BETWEEN A QUANTIZATION PARAMETER FOR THE SECOND BLOCK AND THE UNMODIFIED QUANTIZATION PARAMETER FOR THE FIRST BLOCK

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62015347
- US 62062797
- US 61810649
- US 61981645

### Non-patent literature cited in the description

- **ZHANG L et al.** AhG8: In-loop color-space transform. *17. JCT-VC MEETING; 27-3-2014 - 4-4-2014; VALENCIA; (JOINT COLLABORATIVE TEAM ON VIDEO CODING OF ISO/IEC JTC1/SC29/WG11 AND ITU-T SG.16),* 20 March 2014, HTTP://WFTP3.ITU.INT/AV-ARCH/JCTVC-SITE

- **DAVID FLYNN et al.** High Efficiency Video Coding (HEVC) Range Extensions text specification. *Draft 7, JCTVC-Q1005_v4, Joint Collaborative Team on Video Coding (JCT-VC) of ITU-T SG 16 WP 3 and ISO/IEC JTC 1/SC 29/WG 11, 17th Meeting: Valencia, ES,* 27 March 2014